# EUROPÄISCHE PATENTSCHRIFT

(11) **EP 1 901 093 B1**
(45) Veröffentlichungstag und Bekanntmachung des Hinweises auf die Patenterteilung: **14.11.2018**
(21) Anmeldenummer: 06019388.5
(22) Anmeldetag: 15.09.2006
(51) Int. Cl.: G01S 17/89, G01S 7/481, G01S 7/486

(54) **Aufnahme von Entfernungsbildern**
Capture of distance images
Réception d'images distantes

(43) Veröffentlichungstag der Anmeldung: 19.03.2008
(73) Patentinhaber: Triple-IN Holding AG, 6300 Zug (CH)
(72) Erfinder: Hipp, Johann, 22391 Hamburg (DE)
(74) Vertreter: Manitz Finsterwald Patentanwälte PartmbB

(56) Entgegenhaltungen:
- EP-A- 1 522 870
- DE-A1- 4 124 192
- MYLLYLA R ET AL: "Imaging distance measurements using TOF lidar" JOURNAL OF OPTICS IOP PUBLISHING UK, Bd. 29, Nr. 3, Juni 1998 (1998-06), Seiten 188-193, XP002428623 ISSN: 0150-536X

## Beschreibung

Die Erfindung betrifft ein Verfahren zur Aufnahme von eine große Anzahl von Entfernungsbildpunkten aufweisenden Entfernungsbildern gemäß dem unabhängigen Anspruch 1. Außerdem betrifft die Erfindung eine Zeitmesseinrichtung gemäß Anspruch 33 zur Durchführung des erfindungsgemäßen Verfahrens und eine Vorrichtung zur Aufnahme von eine große Anzahl von Entfernungsbildpunkten aufweisenden Entfernungsbildern mit einer solchen Zeitmesseinrichtung.

Unter "Entfernungsbildern" sind hier nicht nur zweidimensionale Anordnungen von Entfernungsbildpunkten, sondern auch eindimensionale Anordnungen, auch Profile genannt, zu verstehen, d.h. Entfernungsbilder, die jeweils eine einzige Reihe von nebeneinander liegenden Entfernungsbildpunkten umfassen.

In der Entfernungsmessung besteht die Aufgabe, die Zeit zwischen Aussenden von gepulster elektromagnetischer Strahlung, hier kurz mit "Signal" oder "Signalpulse" bezeichnet, und dem Eintreffen der von Zielen reflektierten Signalpulse als so genannte "Echopulse" zu messen. Diese Zeiten können wegen der Konstanz der Ausbreitungsgeschwindigkeit elektromagnetischer Strahlung in Entfernungen zum reflektierenden Ziel umgerechnet werden. Es bestehen viele Ausführungsformen von Geräten, die diese Aufgabe erfüllen, die hier mit dem Sammelbegriff "Puls TOF Sensoren" bezeichnet werden. TOF bedeutet "time of flight" und bezeichnet hier die Zeit, die ein Signalpuls zum Ziel und zurück benötigt.

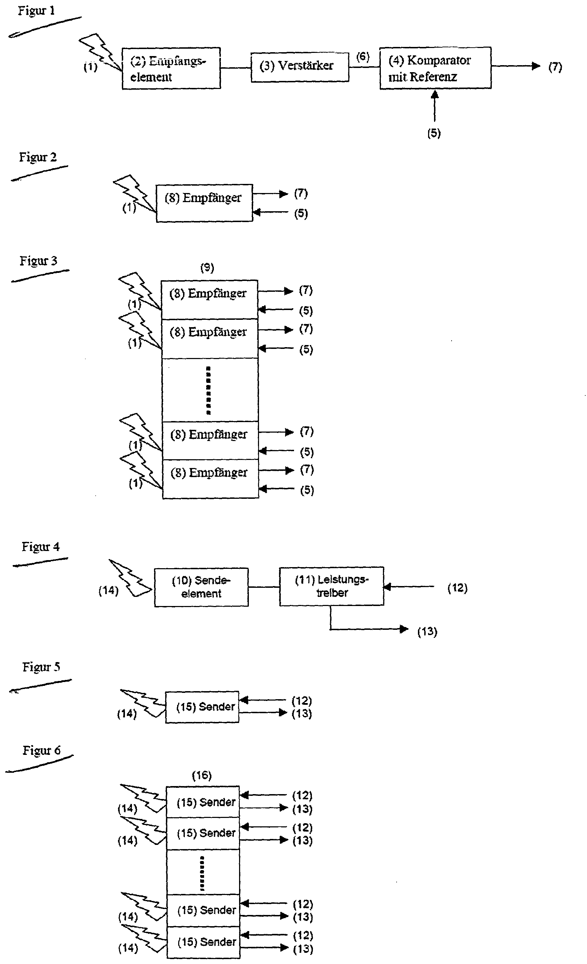

Vorhandene Sensoren haben grundsätzlich (vgl. auch Fig. 1 bis 6)
- Sender (15), mit dem der Puls der elektromagnetischen Strahlung (14) erzeugt wird, wie z.B. einen Pulslaser (15) bestehend aus einer Puls-Laserdiode (10) und einem Strompulser (11) zur Erzeugung eines optischen Pulses (14),
- Empfänger (8) zur Detektion der reflektierten Signalpulse, wie z. B. Empfänger für Lichtpulse bestehend aus einer Photodiode oder APD (Avalanche Photodiode) (2), einem Breitbandverstärker (3) und einem Komparator (4), dessen Referenz (5) größer 4,5 NEP des Rauschens des analogen Ausgangssignals liegt, um sicher die Detektion von Rauschpulse zu vermeiden (dabei bezeichnet "NEP" ("noise equivalent power") diejenige Leistung, die dem Effektivwert des Rauschens entspricht),
- eine Zeitmessschaltung, mit der die zusammen gehörenden digitisierten, d.h. mittels Komparator in ein digitales Signal gewandelten, Start- und Echopulse in logische Pulse oder Gatepulse umgesetzt werden, die entweder mit
   a. TACs (Time to Analog Convertern) direkt in Spannungssignale umgesetzt werden, wobei diese Spannung anschließend mit ADCs (Analog-Digital-Convertern) in einen digitalen Wert gewandelt wird, oder die
   b. zum Gaten eines genauen Mess-Clock Signals mit anschließendem Zählen der in den Gatepuls fallenden positiven Flanken des Mess-Clock Signals verwendet werden, wobei der Zählwert den digitalen Wert der TOF darstellt, oder
   c. die zum Gaten des Mess-Clock Signals mit anschließendem Zählen der in den Gatepuls fallenden positiven Flanken des Mess-Clock Signals und zusätzlich zum Ableiten von 2 TP Pulsen (TP = Teilperiode) verwendet werden, wobei die TP Pulsbreiten mit TACs und anschließender analog-digital Wandlung in einen digitalen Wert umgesetzt werden und die TOF aus den Teilwerten zusammengesetzt wird, oder
   d. die zum Gaten des Mess-Clock Signals mit anschließendem Zählen der in den Gatepuls fallenden positiven Flanken des Mess-Clock Signals und zusätzlich zum Ableiten von 2 TP Pulsen verwendet werden, wobei die TP Pulsbreiten mit TDCs in eine digitale Zahl gewandelt werden und die TOF aus den Teilwerten zusammengesetzt wird.

Die Zeitmessschaltungen oder Teile davon sind wegen der erforderlichen Schaltgeschwindigkeiten und Komplexität vielfach als ein integriertes "Zeitmess-IC" ausgeführt. Da ein Signalpuls mehrere hintereinander befindliche Ziele treffen kann, so dass mehrere Echopulse mit jeweils unterschiedlichen TOFs in die Zeitmessschaltung einlaufen, sind deren zugehörige Gatebreiten zu messen. Bei einigen Zeitmessschaltungen wird das Auftreten von Mehrfachechos dadurch berücksichtigt, dass mit zwei parallel geschalteten Zeitmessschaltungen wenigstens die zu zwei Echopulsen gehörenden TOFs gemessen werden (Doppelpulsauswertung).

Diese einfachen Sensoren sind mit Hilfe eines Spiegel-Scanners zu 2D-Sensoren oder mit Hilfe von zwei senkrecht zueinander angeordneten Spiegel-Scannern zu 3D-Sensoren erweitert worden, mit denen dann 2D- oder 3D-Entfernungsbilder aufgenommen werden können. Entfernungsbilder entstehen dadurch, dass jedem Bildpunkt (Raumwinkelsegment eines größeren Raumwinkels bestehend aus einem Array von Raumwinkelsegmenten) nicht eine Farbe und eine Helligkeit, wie z. B. bei mit CCD Kameras aufgenommenen Bildern, sondern eine Entfernung und ggf. eine Leistung zugeordnet ist.

Vorhandene Sensoren sind in ihrer Geschwindigkeit der Messwertaufnahme prinzipiell durch die maximale Pulswiederholrate der verwendeten Laser-Module limitiert. Bei Pulslasern mit Puls-Laserdioden, die eine für die Entfernungsmessung von einigen 100 m erforderliche Leistung von einigen 10 Watt aufweisen, ist die Pulswiederholrate bei etwa 20 bis 30 kHz begrenzt, so dass mit diesen Sensoren die Aufnahme von 2D- oder 3D-Entfernungsbildern nur sehr langsam (mit wenigen Hz) erfolgen kann. Das ist im Vergleich zu rein abbildenden Sensoren wie z.B. CCD Kameras, sehr langsam und für die Erfassung dynamischer Vorgänge innerhalb des aufgenommenen Raumwinkels nicht geeignet.

Die Empfindlichkeit vorhandener Puls-TOF-Sensoren ist wegen der erforderlichen Vermeidung von Rauschpulsen prinzipiell > 4,5 NEP des Rauschens.

Eine Erhöhung der Empfindlichkeit über 4,5 NEP hinaus könnte prinzipiell dadurch erreicht werden, dass das analoge Signal des Empfängers mittels ADC (Analog-Digital Converter) mit hoher Abtastrate digitalisiert würde. Wiederholt man die Messungen und mittelt die analog-digital gewandelten Signale der Messungen, so würde sich das Rauschen mit der Wurzel aus der Mittelungstiefe reduzieren, während die Signalpulse in gleicher Größe erhalten blieben. Dadurch verbessert sich das Signal-Rauschverhältnis proportional zur Wurzel aus der Mittelungstiefe, was prinzipiell einer Empfindlichkeitssteigerung entspräche, vorausgesetzt, eine dafür ausreichende Messzeit stünde zur Verfügung. Allerdings ist der technische Aufwand enorm, weil die Wandlungsrate bei einigen GHz liegen muss und der Rechenaufwand zur Mittelung zwangsweise proportional dazu ist. Deshalb haben derartige Sensoren auf dem Markt keine Bedeutung erlangt, so dass die Empfindlichkeitsgrenze heutiger Puls TOF Sensoren grundsätzlich bei größer/gleich 4,5 NEP liegt.

### Nachteile des Standes der Technik der heutigen Puls TOF Sensoren

Nachteil des Standes der Technik ist also, dass
- die Empfindlichkeit (minimales Signal-Rausch-Verhältnis) auf größer/gleich 4,5 NEP beschränkt ist, da keine Rauschpulse detektiert werden dürfen, denn diese wären mit Echopulsen verwechselbar und würden das Ergebnis verfälschen,
- nur ein, selten zwei Echopulse während der TOF verarbeitet werden können und damit Reflexionen von Regen, Schnee, Nebel oder vom verschmutzten Abschlussglas des Sensors oder mehren getroffenen Zielen nicht innerhalb einer TOF ausgewertet werden können oder gar die Messung unmöglich machen, womit Außenanwendungen für Puls TOF Sensoren nur sehr beschränkt realisierbar sind,
- keine parallele Verarbeitung von mehreren Signalpulsen oder Teilen eines Signalpulses möglich ist,
- keine größere Anzahl von Pulsen, wie z. B. Rauschpulse, die grundsätzlich bei niedriger Wahl der Komparatorschwelle während der TOF vermehrt auftreten, mit vorhandenen Zeitmessschaltungen gemessen werden können,
- keine 2D Entfernungsbildaufnahme (Profil) ohne einen Scanner mit beweglichen Spiegeln möglich ist,
- eine 3D Entfernungsbildaufnahme nur mit zwei Scannern mit beweglichen Spiegeln möglich ist,
- keine ausreichende Geschwindigkeit für eine 2D- oder 3D-Entfernungsbildaufnahme erreicht werden kann.

Bekannt und seit langem in Verwendung sind des Weiteren elektronische Kameras, vornehmlich Kameras mit CCD Chips als flächigem Sensorelement, zur digitalen Bildaufnahme. Diese Kameras sind in der Lage, sowohl statische Aufnahmen ("Bilder") als auch kontinuierliche Aufnahmen ("bewegte Bilder") in hoher Qualität, Auflösung und ausreichender Geschwindigkeit zu liefern und haben deshalb eine außerordentliche Produktvielfalt und -verbreitung erreicht.

So gibt es Entfernungskameras, bei denen ein modifizierter CCD Chip zur Entfernungsmessung für jeden Bildpunkt verwendet wird, indem ein starker Lichtpuls ausgesendet und das reflektierte Signal in den einzelnen Bildpunktsensoren integriert und die Integration zu einem geeigneten Zeitpunkt unterbrochen wird, so dass in jedem Bildpunktsensor eine entfernungsabhängige Ladungsmenge gespeichert wird. Mit diesen Sensoren können mit sehr großem Leistungs- und Mittelungsaufwand nur sehr kleine Reichweiten erzielt werden, so dass sie für alle Anforderungen, mit Ausnahme der lateralen Auflösung, einen schlechten Kompromiss darstellen.

In vielen Fällen ist es wünschenswert, neben der reinen Bildinformation, bestehend aus Farbe und Helligkeit pro Bildpunkt, die Information Entfernung und Signalleistung zu erhalten. Ein derartiges "Bild", das die Informationen Entfernung und Leistung pro Bildpunkt enthält, wird im Folgenden mit Entfernungsbild bezeichnet. Die Gattung von Sensoren, für die gemäß der Erfindung verbesserte Vorrichtungen angegeben werden sollen, umfasst insbesondere Vorrichtungen zur kontinuierlichen digitalen 2D- und 3D-Entfernungsbildaufnahme. Im Folgenden wird ein 2D-Entfernungsbild auch als "Entfernungsprofil" bezeichnet.

Die Information der Entfernungsbilder besteht naturgemäß aus Arrays von Zahlen. Die Position des Wertes im Array repräsentiert die Winkel des Entfernungsbildpunktes in einem polaren oder sphärischen Koordinatensystem, so dass die Winkel nicht gesondert angegeben werden müssen. Zusätzlich muss die Auflösung und die Art und Weise der Zusammensetzung des Entfernungsbildes bekannt sein. Nur durch Kunstgriffe wie Zuordnung von Entfernungen zu Farben kann man ein Entfernungsbild für den Menschen sichtbar machen kann. Es macht aber erheblich mehr Mühe, aus einem oder zwei stereoskopisch aufgenommenen Bildern die Entfernungsinformation als digitale Werte zu entnehmen, und die Genauigkeit verschlechtert sich mit zunehmender Entfernung der abgebildeten Objekte. Da jegliche Steuerungen, Automatisierungsvorrichtungen oder Vermessungssysteme, die geometrische Entfernungswerte verarbeiten, Entfernungen als digitale Werte benötigen, besteht ein Bedarf an Vorrichtungen zur Entfernungsbildaufnahme.

Bei der Entfernungsbildaufnahme erfolgt gemäß der Erfindung insbesondere eine Beschränkung auf die Entfernungsmessung mittels kurzer Pulse einer elektromagnetischen Strahlung, deren Laufzeit zu einem reflektierenden Objekt und zurück gemessen wird. Wie bereits erwähnt, wird diese Methode mit "Puls TOF Messung" bezeichnet. Diese Technik hat den Vorteil, dass mit ihr Entfernungen mit einem von der Entfernung unabhängigen und geringen Fehler, mit einer großen Arbeitsreichweite und schnell gemessen werden können.

Die heute vorhandenen einfachen Sensoren sind mit Hilfe eines Spiegel-Scanners zu 2D-Sensoren oder mit Hilfe von zwei senkrecht zueinander angeordneten Spiegel-Scannern zu 3D-Sensoren erweitert worden, mit denen dann prinzipiell 2D- oder 3D-Entfernungsbilder aufgenommen werden können. Bei vorhandenen Sensoren ist die Messgeschwindigkeit prinzipiell durch die maximale Pulswiederholrate der verwendeten Laser-Module limitiert. Ferner ist die mechanische Beanspruchung der Spiegel-Scanner sehr groß, weil die Gesamtzahl der Ablenkungen pro Sekunde gleich dem Produkt aus Spalten- und Zeilenzahl und Wiederholrate des Entfernungsbildes ist. Diese liegt im Allgemeinen deutlich über der mittleren Wiederholrate der verwendeten Sender, so dass vorhandene Sensoren schon aus den genannten Gründen zur Entfernungsbildaufnahme nicht geeignet sind.

Problematisch bei den heute bekannten Puls TOF Sensoren ist, dass in allen heute vorhandenen Sensoren oder Messsystemen einer oder mehrere der folgenden und der vorstehend bereits erwähnten Nachteile vorhanden ist, nämlich dass:
- keine ausreichende Geschwindigkeit für eine 2D- und 3D-Entfernungsbildaufnahme erreicht werden kann oder allenfalls nur bei sehr langsamem Betrieb erreichbar ist,
- die Spiegel-Scanner einer starken mechanischen Belastung ausgesetzt sind,
- die Tauglichkeit für Außenanwendungen sehr begrenzt ist.

Ferner gibt es zur Erzeugung von Entfernungsbildern
- stereoskopische Kamerasysteme, bei denen mit zwei Kameras, deren optische Achsen einen Basisabstand aufweisen, die Möglichkeit besteht, die Entfernungen in den Bildpunkten durch Korrelation zu bestimmen. Diese Systeme sind durch einen hohen Rechenaufwand und durch einen mit der Entfernung stark zunehmenden Fehler belastet, so dass sie nur in einem sehr eingeschränkten Anwendungsbereich als geeignet erscheinen,
- Triangulationssysteme, bei denen ein Laserstrich über ein Objekt gescannt und mittels einer CCD Kamera vermessen wird. Aus der Verschiebung der Linien kann das Entfernungsprofil errechnet werden. Diese Systeme weisen eine geringe Reichweite und einen mit der Entfernung zunehmenden Messfehler auf,
- Radar-Systeme, mit denen z. B. Flugzeuge im Raum zu Zwecken der Flugüberwachung oder Verfolgung oder Schiffe auf See zu Zwecken der Positionsverfolgung vermessen werden. Diese Systeme sind jedoch wegen der verwendeten niedrigen Strahlungsfrequenz, die eine geringe laterale Auflösung zur Folge hat, und der langen Laufzeit der Signale in ihrer Anwendung auch nur auf diese Fälle beschränkt, so dass sich praktisch keine weiteren Anwendungen ergeben haben.

Der heutige Stand der Technik der Entfernungsbilderzeugung kann also als nicht ausreichend eingestuft werden.

In diesem Zusammenhang wird zum Stand der Technik auf die europäische Patentanmeldung EP 1 522 870 (im Folgenden KEM) verwiesen, die ein Verfahren sowie eine Vorrichtung zur Entfernungsmessung betrifft. Von dem in KEM beschriebenen Prinzip macht die Erfindung zumindest teilweise Gebrauch. Zur Vermeidung von Wiederholungen wird hiermit bezüglich des KEM-Prinzips auf den Offenbarungsgehalt der genannten EP 1 522 870 Bezug genommen.

Es ist Aufgabe der Erfindung, eine Möglichkeit anzugeben, mit der die genannten Nachteile des Standes der Technik heutiger Puls TOF Sensoren zur Bildaufnahme überwunden werden können. Insbesondere soll die Senkung des Aufwandes an Material und Zeit zur deutlichen Empfindlichkeitserhöhung, die Erhöhung der Messgeschwindigkeit bei Aufnahme von 2D- und 3D-Entfernungsbildern, die Bereitstellung der Leistungsfähigkeit von Puls TOF Sensoren in jedem Entfernungsbildpunkt, die Erhöhung der Reichweite und die Vermeidung eines von der Entfernung unabhängigen Fehlers erreicht werden.

Die Lösung dieser Aufgabe erfolgt durch die Merkmale des unabhängigen Verfahrensanspruchs 1 sowie durch die Merkmale des unabhängigen Vorrichtungsanspruchs 33.

Bevorzugte Ausführungsformen der Erfindung sind in den abhängigen Ansprüchen angegeben, deren Inhalt hiermit durch Bezugnahme in die Beschreibung aufgenommen wird.

Die Erfindung im Allgemeinen und insbesondere in ihren bevorzugten Ausgestaltungen ermöglicht unter anderem die folgenden Funktionen:
- Mit einer geeigneten Zeitmessschaltung eine parallele Verarbeitung von Startpulsen mehrerer Laser und von Signal- und Rauschpulsen mehrerer Empfänger in mehren parallel angeordneten Zeitmesskanälen, um die Messrate deutlich zu erhöhen.
- Mit einer geeigneten Zeitmessschaltung und Sender- und Empfänger-Arrays eine 2D-Entfernungsbildaufnahme durch parallele und serielle Zeitmessung in parallelen Zeitmesskanälen ohne bewegliche Teile (Spiegel-Scanner).
- Mit einer geeigneten Zeitmessschaltung und Sender- und Empfänger-Arrays eine 3D-Entfernungsbildaufnahme mit nur einem Spiegel-Scanner durch parallele und serielle Zeitmessung in parallelen Zeitmesskanälen.
- Insgesamt die Erzielung einer ausreichenden Geschwindigkeit und Empfindlichkeit bei einer 2D- und 3D-Entfernungsbildaufnahme.
- Mit einer geeigneten Zeitmessschaltung Messungen einer großen Anzahl von Pulsen in jedem Zeitmesskanal, die während der TOF auftreten, wie z. B. Startpuls, Echo- und Rauschpulse. Die Rauschpulse treten bei niedriger Wahl der Komparatorschwelle (5) des dem Empfängerverstärker nachgeschalteten Komparators (4) unvermeidlich auf und müssen mit gemessen werden, um eine Empfindlichkeit wesentlich kleiner 4,5 NEP durch geeignete Mittelung von Messungen erreichen zu können.
- Verarbeitung vieler Echopulse während der TOF, um sowohl Reflexionen von z.B. Regen, Schnee, Nebel und verschmutzter Abschlussscheibe als auch von Mehrfachzielen in jedem Zeitmesskanal auswerten zu können, also Außenmessungen bei schlechten Witterungsbedingungen zu ermöglichen oder auch diese Störungen messtechnisch zu erfassen.
- Messung vieler Echopulse bei gleichzeitiger Empfindlichkeitssteigerung (bei Vorhandensein von Rauschpulsen), um die Reichweite zu erhöhen, d.h. viele Echopulse und viele Rauschpulse gleichzeitig in vielen Zeitmesskanälen zu messen.
- Reduktion der mechanischen Belastung von Spiegel-Scannern durch die parallele Verarbeitung vieler Signale in einem Zeitmesskanal-Array.
- In Kombination mit Ablenkeinheiten und mobilen Trägern: Aufnahme großvolumiger Entfernungsbilder der Umgebung.

Durch die Erfindung kann in jedem Entfernungsbildpunkt die Leistungsfähigkeit von Sensoren, die mit der Puls TOF Methode arbeiten, bereitgestellt werden. Die Vorteile der Puls-TOF-Methode sind bereits in vielen einfachen, nicht zur Aufnahme von Entfernungsbilder geeigneten Sensoren nachgewiesen.

Im Vergleich zur stereoskopischen Bildaufnahme mit z. B. zwei CCD Kameras, bei denen Licht pro Bildpunkt in Ladung umgesetzt wird, die Ladungen über einen Zeitraum integriert und danach seriell ausgelesen werden, also das verwendete Licht nicht zuvor erzeugt werden muss und nur ein Weg (Empfang) technisch bereit gestellt werden muss, besteht die wesentliche Herausforderung bei der Entfernungsbildaufnahme mittels der Puls-TOF-Methode darin, dass hier pro Entfernungsbildpunkt erst ein elektromagnetischer und gerichteter Strahl oder Teilstrahl erzeugt und dann dessen TOF pro Bildpunkt gemessen werden muss, dass also zwei Wege technisch bereit gestellt werden müssen. Der Aufwand pro Bildpunkt ist also wesentlich höher. Es gibt jedoch wesentliche Vorteile der Puls-TOF-Methode:
Die TOF der Pulse ist im Vergleich zur Integrationszeit bei CCD Kameras wesentlich kürzer, was einer wesentlich kürzeren Messzeit entspricht. Auch bei CCD Entfernungskameras, bei denen ein starker Lichtpuls ausgesendet wird und die Integrationszeit eines Einzelpulses im Bereich der TOF liegt, muss durch viele Wiederholungsmessungen die Integrationszeit verlängert werden. Durch geschickte Mehrfachnutzung eines Arrays von Entfemungsmesskanälen zur parallelen Aufnahme mehrerer Entfernungsbildpunkte kann diese kürzere Messzeit bei der Puls-TOF-Methode ausgenutzt werden, indem nicht für jeden Entfernungsbildpunkt ein Entfernungsmesskanal bereit gestellt wird, sondern dieses Array nacheinander für viele Entfernungsbildpunktgruppen mehrfach genutzt und das Entfernungsbild aus den Entfernungsbildpunktgruppen zusammengesetzt wird. Dieser Weg ist immer noch teurer als ein CCD-Chip, da immer noch das begrenzte Array und die Mittel zur Mehrfachnutzung bereit gestellt werden müssen, aber man erhält in jedem Entfernungsmesspunkt die Leistungsfähigkeit eines Entfernungsmesskanals mit der Puls TOF Methode mit seinen Vorteilen. Durch die Erfindung werden ein Entfemungsmesskanal-Array mit Leistungsmerkmalen der Puls-TOF-Sensoren und Mittel zur Mehrfachnutzung für eine Entfernungsbildaufnahme ermöglicht, wodurch neue Anwendungen, auf die nachstehend näher eingegangen wird, wirtschaftlich und technisch realisiert werden können.

Mit dem bekannten, oben bereits erwähnten KEM-Prinzip kann die Empfindlichkeit eines Puls TOF Messkanals unter Vermeidung des oben erwähnten Rechenaufwandes deutlich erhöht werden. Die Erfindung ermöglicht Vorrichtungen, in denen mittels hoch integrierter Zeitmess-ICs, die ein Zeitmesskanal-Array enthalten, die Messgeschwindigkeit durch massive parallele Verarbeitung bei Vorliegen vieler paralleler und serieller Signaleingänge prinzipiell deutlich erhöht werden kann. Es wird hier angegeben, wie viele Signale durch geeignete Sender- und Empfänger-Arrays und Kombination davon gestaltet werden müssen, wie die Sender- und Empfänger-Arrays mit einem Zeitmess-IC, der viele Zeitmesskanäle enthält, und mit Ablenkeinheiten und Trägern kombiniert werden können, um Vorrichtungen zu erhalten, mit denen eine Entfernungsbildaufnahme schnell, genau, mit hoher Reichweite, mit hoher Lateral- und Entfernungsauflösung und geeignet für Außenanwendungen vorgenommen werden kann.

Insbesondere wird durch die Erfindung eine Kombination
- geeigneter und effizienter Sender und Empfänger in Array-Anordnung, die eine große Anzahl von parallelen Signalen mit zugehörigen Startpulsen liefern,
   mit einer
- neuartigen Zeitmessschaltung, bestehend aus einem Array von Zeitmesskanälen, die in mehreren einstellbaren Mess-Modi die Messung auswerten,
bereitgestellt.

Die gesamte Zeitmessschaltung ist vorzugsweise als integriertes IC z. B. in CMOS hergestellt. 2D-Entfernungsbilder können damit ohne Spiegel-Scanner und 3D-Entfernungsbilder mit nur einem einzigen geeigneten Spiegel-Scanner aufgenommen werden. Die verwendete Zeitmessmethode kann auf dem genannten KEM-Prinzip basieren. Die Erfindung ermöglicht eine Realisierung dieser bekannten Zeitmessmethode durch neuartige Schaltungen, Module und Anordnungen von Komponenten und Modulen, die auch Gegenstand der vorliegenden Anmeldung sind.

Eine mögliche Ausgestaltung der Erfindung wird nachstehend beschrieben:
In dem erfindungsgemäßen Zeitmess-IC kann folgendes vorgesehen sein: In vielen Zeitmesskanälen wird unabhängig voneinander, mit gleichem Startpuls oder mit unterschiedlichen Startpulsen und den zugehörigen Signalen, die jeweilige TOF von sehr vielen Pulsen parallel gemessen. Die zu verarbeitenden Signale sind verrauschte analoge oder verrauschte digitale Signale, die dadurch entstehen, dass das analoge Signal (6) zuvor über einen Komparator (4) geführt oder mittels empfindliche Eingangsbuffer des Zeitmess-ICs in logische Signale umgesetzt (digitisiert) wird. Jeder Startpuls wird dabei mit den zugehörigen Signal-Pulsen auf einer Leitung zu einer Pulskette zusammengeführt, wobei das Rauschen um den Startpuls herum unterdrückt wird. Pro Zeitmesskanal ergibt sich eine zu verarbeitende Pulskette. Von allen Pulsen dieser Pulskette werden die up-Events (Pulsanfang) und dw-Events (Pulsende) von einem Zeitpunkt kurz vor dem ersten Startpuls (erster Puls) beginnend gemessen. Die zu verarbeitenden Pulse können sowohl der Startpuls als auch Echo- oder Rauschpulse sein. Die Information der Pulskette wird somit auf zwei Events (up- und dw-Event) jedes Pulses reduziert. Der zu verarbeitende Informationsumfang ist im Vergleich zum Informationsumfang in heute vorhandenen Puls TOF Sensoren proportional zur Anzahl der zu verarbeitenden Pulse gestiegen, jedoch wesentlich kleiner als bei Sensoren mit analog-digital-gewandelten Pulsketten mit einer Abtastrate im GHz-Bereich.

Die Zeitmessung erfolgt prinzipiell durch zwei Teilmessungen:
1. Zählen von positiven oder negativen Flanken eines von außen zugeführten, genauen Mess-Clock Signals als Zeitmaßstab, vom Messbeginn bis zu jedem Event,
2. Messung der Pulsbreite der dabei auftretenden Teilperioden (TP).

Mit der ersten Teilmessung sind die Anzahlen von positiven oder negativen Flanken der Mess-Clock vom kurz vor dem Startpuls gesetzten Startzeitpunkt bis zur kommenden ersten positiven Flanke der Mess-Clock nach allen Events aller Pulse der Pulskette zu zählen. Die Breite der Zähler für die Mess-Clock Flanken wird so gewählt, dass die TOF eindeutig gezählt werden kann. Ist die Breite der Zähler jedoch z.B. auf 8 Bit begrenzt, so dass nur bis 255 Flanken eindeutig gezählt werden kann, wird die Eindeutigkeit über größere Zeitbereiche durch Markieren der Überläufe der Zähler im entsprechenden Speicherbereich hergestellt. Damit können praktisch beliebig lange Messbereiche realisiert werden.

Mit der zweiten Teilmessung werden die zu Beginn jedes Pulses der Pulskette zuviel gezählte und die zum Ende zuviel gezählte Pulsbreite eines TP Pulses messtechnisch erfasst. Die Pulsbreite der Teilperiode des up-Events wie auch die Pulsbreite der Teilperiode des dw-Events ist deshalb immer zu subtrahieren. Weil die Pulse der Pulskette asynchron zum Mess-Clock- Signal sind, weisen die TP eine zufällige Pulsbreite auf, wobei die Periode der Mess-Clock die Obergrenze ist. Die TPs werden z.B. mittels TDCs in digitale Werte als Vielfache von Delay-Zeiten von Delay-Elementen des TDCs gewandelt. Dadurch wird die Auflösung der Zeitmessung der ersten Teilmessung durch Hinzufügen der zweiten Teilmessung auf die Delay-Zeit, z.B. 50 bis 100 ps, entsprechend einer fiktiven Mess-Clock von 10 bis 20 GHz, heraufgesetzt. Die Periode der Mess-Clock geteilt durch die Anzahl der Delay-Zeiten ergibt die Delay-Zeit, die vorzugsweise, wegen leichter Temperaturabhängigkeit, zwischen den Messungen kontinuierlich im Prozessorsystem nachkalibriert wird.

Zur Verarbeitung einer großen Anzahl von Pulsen (Start-, Echo- und Rauschpulse) im Fall einer niedrigen Wahl der Komparatorschwelle sind in jedem Zeitmesskanal für beide Teilmessungen re-triggerbare oder kontinuierlich messende Schaltungsteile vorgesehen. Alle Events liegen nach den zwei Teilmessungen jeweils als zwei Messwerte vor. Die TOFs aller Pulse, bezogen auf den ersten Startpuls, ergeben sich durch Subtraktion des Startpuls up-Events von jedem Event aller Pulse der Pulskette. Kommen keine Rauschpulse, sondern nur ein Echopuls vor (Sonderfall mit Referenz (5) > 4,5 NEP), so gleichen die Messergebnisse im Prinzip den Ergebnissen, die mit den oben erläuterten, heute vorhandenen Puls TOF Sensoren erzielt werden, wenn man die erfindungsgemäße Parallelität vieler Zeitmesskanäle und die Viel-Echo-Auswertung außer acht lässt.

Es können in Ausgestaltungen der Erfindung einige prinzipielle Vorkehrungen getroffen werden, die wegen der endlichen Verarbeitungsgeschwindigkeit in elektronischen Schaltungen und des endlichen Schaltungsumfangs, aber auch aus prinzipiellen Gründen in bestimmten Fällen beachtet werden müssen:
Wenn der zu messende Puls kürzer als eine Periode der Mess-Clock (zentraler Taktgeber) ist, können die TP Pulse der up- und dw-Events sich zeitlich überlappen. Um beide Pulse messen zu können, sind grundsätzlich zwei TDCs für die up- und dw-Events und zwei Zähler für die Zählung der Mess-Clock Flanken pro Zeitmesskanal vorhanden. Dadurch hat ein Zeitmesskanal prinzipiell eine Aufteilung in einen Zweig für die Verarbeitung des up-Events und einen Zweig für das dw-Event, wobei die beiden Zweige identisch aufgebaut sind.

Ferner sind die TDCs jeweils mindestens so lange gesperrt, bis das Ergebnis der Zeitmessung eines Events gesichert ist. Rauschpulse oder auch Echopulse können bei niedriger Lage der Komparator-Schwelle zeitlich dicht aufeinander folgen, was eine besondere Herausforderung für die Event-Messung darstellt. Da ein TP Puls sich mindestens für die Dauer einer Mess-Clock Periode (plus weiterer Gatter-Durchlaufzeiten) im TDC befindet, bevor er verarbeitet worden ist, und deshalb der Eingang für folgende Pulse gesperrt werden muss, ist es bei dichter Folge der Rausch- oder Echopulse erforderlich, die Pulse einer Pulskette mittels eines als "Pulsweiche" bezeichneten Schaltungsteils abwechselnd in mehrere Kanäle zu leiten, womit die mittlere verarbeitbare Folgefrequenz von Pulsen proportional zur Anzahl der Kanäle steigt. Vor diesem Hintergrund können unterschiedliche Mess-Modi eingeführt werden, weil nicht davon ausgegangen werden kann, dass in allen Anwendungen eine hohe Dichte von Pulsen in der Pulskette vorliegt.

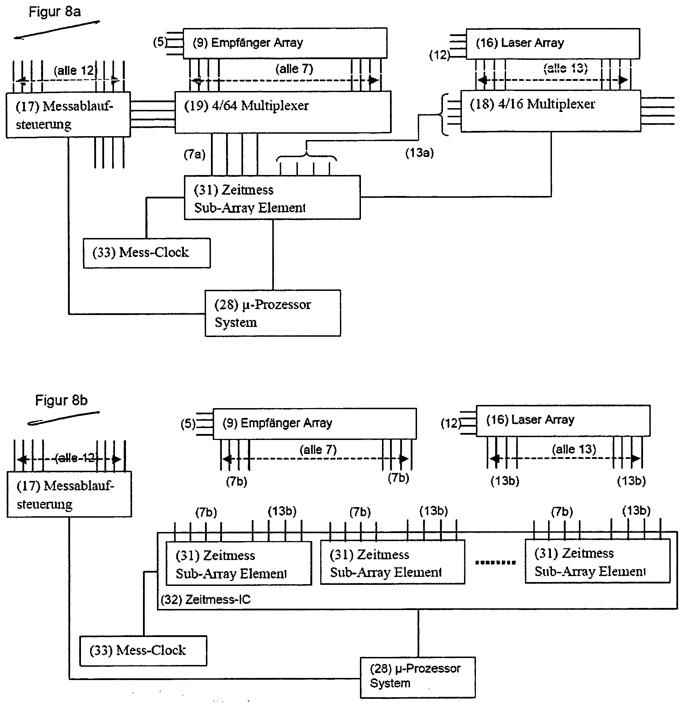

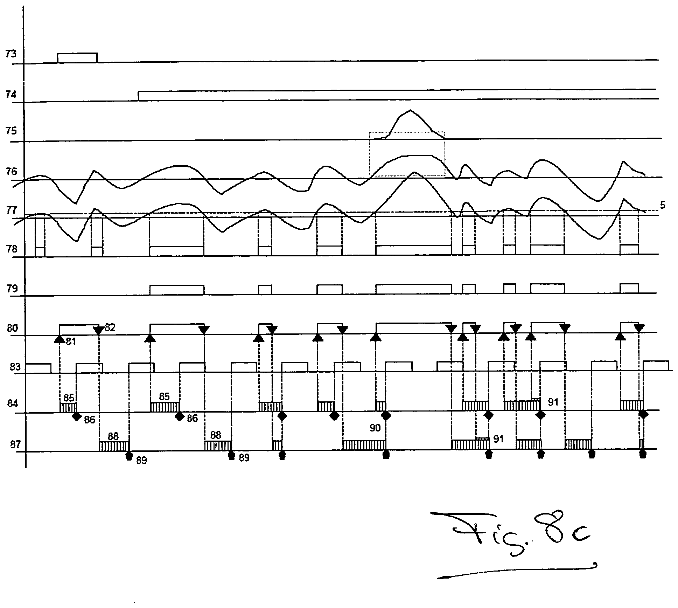

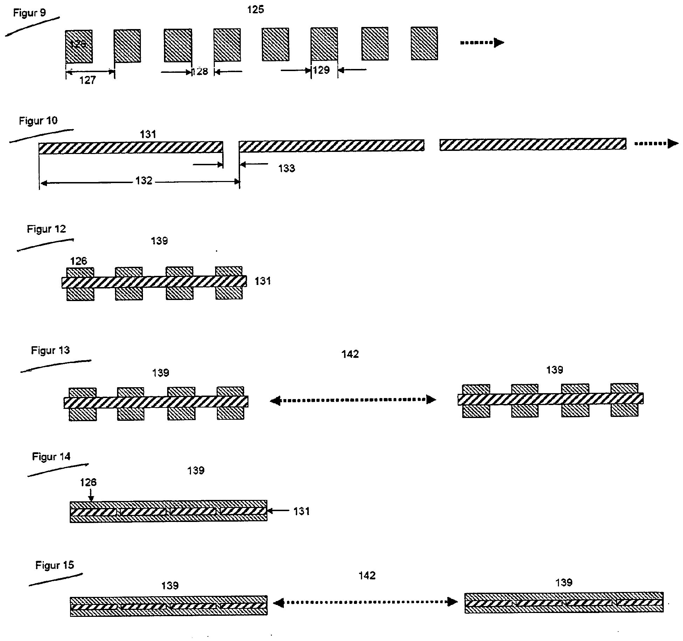

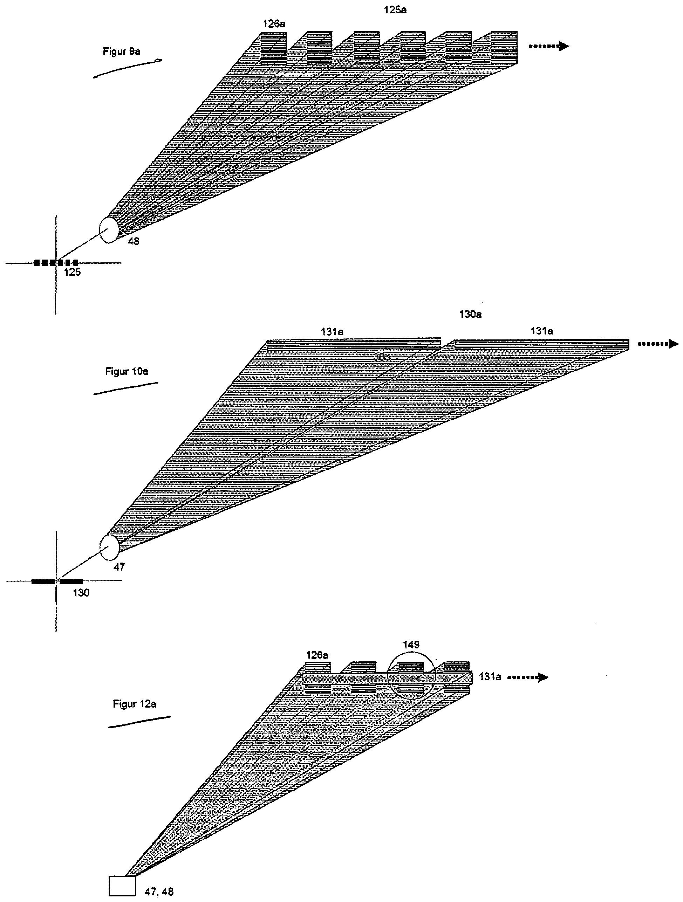

In einer möglichen Ausführungsform der Erfindung wird dementsprechend vorgesehen, dass mit einer Pulsweiche die Pulsketten mit entsprechenden Mess-Modi auf 1 oder 2 oder 4 parallel angeordnete Zeitmesskanäle gesteuert werden. Es werden dazu 4 Zeitmesskanäle mit den Bezeichnungen A, B, C und D vorgesehen, so dass diese 4 Zeitmesskanäle im Zeitmess-IC zu einer Gruppe zusammengefasst werden, die als ein "Sub-Array Element" (31) bezeichnet wird (vgl. auch Fig. 8 und 9). Mit dieser Maßnahme kann der Abstand der verarbeitbaren Pulse einer Pulskette auf die Hälfte bzw. ein Viertel (in einer speziellen Ausführungsform z.B. bis auf ca. 3 ns) reduziert werden. Bei 4 Zeitmesskanälen sind insgesamt 8 TDCs und 8 Zähler vorhanden.

Die Mess-Clock ist als ausreichend temperaturstabiles Bauelement ausgewählt, um im Sensor einen sicheren und genauen Maßstab zur Entfernungsmessung zu haben. Da die Delay-Zeit temperaturabhängig ist, kann die Periode der Mess-Clock in in den TDCs vorhandenen Delay-Zeiten von Delay-Elementen kalibriert werden. Die Periode der Mess-Clock geteilt durch die Anzahl der Delay-Zeiten ergibt dann die Delay-Zeit. Diese Kalibrierung kann vollständig in einem Teilprogramm des Auswerteprogramms eines Mikroprozessorsystems der Vorrichtung erfolgen, das auf die laufend erzeugten Teilmessungen zugreift und diese geeignet auswertet.

Ferner ist insbesondere für alle Zeitmesskanäle ein eigener Speicherbereich (26) vorgesehen (vgl. auch Fig. 8), in dem die Daten von einer oder mehreren Pulsketten gespeichert und von dem die Daten nach der Messung in das Mikroprozessorsystem übertragen werden. Dieser Speicherbereich ist vorzugsweise in Zeilen organisiert, wobei jedem Puls der Pulskette eine Zeile im Speicher zugeordnet wird. Der Informationsinhalt der Zeilen einer Messung wird mit Event-Liste bezeichnet. Die Anzahl der Zeilen richtet sich nach der Anzahl der Pulse in der Pulskette in der maximal erforderlichen TOF. Bei einer Komparatorreferenz von 0 V (Referenz gleich Mittelwert des Rauschens; dies entspricht der maximalen Empfindlichkeitserhöhung) kommen bei einer Bandbreite des Empfängers von 150 MHz im Mittel ca. 0,02 Pulse/ns vor, d.h. die mittlere Rate der Rauschpulse beträgt ca. 50 MHz. Eine dafür als ausreichend erscheinende Wahl ist 128 Zeilen pro Zeitmesskanal. In einem Mess-Modus, in dem die Pulse einer Pulskette seriell auf 4 Zeitmesskanäle verteilt werden, stehen dann insgesamt 512 Zeilen zur Verfügung. Bei der erwähnten mittleren Rauschpulsdichte von 50 MHz entsprächen 512 Zeilen einer TOF von ca. 10 Mikrosekunden, was einer Zielentfernung von 1,5 km entspricht. Diese Arbeitsreichweite würde sich bei Verwendung von nur einem einzigen Zeitmesskanals auf immerhin noch 375 m reduzieren.

In einer weiteren möglichen Ausführungsform der Erfindung können n mal 4 parallele Zeitmesskanäle als n Sub-Array Elemente (31) im Zeitmess-IC (32) integriert werden. Diese 4 Kanäle des Sub-Array Elementes können unabhängig voneinander im entsprechenden Mess-Modus auch 4 oder 2 oder 1 unabhängige Messungen verarbeiten, was durch wählbare Mess-Modi gesteuert werden kann. Die Mess-Modi werden durch externe Steuersignale aktiviert. Jeder Kanal besitzt unabhängige Signaleingänge, um auch unabhängige Messungen durchführen zu können. Die Mess-Modi werden mit 1-Kanal Modus, 2-Kanal Modus und 4-Kanal Modus bezeichnet, wobei der 2-Kanal und 4-Kanal Modus sowohl für serielle als auch für parallele Verarbeitung geeignet sind. Die serielle Verarbeitung wird bei großer zeitlicher Rauschpulsdichte oder einer langen Messzeit gewählt, während die parallele Verarbeitung bei einer geringen zeitlichen Rauschpulsdichte und kürzerer Messzeit gewählt wird. In einem weiteren Messmodus kann eine Auflösungserhöhung bei gleichem Eingangssignal in mehren Zeitmesskanälen dadurch erreicht werden, dass in den Zeitmesskanälen um 90° und/oder 180° phasenverschobene Mess-Clock Signale verwendet und die Ergebnisse der Kanäle anschließend gemittelt werden.

Durch diese Möglichkeiten wird bei Entfernungsbildern, deren Aufnahme zuvor durch die Verwendung von Sender- und Empfänger-Arrays stark beschleunigt wurde, (i) durch Wiederholungsmessungen oder Verwendung paralleler Zeitmesskanäle für einen unterscheidbaren Entfernungsbildpunkt die Genauigkeit der Entfernungsmessung oder die Empfindlichkeit erhöht, und/oder (ii) durch die Verwendung von parallelen Zeitmesskanälen, denen die Pulse einer Pulskette eines Bildpunktes seriell zugeführt (Verteilung) werden, die detektierbare Mehrfach-Echo-Pulsdichte bis auf einen minimalen Pulsabstand von ca. 50 cm bei fast beliebig vielen Echos in allen Bildpunkten erhöht. Beides macht einen Teil der Geschwindigkeitserhöhung wieder zunichte, liefert aber die erwähnten messtechnischen Verbesserungen.

Die beschriebenen möglichen Ausgestaltungen der erfindungsgemäßen Zeitmess-ICs mit den beschriebenen Eigenschaften ermöglichen es, dass mehrere Einzelmessung als eine einzige Messung verarbeitet werden (im Folgenden auch als "Burstmessung" bezeichnet), wodurch eine weitere Geschwindigkeitserhöhung erreicht wird. Dabei treten mehrere Startpulse auf, die jeweils durch Markierungen im Speicherbereich des Zeitmess-ICs markiert werden. Auf diese Weise wird mit Hilfe der Startpulsmarkierungen die Zuordnung der Informationen in den Speichern der Zeitmesskanäle zu den Einzelmessungen sicher gestellt, und die Einzelmessungen einer Burstmessung können z. B. zur Erhöhung der Empfindlichkeit einfach und schnell gemittelt werden. Da die Einzelmessungen innerhalb einer Burstmessung prinzipiell sehr schnell hintereinander durchgeführt werden, eignet sich die Burstmessung insbesondere für eine Empfindlichkeitserhöhung bei Zeitmess-ICs, bei denen mit Multiplexern viele Signalgruppen seriell auf das Zeitmess-IC geschaltet werden, oder für mit Ablenkeinheiten ausgerüstete Vorrichtungen, bei denen Sende- und Sehraumwinkel für die Entfernungsprofilaufnahme zwar kontinuierlich abgelenkt werden, aber wegen der kurzen Dauer einer Burstmessung trotzdem für die gemittelten Einzelmessungen als quasi ruhend angenommen werden können.

Die Event-Listen aller Zeitmesskanäle können über ein z.B. 32 Bit breites Parallel-Interface in den Messpausen zwischen den Einzel- oder Burst-Messungen vom Prozessorsystem ausgelesen werden. Das Ordnen der Event-Listen entsprechend den unterschiedlichen Mess-Modi und das Sortieren von Einzelmessungen innerhalb einer Burstmessungen erfolgen im nachgeschalteten Prozessorsystem (28).

Wie bereits erwähnt, ermöglicht die Erfindung bislang nicht realisierbare Anwendungen. Die Anwendungen für Vorrichtungen zur Entfernungsbildaufnahme sind außerordentlich vielfältig und weisen unterschiedlichste Anforderungen auf. Die Erfindung stellt ausreichend schnelle, genaue, empfindliche und robuste Vorrichtungen zur kontinuierlichen Entfernungsbildaufnahme zur Verfügung, wodurch Anwendungen in vielen Anwendungsgebieten mit erheblichen Märkten eröffnet werden. Einen Überblick liefert die folgende Liste potentieller Anwendungsbeispiele:
- statische Entfernungsbildaufnahme von fixen Punkten aus, z.B. zur Überwachung, Objektvermessung und zum Besetzt-Monitoring wie z.B. bei Parkplätzen, Flugfeldern, Lagerflächen in Containerterminals, Bahnsteigen, Versammlungsplätzen im Innen- und Außenbereich, Fahrstühlen, Gondeln und Vorräumen dazu, Türöffnungen automatischer Türen und Tore, Baustellen und Unfallstellen
- dynamische Entfernungsbildaufnahme von Personenfahrzeugen, Lastfahrzeugen, Kranen, Bahnen, Helikoptern und Flugzeugen aus, z.B. zur Objekt-Detektion und -vermessung und 3D-Oberflächenvermessung wie z. B. bei Hinderniswarnung im kommenden und unmittelbaren Bewegungsbereich und bei autonomer Fahrzeugführung, bei welcher der Sehsinn des Menschen ersetzt oder ergänzt werden soll, bei Lastaufnahme und Lastabsetzung z. B. bei Kranen, bei schneller Vermessung von Landmarken für Navigationssysteme, bei Straßenoberflächenvermessungen und bei Vermessungen der Gelände- und Städtemorphologie von Flugzeugen und Fahrzeugen aus, bei Arbeitsmaschinen, bei denen der Arbeitsbereich zur Auswertung als dynamisches Entfernungsbild aufgenommen wird,
- Bewegungs-Monitoring mittels dynamischer Entfernungsbildaufnahme auf dem Flugfeld, im Containerterminal, beim Docking von Schiffen und Flugzeugen, auf dem Sportfeld, in Sicherheitsbereichen, sicherheitsempfindlichen Bereichen wie Schleusen, Kreuzungsbereichen, Bahnübergängen und Rolltreppen,
- Objektzählung mittels dynamischer Entfernungsbildaufnahme wie bei Verkehrsüberwachung, Fahrzeugen sowie bei Menschen und Tieren,
- Überwachung des Freiprofils mittels dynamischer Entfernungsbildaufnahme in Tunneln, Bergwerken und Stollen von Minen,
- geodätische Vermessung, bei der mittels statischer und dynamischer Entfernungsbildaufnahme die Morphologie von offenem Gelände, Städten und Straßen etc. erfasst wird.

In diesen Anwendungen kann mit den erfindungsgemäß realisierbaren Entfernungsbildern ein Nutzen erzeugt werden, der gegenwärtig nicht erzielt werden kann. Die obige beispielhafte Aufstellung zeigt, dass wesentliche Anwendungen sich im Außenbereich befinden und daher dynamische Entfernungsprofile oder Entfernungsbilder erfordern. Deshalb sollten die zur Entfernungsbildaufnahme vorgesehenen Sensoren umweltfest sein, verlässliche Messwerte unter widrigen Witterungs- und Verschmutzungsbedingungen liefern und ausreichende dynamische Eigenschaften aufweisen. Genau dies lässt sich erfindungsgemäß realisieren.

Die Erfindung wird im Folgenden beispielhaft unter Bezugnahme auf die Zeichnung beschrieben. Es zeigen:
- Fig. (1) bis (26): Darstellungen zur Erläuterung von Ausführungsformen einschließlich Anwendungen einer erfindungsgemäßen Vorrichtung sowie eines erfindungsgemäßen Verfahrens zur Zeitmessung bzw. Entfernungsbildaufnahme mit Puls TOF Messung, wobei als gepulste elektromagnetische Strahlung kurze Laserpulse verwendet werden,

In den folgenden Figuren (1) bis (6) wird eine Ausführungsform der Sender- und Empfänger-Arrays für die Vorrichtung zur Entfernungsbildaufnahme mit Puls TOF Messung dargestellt. Als gepulste elektromagnetische Strahlung werden dabei kurze Laserpulse verwendet, wobei Sendeelemente (10), z. B. Halbleiter-Laserdioden, und Empfangselemente (2), z. B. APDs (Avalanche-Photodioden), vorgesehen sind. Es ist dies die Ausführungsform mit der möglicherweise größten praktischen Verbreitung, so dass diese, grundsätzlich lediglich beispielhaft zu verstehende konkrete Ausgestaltung der Erfindung zur weiteren Erläuterung von weiteren Ausführungsformen der Erfindung verwendet wird.

Figur 1 zeigt den prinzipiellen Aufbau eines Empfängers bestehend aus einer APD (2), mit der die von einem Ziel reflektierten und über ein Empfangsobjektiv als Strahlungssammelsystem (48) (vgl. Fig. 12a, 21-23) empfangenen optische Pulse (1) in elektrische Signale umgesetzt werden, gefolgt von einem Breitbandverstärker (3) und einem Komparator (4) mit der einstellbaren Referenz (5) und dem digitisierten Ausgangssignal (7).

In Figur 2 sind die Elemente des Empfängers zu einem Empfänger Modul (8) zusammengesetzt. Das Modul (8) hat das digitisierte Ausgangssignal (7) und die Referenz (5).

In Figur 3 sind die Empfänger-Module (8) aus Figur (2) zu einem Empfänger-Array (9) zusammengesetzt und liefern die Eingangssignale (7) für die Zeitmesskanäle. Wenn nur ein Laserstrahl (14) von einem Laser (10) vorhanden ist, werden vom Empfänger-Array (9) reflektierte Teilstrahlen eines optischen Pulses (1) detektiert. Wenn mehrere Laser (10) ein Array von Laserstrahlen aussenden, dann detektieren Teilarrays des Empfänger-Arrays (9) jeweils den Strahl eines Lasers. Alle Array-Elemente des Empfänger-Arrays (9) haben einen Referenzeingang für jeden der Komparatoren (4).

Figur 4 zeigt den prinzipiellen Aufbau eines Puls-Lasers mit der Laserdiode (10), mit welcher der optische Laserpuls (14) erzeugt wird. Zum Betrieb der Diode (10) ist ein Strompulser (11) vorhanden, mit dem ein Strompuls zur Erzeugung des optischen Pulses in der Laserdiode hergestellt wird. Der Strompuls wird mit einem Signal (12) getriggert und zusätzlich, z.B. kontaktlos mittels einer kleinen Spule als Sensor, in einen Startpuls (13) umgesetzt.

In Figur 5 sind die Elemente des Lasers zu einem Laser-Modul (15) zusammengesetzt und mit dem Triggersignal (12) und dem Startsignal (13) dargestellt.

In Figur 6 sind die Laser-Module (15) aus Figur (5) zu einem Laser-Array (16a) zusammengesetzt und liefern alle optischen Laserpulse (14) als Senderaumwinkel-Array, in dem reflektierte Laserpulse im Sehraumwinkel des Empfänger-Arrays (9) detektiert werden können. Alle Laser sind einzeln über die Leitungen (12) triggerbar, wobei pro Laser ein Startpuls (13) geliefert wird.

Mit einer Anordnung aus dem Empfänger-Array (9) und einem Laser-Array (16) und zugehörigen, hier nicht dargestellten optischen Systemen können die Startpulse und Signale und daraus die vom Zeitmess-IC zu verarbeitenden Pulsketten generiert werden, um eine erfindungsgemäße Vorrichtung zur Zeitmessung für schnelle Entfernungsbildaufnahme mit Puls TOF Messung darzustellen.

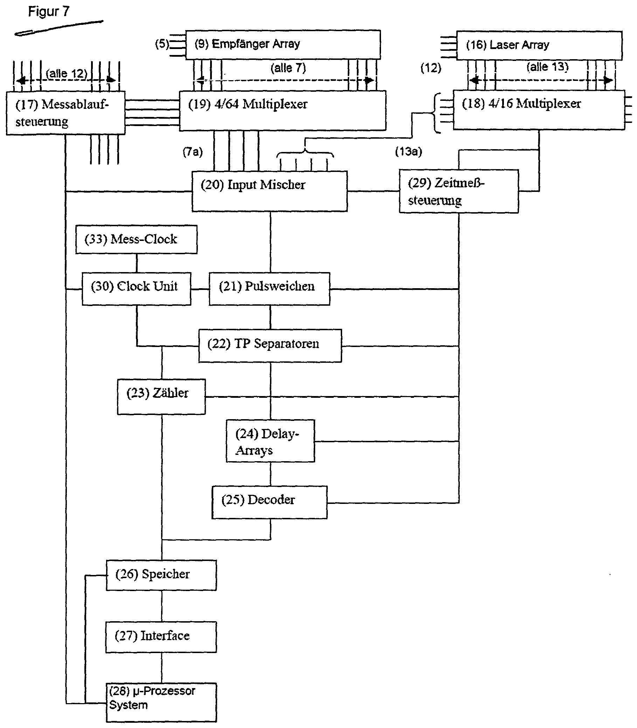

Dabei können in unterschiedlichen Ausführungsformen sowohl parallel zu verarbeitende Startpulse (13) mit zugehörigen Signalpulsen (7), wenn ein Laserstrahl von einer Gruppe von Empfängern des Empfänger Arrays (9) detektiert wird, die dann alle in parallel vorhandenen Zeitmesskanälen verarbeitet werden, als auch seriell zu verarbeitende Startpulse mit zugehörigen Signalpulsen auftreten, wenn die Laserstrahlen (1) nacheinander von parallel angeordneten Gruppen von Empfängern (8) des Empfänger-Arrays (9) detektiert werden, die dann entweder mittels Multiplexer (18, 19) (vgl. Fig. 7 und 8) dem gleichen Satz von Zeitmesskanälen zugeführt werden, oder - wenn ausreichend Zeitmesskanäle vorhanden sind - alle parallel verarbeitet werden können. Eine vorteilhafte Anzahl von Empfängern in einer Gruppe ist genau gleich der Anzahl der Messkanäle in einem Sub-Array.

Die prinzipiell vorgesehenen Schaltungsteile, die ein Sub-Array-Element dieses Zeitmess-ICs mindestens umfasst, sind in der Figur (7) angegebenen. In der folgenden Liste sind die prinzipiellen Aufgaben der Schaltungsteile angegeben:
(20) Input Mischer
   Aufgabe des Input Mischers ist
   - Die Steuerung und Führung der Eingangssignale (Startpuls und Signal) in die Zeitmessschaltung, die als integriertes Zeitmess-IC ausgeführt sein kann,
   - Addieren von Startpuls und zugehörigem Signal zu einer Pulskette,
   - Freistellung des Startpulses von Echo- und Rauschpulsen in einstellbaren Zeiten beginnend vom Messanfang bis nach Startpulsende zur Nahbereichsunterdrückung von Signalen und Rauschen,
   - Sperren der Eingänge nach der gewünschten TOF
(21) Pulsweiche
   Aufgabe der Pulsweiche ist es,
   - die Pulse der Pulsketten parallel oder seriell in einen oder mehrere Zeitmesskanäle zu verteilen,
   - Mess-Clock Signale gleicher oder unterschiedlicher Phase in mehrere Zeitmesskanäle zu verteilen
(30) Clock Unit (zentraler Taktgeber)
   Aufgabe der Clock Unit ist die
   - Aufbereitung des Mess-Clock Signals aus einer externen Präzisionsclock für die Zeitmesskanäle,
   - Erzeugung von Mess-Clock Signalen mit unterschiedlichen Phasen auf alle Zeitmesskanäle
   - Reduzierung des Leistungsverbrauchs durch Steuerungseingänge in nicht verwendeten Zeitmesskanälen oder in Pausenzeiten,
(22) TP Separatoren
   Es ist Aufgabe der TP Separatoren, die TP Pulse in allen Zeitmesskanälen zu erzeugen (TP = Teilperiode).
(24) Delay-Arrays
   Es ist Aufgabe der Delay-Arrays, die zwei unterschiedlichen TP Pulse jedes Pulses der Pulskette jedes Zeitmesskanals in Delay-Zeiten zu messen.
(25) Decoder
   Aufgabe der Decoder ist die Umsetzung der zwei Ausgangsinformationen der Delay-Arrays in binärkodierte Information. Diese Information wird pro Zeitmesskanal in Latch-Arrays bereitgestellt, denen die Information "Startpuls" hinzugefügt wird.
(23) Zähler
   Es ist Aufgabe der Zähler, alle Events mit der Auflösung der Periode der Mess-Clock zu messen und die Überläufe in Latch-Arrays zwischen zu speichern. Pro Kanal sind zwei Zähler vorhanden.
(17) Messablaufsteuerung
   Es ist Aufgabe der Messablaufsteuerung, den Rahmen der Messung zu steuern. Dazu gehören
   1. Steuerung der Einzelmessung
   2. Steuerung der Burst-Messung
   3. Triggerung der Laser-Module
   4. Verarbeitung von Scanner-Winkelsignalen (wenn vorhanden)
   5. Steuerung der Multiplexer (wenn vorhanden) für die Empfänger-Signale und Startpulse
   6. Power-Save-Steuerung,
      und zwar unter Verwendung von externen statischen Steuersignalen, nämlich:
      1. Steuersignalen zur Auswahl von Mess-Modi
      2. Steuerung der Nahbereichsausblendung
      3. Messung-Ende-Steuerung (Begrenzung auf die gewünschte TOF)
(29) Zeitmesssteuerung
   Es ist Aufgabe der Zeitmesssteuerung, in den Zeitmesskanälen die Zeitmessung entsprechend den statisch angelegten Steuerungssignalen infolge gewählter Mess-Modi und den dynamisch sich ändernden Reset-Signalen zu steuern. Folgende Prozesse werden von der Zeitmesssteuerung gesteuert:
   4. TP Puls Erzeugung
   5. TP Pulsbreiten Digitalisierung und Bereitstellung zur Speicherung
   6. Zählwerterzeugung und Bereitstellung zur Speicherung
   7. Speicherung der binär gewandelten TP und Zählwerte als Teilmesswerte
   8. Bildung von Zeilen im Speicher pro Puls der Pulskette (mit "Event-Liste" bezeichnet) aus den Teilmesswerten in Abhängigkeit vom Mess-Modus
   9. Startpulsmarkierung
   10. Überlaufmarkierung
   11. Steuerung der Speicherung
(26) Speicher
   Im Speicher werden alle Teilergebnisse aller Events einschließlich Überläufe und Startpulsmarkierungen gespeichert.
(27) Interface
   Es ist Aufgabe des Interface, die durch das Prozessorsystem angesteuerte Information im Speicher nach außen zu übertragen.

Das prinzipielle Blockdiagram in Figur 7 zeigt ein mögliches Zeitmess-IC eines erfindungsgemäßen Sub-Array-Elements mit vier Zeitmesskanälen (jede andere Zahl von Zeitmesskanälen wäre ebenso möglich), wie durch die Signale (7) und (13) angezeigt, dessen Aufgaben oben erwähnt sind.

Im Folgenden werden die Funktionen der Schaltungsanteile der Zeitmesseinrichtung beschrieben.

Die Eingangssignale sind alle Startpulse (13) und alle digitisierten Signale (7). Die Auswahl der Gruppen-Empfänger und zugehörigen Startpulse erfolgt durch die Steuerleitungen der Messablaufsteuerung (17), die auf die Multiplexer (18) und (19) wirken. Getriggert werden die Laser seriell durch alle Triggerleitungen (12). Der Multiplexer (18) leitet die durchgeschalteten Startpulse (13) und der Multiplexer (19) leitet die zugehörigen durchgeschalteten Signale (7) dem Input-Mischer (20) zu. Die Signale (7) werden bis zu einem zeitlich kurz nach dem Startpuls liegenden Zeitpunkt unterdrückt, und in diese Lücke wird der Startpuls zeitlich richtig addiert, wodurch die bereits erwähnte Pulskette aus Startpuls und Echo- und Rauschpulsen entsteht. Dadurch ist sichergestellt, dass der Startpuls nicht durch Rauschpulse deformiert wird, was das Zeitmessergebnis künstlich verschlechtern würde. Das Signal zur Nahbereichsunterdrückung wird von der Messablaufsteuerung (17) geliefert.

Die Ausgangssignale der Input-Mischer (20) werden den Pulsweichen (21) zugeführt, in denen die zu messenden durchgeschalteten Pulsketten nach Durchlaufen der Input-Mischer (20) auf einen, auf zwei oder auf vier Zeitmesskanäle parallel oder seriell verteilt werden.

Die Ausgangssignale der Pulsweichen (21) werden den TP-Separatoren (22) zugeführt, in denen für alle Zweige der Zeitmessschaltungen Teilperioden als Pulse abgeleitet werden. Die TP-Pulse werden mit der positiven und der negativen Flanke der Pulse bis zur jeweils folgenden positiven Flanke des verwendeten Mess-Clock-Signals gebildet. Es sind also für jeden Zeitmesskanal zwei TP-Separatoren vorhanden. Dabei werden diejenigen Pulse verwendet, die bereits die Pulsweiche (21) durchlaufen haben.

Unter anderem auf die Teilperioden TP wird nachstehend in Verbindung mit Fig. 9 noch einmal näher eingegangen.

Die TP-Pulse der TP-Separatoren (22) werden den Delay-Arrays (24) zugeführt und dort als Vielfache einer Delay-Zeit eines Delay-Elementes gemessen. Es gibt für jeden Zeitmesskanal zwei Delay-Arrays, und zwar ein Delay-Array für die positive und ein Delay-Array für die negative Pulsflanke. Vor Einlaufen in die Delay-Arrays (24) werden die TP-Pulse schaltungstechnisch etwas verbreitert (Offset), damit auch sehr kurze TP-Pulse mit einem von Null verschiedenen Wert gemessen werden können.

Die TP-Pulse werden durch Delay-Elemente der Delay-Arrays verzögert, mit sich selbst verglichen, und die Information, ob sich der verzögerte Puls noch mit dem Ausgangspuls überlappt, wird in einem Latch gesichert. Die Sicherung der Information erfolgt in einem Latch-Array mit z. B. 80 Elementen. Entsprechend den zwei TP-Pulsen gibt es zwei Delay-Arrays pro Kanal. Dadurch wird die Auflösung der Zeitmessung auf die Delay-Zeit erhöht. Der Messwert wird in den 80 Leitungen mit einem vom Ruhezustand unterschiedlichen logischen Wert dargestellt. Die maximale Delay-Zahl entspricht der in Delay-Zeiten umgesetzten Periode der Mess-Clock plus Offset.

Im Decoder (25) wird die Breite der TP-Pulse in Delay-Zeiten in eine binäre Zahl umgesetzt und pro Kanal in Latch-Arrays bereitgestellt. Ferner wird die Information, dass es sich um einen Startpuls handelt, ebenfalls in einem Latch gesichert.

In der Clock-Unit (30) werden vier Mess-Clock-Signale mit den 4 Phasenwinkeln 0°, 90°, 180° und 270° erzeugt.

Im Zähler (23) werden alle Events mit der Auflösung der Periode der Mess-Clock gemessen, indem der Zählerstand bei der den Pulsflanken folgenden positiven Flanke der Mess-Clock ausgelesen und ebenfalls Überläufe der Zähler festgestellt werden. Pro Zeitmesskanal sind zwei Zähler vorhanden.

Die Teilergebnisse für jedes Event bestehend aus Zählerzahl einerseits und Binärwert für TP-Pulsbreite andererseits sowie die gegebenenfalls vorhandene Überlaufmarkierung und die Startpulsmarkierung werden im Speicher (26) für jeden Zeitmesskanal zeilenweise gespeichert. Dabei wird durch die Zeitmesssteuerung (29) sichergestellt, dass die Teilergebnisse generiert, zeitrichtig in Latches zum Speichern bereit gestellt, im Speicher gespeichert und danach die messenden Funktionsblöcke für die nächste Messung frei geschaltet werden.

Nach Abschluss der Messung wird der Speicherinhalt über das von einem Mikroprozessorsystem (28) gesteuerte Interface (27) ausgelesen und mit der Auswerte-Software zu Entfernungen verarbeitet.

Zur Integration in einem Zeitmess-IC eignen sich bevorzugt die Schaltungsteile Input-Mischer (20), Pulsweichen (21), TP-Separatoren (22), Delay-Arrays (24), Decoder (25), Zähler (23), Interface (27) und Zeitmesssteuerung (29). Weniger gut geeignet bzw. ungeeignet zur Integration in einem Zeitmess-IC sind die Laser- und Empfänger-Arrays (9, 16), die Mess-Clock (33) und die Messablaufsteuerung (17) mit den Multiplexern (18, 19), weil diese Funktionsblöcke adaptionsbezogenen Änderungen unterliegen oder technisch uneinheitlich sind.

Figur 8a zeigt ein Beispiel einer Ausgestaltung entsprechend Figur (7), wobei in dieser Ausgestaltung die Zeitmessschaltung als Sub-Array-Element (31) mit vier Zeitmesskanälen als integriertes Zeitmess-IC ausgeführt ist. Mit der Messablaufsteuerung werden die Laser-Module des Laser-Arrays (16) über alle Triggerleitungen (12) seriell angesteuert. Vor jedem Trigger des folgenden Laser-Moduls muss die gewünschte maximale TOF abgewartet werden. Die Anzahl der Ausgänge der Empfänger (7) sind als Vielfache von vier gewählt, so dass mit dem Multiplexer (19) dessen Ausgänge (7a) nacheinander auf das Zeitmess-IC (32) geschaltet werden. Jeder Laserstrahl wird von vier Empfängern (8) des Empfänger-Arrays (9) detektiert. Mit dem Multiplexer (18) werden die zugehörigen Startpulse synchron zu den geschalteten Empfänger- bzw. Multiplexerausgängen (7a) als Startpulse (13) auf das Sub-Array (31) geschaltet.

Figur 8b zeigt ein Beispiel einer Ausgestaltung, in der die Zeitmessschaltung als Array von Sub-Array Elementen (31) mit jeweils vier Zeitmesskanälen entsprechend Figur (8) in Form eines integrierten Zeitmess-ICs (32) ausgeführt ist. In dieser Ausführung ist die Messgeschwindigkeit optimiert, weil alle Laser-Module (10) des Laser-Arrays (16) parallel getriggert werden können und für alle Empfänger-Module (8) des Empfänger-Arrays (9) jeweils ein Messkanal vorhanden ist.

Mit den Ausgestaltungen der Vorrichtung gemäß Figur (8a) und Figur (8b) können 2D-Entfernungsbilder (Profile) ohne Spiegel-Scanner aufgenommen werden. Mittels eines einzigen Spiegel-Scanners kann die Konfiguration zu einer Vorrichtung zur 3D-Bildaufnahme erweitert werden.

Figur 8c dient unter anderem zur Erläuterung der Grundlagen des erwähnten KEM-Prinzips sowie der erwähnten Teilperioden (TP).

Zu den zu verarbeitenden Signalen gehören der Startpuls (73) und das analoge Echosignal (75), das zusammen mit dem Rauschen des Empfängers (76) das analoge Empfängersignal (77), entsprechend (6) (vgl. Fig. 1), bildet. Das analoge Empfängersignal (77) wird mittels eines Komparators (4), der die Referenz (5) aufweist, zu digitalen Empfängerpulsen gewandelt und mit dem Signal (74) maskiert, um im Nahbereich um den Startpuls herum analoge Signale zu unterdrücken, wodurch sich das resultierende Signal (79) ergibt, oder um den Messbereich in einen entfernten Bereich zu schieben. Der Startpuls (73) und das resultierende Signal (79) werden zu einer Pulskette (80) zeitrichtig zusammengefasst. Die positiven Flanken (81) des resultierenden Signals (79) bzw. der Pulskette (80) sind die zu messenden up-Events und die negativen Flanken (82) sind die zu messenden dw-Events (dw = down). Zur Messung wird das Mess-Clock Signal (83) verwendet.

Die zu den up-Events (81) gehörigen Zählzahlen sind die vergangenen Anzahlen der Perioden der Mess-Clock und durch Rauten (86) dargestellt. Die Teilperioden der up-Events (up-TP) sind die vertikal schraffierten Pulse (85). Die Zeitpunkte der up-Events werden also durch die Zählzahlen (86) abzüglich der jeweils zugehörigen Teilperiode (85) gebildet. Die zu den dw-Events (82) gehörigen Zählzahlen sind die vergangenen Anzahlen der Perioden der Mess-Clock und durch kurze Pfeile (89) dargestellt. Die Teilperioden der dw-Events (82) (dw-TP) sind die vertikal schraffierten Pulse (88). Die Zeitpunkte der dw-Events (82) werden also durch die Zählzahlen (89) abzüglich der jeweils zugehörigen Teilperiode (88) gebildet. Die Zeitpunkte der up-Events (81) der Pulskette (80) werden also durch die Messwerte (85) und (86) dargestellt und die Zeitpunkte der dw-Events (82) durch die Messwerte (88) und (89).

Die TPs werden mittels TDCs digitalisiert und als Vielfache der Delay-Zeit ausgedrückt. Die Zählzahlen werden mit der Anzahl der in einer Periode der Mess-Clock enthaltenen Delay-Zeiten multipliziert. Damit liegen alle Werte als Vielfache der Delay-Zeit vor und Zählzahlen und TP-Breiten können zu einer Zahl zusammengefasst werden. Der höchste mögliche Wert ist die maximale TOF als Vielfache der Delay-Zeit. Beträgt beispielsweise die Delay-Zeit 100 ps und die maximale TOF 1000 ns, so beträgt der maximal vorkommende Wert eines Events 10.000. Jedem der Werte von 1 bis 10.000 wird eine Speicherzelle im Zeitrasterspeicher zugeordnet. Der Aufbau des Zeitrasterspeichers ist jedoch nur erforderlich, wenn die Referenz (5) kleiner als 4,5 NEP des Rauschens (76) ist. Würde die Periode der Mess-Clock selbst als Delay-Zeit verwendet, so ergibt sich der Grob-Zeitrasterspeicher. Bei einer Periode von 5 ns hat der Grob-Zeitrasterspeicher nur 200 Speicherzellen. Entsprechend der Anzahl der Speicherstellen verringern sich die Genauigkeit und der Rechenaufwand bei der Mittelung der Pulsketten (80), und zwar in dieser Beispielanordnung um den Faktor 50.

Eine up-TP (85) und eine dw-TP (88) können sich überlappen, wie in Punkt (90) der Signale (84) (up-TP-Signal) und (87) (dw-TP-Signal) dargestellt ist. Aus diesem Grund sind innerhalb eines Zeitmesskanals ein Zweig für die Messung der up-Events und ein Zweig für die Messung der dw-Events vorgesehen. Ferner können sich aufeinander folgende up- oder dw-TPs von zwei aufeinander folgenden Pulse der Pulskette (80) überlappen, wie in Punkt (91) dargestellt. Aus diesem Grunde wird der so genannte "serielle Mess-Modus" vorgesehen, in dem die Pulse seriell auf mehrere Zeitmesskanäle verteilt werden. Die Verteilung der Pulse der Pulskette (80) erfolgt mittels der Pulsweiche (21).

### Teilprogramme des Prozessorsystems:

Programmteile, die lediglich den Ablauf der Messung sicherstellen, werden nicht beschrieben. Das Auswerteprogramm des Prozessorsystems steuert das Auslesen der Event-Listen aus dem Speicher jedes Zeitmesskanals des Zeitmess-ICs (32) in den Speicherbereich des Prozessorsystems (28) und berechnet aus den Event-Listen die Entfernungswerte entsprechend dem eingestellten Mess-Modus.

Hierfür ist eine Kalibrierung des Zeitmesssystems vorgesehen. Als absoluter Bezug dient die Mess-Clock, die dafür als fehlerfrei betrachtet wird. In einem Teilprogramm wird die Periode als Vielfaches der Delay-Zeit aus den Teilmessergebnissen der Pulsbreiten der TP-Pulse berechnet und daraus die absolute Delay-Zeit bestimmt. Das Ergebnis ist ein Faktor, der angibt, wie viele Delay-Zeiten einer Periode der Mess-Clock entsprechen.

In einem weiteren Teilprogramm werden alle Zählwerte mit dem genannten Faktor multipliziert. Die binär gewandelten Pulsbreiten der TP-Pulse können nun mit den Zählwerten zu einer Zahl zusammengefasst werden. Diese Werte sind die Events, gemessen in Delay-Zeit. Um die Events, deren Zeit ab einem willkürlich gelegten Messbeginn gezählt wurde, auf den Startpuls zu beziehen, wird in einem Teilprogramm von allen Events der Wert des Startpuls-up-Events subtrahiert. Danach liegen alle Events in einem geeichten Maßstab als eine binäre Zahl, gezählt vom Startpuls-up-Event, als Liste im Speicher des Prozessorsystems vor.

Zur Mittelung (vgl. KEM-Prinzip) von Messungen werden diese Werte mittels eines weiteren Teilprogramms in einen Zeitrasterspeicher dadurch eingegeben, dass jeder mögliche Wert die Adresse einer Speicherzelle darstellt und zum Inhalt der Speicherzelle bei Auftreten eines up-Events eine 1 und bei Auftreten eines dw-Events eine -1 addiert wird. Dadurch können einstellbar viele Messungen addiert werden. Der Inhalt entspricht der ersten Ableitung der Addition der Pulsketten. Die Addition der Pulsketten wird mit "SW-Amplitudenfunktion" (SW = Software) oder kurz mit "SW-Amplitude" bezeichnet. Zu dieser SW-Amplitude kommt man folglich dadurch, dass in einem weiteren Teilprogramm der Inhalt des Zeitrasterspeichers integriert wird. Da diese Integration über sehr viele Zellen hinweg (TOF geteilt durch Delay-Zeit) vorgenommen würde, werden mit einem weiteren Teilprogramm die gleichen vorstehenden Rechnungen nur mit den Zählwerten ohne Berücksichtigung der Teilperioden durchgeführt ("Grob-Integration), was zur Grob-SW-Amplitude führt. Der Rechenaufwand dafür ist ca. 50 mal geringer als für die Berechnung der SW-Amplitude.

Mit einem weiteren Teilprogramm wird der Mittelwert der Rauschen der SW-Amplitude berechnet, und ein SW-Referenzwert zur Detektion von Pulsen in der SW-Amplitude wird dadurch bestimmt, dass die geforderte Wahrscheinlichkeit der Detektion eines Rauschpulses nicht überschritten wird. Durch Anwendung der SW-Referenz auf die Grob-SW-Amplitude werden die Events der Signalpulse als Durchstoßpunkte gefunden. Diese Events werden als "SW-Grob-Events" bezeichnet. An diesen Adressen der SW-Grob-Events (umgerechnet in Delay-Zeiten) wird die Integration ("Fein-Integration") des Inhalts des Zeitrasterspeichers in einem kleinen Bereich mit dieser Adresse als Mittelpunkt integriert. Dabei ergeben sich die Formen der Pulse der SW-Amplitude.

In einem weiteren Teilprogramm werden die Flanken dieser Pulse durch Geraden approximiert und mit der Mittellinie des Rauschens der SW-Amplitude zum Schnitt gebracht. Diese Punkte sind von der variablen Amplitude der Pulse unabhängige Fußpunkte der Pulse, die bezüglich Temperaturdrift und absolutem Offset mittels zuvor aufgenommener Tabellenwerte korrigiert und in tatsächliche Entfernungen umgerechnet werden.

In einem anderen Teilprogramm werden die Geraden mit der SW-Referenz zum Schnitt gebracht und die Schnittpunkte bezüglich Temperaturdrift und absolutem Offset mittels zuvor aufgenommener Tabellenwerte korrigiert und in tatsächliche Entfernungen umgerechnet.

In einem weiteren Teilprogramm werden die Pulsbreiten durch Subtraktion des SW-up-Events vom zugehörigen SW-dw-Event berechnet. Diese Pulsbreite stellt ein Maß für die Leistung der reflektierten Pulses dar und wird zur Fehlerkorrektur der SW-up-Events infolge unterschiedlicher Puls-Amplituden mittels einer zuvor aufgenommenen und gespeicherten Korrekturtabelle mit Korrekturwerten, in der jeder Pulsbreite ein Korrekturwert zugeordnet ist, zur Berechnung der Entfernungsrohwerte verwendet.

In einer anderen Ausführungsform des Auswerteprogramms werden die SW-Amplituden vor der Verarbeitung gefiltert. Besonders geeignet ist ein Boxcar-Filter, weil hierdurch die Glättung von Digitalisierungsanteilen der SW-Amplitude mit geringem Rechenaufwand möglich ist.

Vorstehend wurde die Bestimmung der TP mit Hilfe von Delay-Elementen beschrieben. Diese Art und Weise der Signalverzögerung stellt jedoch nicht die einzige Möglichkeit zur TP-Messung dar. Alternativ könnte die TP-Messung z.B. auch durch eine n-fache Phasenverschiebung der Mess-Clock-Signale erfolgen, wobei die Phasenwinkeldifferenz zweier aufeinander folgender phasenverschobener Mess-Clock-Signale die Auflösung der TP-Messung bestimmt.

Figur 9 zeigt die aktiven Zonen eines APD-Arrays (125) eines Empfänger-Arrays (9) (vgl. Fig. 3), das im Wesentlichen durch seinen Pitch (Diodenabstand plus Gap) (127), seinen Gap (Lücke) (128) und die aktive Fläche (126) bzw. Diodenbreite (129) geometrisch definiert ist. Wegen der hohen Vorspannung der APDs zur Erzeugung eines Multiplikationsfaktors in der Größenordnung von größer oder gleich 100 ist ein Gap von ca. 80 bis 100 µm unvermeidbar. Hat der Pitch die doppelte Größe eines Gap, so können z.B. 64 Dioden in einem Array von kleiner 13 mm Länge hergestellt werden. Bildet man dieses Array mittels Projektionsoptik im Fernfeld ab, ergibt sich ein Array von 64 Einzelsehraumwinkeln (126a) (vgl. Fig. 9a), die sich zu einem Sehraumwinkel (125a) ergänzen. Die Größe des Raumwinkels wird durch die Fokuslänge der Sammeloptik (48) bestimmt.

Figur 10 zeigt die aktiven Zonen eines Laserdioden-Arrays, das ebenfalls im wesentlichen durch seinen Pitch (Diodenabstand plus Gap) (132), seinen Gap (Lücke) (133) und die aktive Fläche (131) geometrisch definiert wird. Infolge Herstellungsprozess liegt ein Gap in der Größenordnung der aktiven Zone, und die Breite der aktiven Zone beträgt bei vielen verfügbaren Laserdioden ca. 200 µm. Damit kann ein Array von z.B. 8 Laserdioden mit einer Länge kleiner 3,2 mm hergestellt werden.

Wegen der Gaps zwischen den Laserdioden können zwei Arrays geeignet justiert werden, damit die Einzelsenderaumwinkel ein geschlossenes Array von Einzelsenderaumwinkeln bilden. Mit zwei dieser Laser-Arrays, also mit den Einzelsenderaumwinkel von 16 Laserdioden, können mittels einer geeignet gewählten Fokuslänge der Projektionsoptik (47) der Sehraumwinkel von 64 APDs eines APD-Arrays abgedeckt werden. Bei dieser Anordnung würde ein Zeitmess-IC mit 64 Zeitmesskanälen oder ein minimales Zeitmess-IC mit 4 Kanälen und Multiplexern für Startpuls und Signale ausreichen.

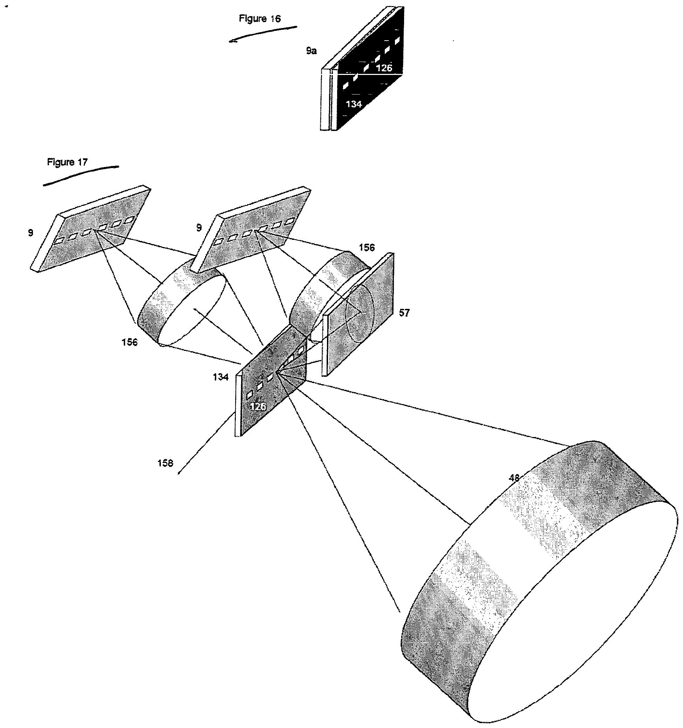

Figur 17 zeigt eine derartige Anordnung für zwei APD-Arrays 9, die entsprechend für zwei Laserdioden-Arrays verwendet werden kann, wenn die APD-Arrays (9) durch Laserdioden-Arrays ersetzt werden.

Es können in einer weiteren Ausführungsform jedoch auch 16 Laserdioden mit jeweils zugehörigen Projektionslinsen so justiert werden, dass die Einzelsenderaumwinkel die Sehraumwinkel der 64 APDs überdecken. Ein Segment daraus wird in Figur 12a dargestellt, in der ein Einzelsenderaumwinkel (131a) insgesamt vier Einzelsehraumwinkel (126a) von vier APDs überdeckt.

Figur 10a zeigt Einzelsenderaumwinkel (131a), die z.B. dadurch entstehen, dass ein Laserdioden-Array (130) im Fernfeld abgebildet wird, so dass sich die Einzelsenderaumwinkel zu einem Senderaumwinkel (130a) ergänzen.

Figur 12 zeigt die Anordnung eines Segmentes (139) aus vier aktiven Zonen (126) der APDs und der aktiven Zone (131) einer Laserdiode, wie sie beim Blick durch ein Justierfernrohr in die optischen Systeme erscheinen und justiert sein müssen, damit sich Sende- und Sehraumwinkel überdecken. Figur 13 stellt die Ergänzung mehrerer Segmente (139) zu einem Array (142) dar.

In beiden Fällen (zwei Laserdioden-Arrays oder 16 Einzellaserdioden) findet eine Reduktion der Leistung einer Laserdiode auf ca. 1/8 statt, weil die Leistung jeder Laserdiode auf vier APDs und vier Gaps verteilt wird. Geht man von Pulsleistungen von ca. 50 Watt aus, so würden immer noch über 6 Watt auf eine APD treffen, was für eine Entfernungsmessung über mehrere hundert Meter ausreichend wäre. Allerdings ist die Reichweite auch abhängig von der gewählten Brennweite der Sammeloptik (48), die auch die Sehraumwinkelgröße und damit die laterale Auflösung bestimmt. Sind die Abmessungen der optisch aktiven Zonen (126) und (131) festgelegt, was wegen der begrenzten Verfügbarkeit der Komponenten normalerweise der Fall ist, erfolgt die Festlegung der Sende- und Sehraumwinkel (und damit der lateralen Auflösung) und der Reichweite des Systems durch die Auslegung der optischen Systeme. Ferner ist eine Reichweitenerhöhung durch Mittelungsmethoden (z.B. gemäß KEM-Prinzip bzw. wie in der genannten Patentanmeldung KEM beschrieben) anwendbar.

Wichtig ist, dass mit der als Beispiel beschriebenen Anordnung mit einem APD-Array mit 64 APDs und einem Sender-Array mit 16 Laserdioden bereits ein Entfernungsprofil mit 64 Punkten aufgenommen werden kann, ohne eine Ablenkvorrichtung für Sende- und Sehraumwinkel zu verwenden. Hierdurch wird sozusagen ein Linienscanner mit Tiefenauflösung realisiert, ohne dass ein Scannen im eigentlichen Sinne, also im Sinne einer Verwendung einer Ablenkeinrichtung, z.B. eines Dreh- oder Kippspiegels, erfolgt. Für viele Anwendungen ist das damit aufgenommene Entfernungsprofil bereits gut verwendbar. Die Festlegungen auf 16 Laser und 64 APDs und Überdeckung von 4 Einzelsehraumwinkeln mit einem Einzelsenderaumwinkel ist willkürlich bzw. lediglich beispielhaft, aber sinnvoll gewählt.

Ein einschränkender Parameter ist in der Praxis durch die maximale Pulswiederholrate (PRF) von Pulslasern mit Puls-Halbleiter-Laserdioden gegeben. Bei Pulsleistungen über 50 Watt ist zumindest derzeit nur noch eine mittlere PRF von ca. 20 kHz möglich. Während der Pausen jedes Lasers können Messungen mit weiteren Lasern des Laser-Arrays durchgeführt werden. Nimmt man eine maximale Arbeitsreichweite (Entfernung) von 400 m an und führt Einzelmessungen mit jedem der 16 Laser des Laser-Arrays seriell als so genannte Burstmessung, wie vorstehend bereits erläutert, durch, so dauern diese 16 Einzelmessungen, nacheinander ausgeführt, weniger als 50 µs, was bei kontinuierlicher Entfernungsprofilaufnahme gerade der maximalen mittleren PRF der Laser von 20 kHz entspricht. Hieraus folgt unmittelbar, dass das Zeitmess-IC nicht mehr als 4 Zeitmesskanäle aufweisen müsste (ein Laser "beschickt" 4 APDs aus 64APDs/16 Laser = 4). Die Startpulse und Signale werden dabei in Gruppen mittels Multiplexer (18 und 19) den immer gleichen vier Zeitmesskanälen seriell zugeleitet.

Grundsätzlich können zur Gruppierung von Bildpunkten für ein Zeitmess-IC folgende Regeln für unterschiedlichste Ausführungen von Sender- Empfänger-Arrays und Kombinationen davon aufgestellt werden:
- Linienförmig in einer Reihe angeordnete und getrennte Entfernungsbildpunkte als Raumwinkelsegmente (149) (vgl. Fig. 12a), bei denen eine unterscheidbare Überdeckung von Einzelsehraumwinkel und Einzelsenderaumwinkel entsteht, sind durch die Nummer des Senders n und die Nummer des Empfängers m, also durch die Zahlen (m, n), eindeutig identifizierbar.
- Es werden solche unterscheidbaren Entfernungsbildpunkte als Untergruppe gruppiert, welche die insgesamt detektierbare Strahlung eines Senders empfangen.
- Von diesen Untergruppen werden so viele zu einer Gruppe (7a und 13a) (vgl. Fig. 7) gruppiert, dass die dazu gehörende Anzahl unterscheidbarer Entfernungsbildpunkte gleich oder kleiner der Anzahl unabhängiger Zeitmesskanäle ist.
- Wenn nicht ausreichend Zeitmesskanäle vorhanden sind, werden die Gruppen über Multiplexer (18 und 19) nacheinander, die zu einer Gruppe gehörenden Signale (7a) und Startpulse (13a) zusammengehörig, seriell in die Zeitmesskanäle des Zeitmess-ICs (32) geführt.
- Wenn für alle Entfernungsbildpunkte ausreichend Zeitmesskanäle im Zeitmess-IC vorhanden sind, werden die Signale (7b) und Startpulse (13b) zusammengehörig direkt in die Zeitmesskanäle des Zeitmess-ICs (32) geführt.

Verwendet man gepumpte leistungsstarke Laser mit wesentlich größerer Pulsleistung von z.B. 2,6 kW und spreizt die Pulse optisch mittels Zylinderlinse in einen Senderaumwinkel, der dem Sehraumwinkel von 64 APDs entspricht, so stehen 20 Watt pro APD zur Verfügung, was eine Reichweite im km-Bereich ermöglicht und es wären 64 Zeitmesskanäle im Zeitmess-IC erforderlich, um die Leistung dieses Lasers vollständig zu nutzen. Diese Konfiguration würde sich z. B. hervorragend für ein so genanntes Terrain-Profiling vom Flugzeug aus eignen, weil sowohl Reichweite als auch Wiederholrate größere Werte annehmen könnten.

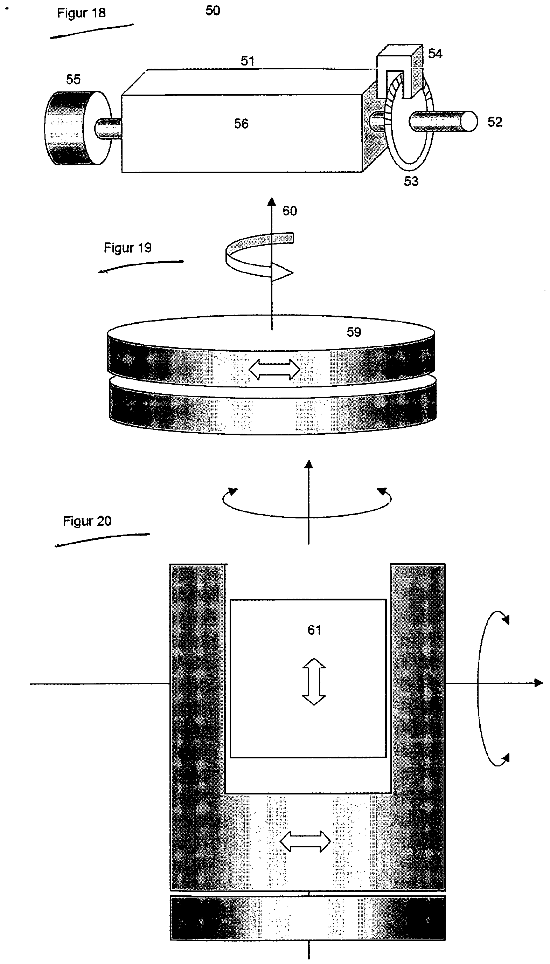

Ausgehend von einer Entfernungsprofilaufnahme mit Halbleiter-Laserdioden, die mit 20 kHz Pulse senden, kann leicht bestimmt werden, mit welcher Wiederholrate Entfernungsbilder aufgenommen werden können, wenn den optischen Systemen eine entsprechend schnelle Ablenkeinrichtung vorgeschaltet ist. Setzt man für eine Ablenkeinheit (50) (vgl. z.B. Fig. 18) voraus, dass in 50% der Zeit Pulse gesendet werden können, wie z.B. bei einem 4-Spiegel-Polygon-Scanner mit 90° Ablenkwinkel möglich, so können bei einer Ablenkrichtung quer zur Längsrichtung der Sende- und Sehraumwinkel und bei 100 Entfernungsprofilen pro Entfernungsbild 100 Entfernungsbilder pro Sekunde mit 64 * 100 = 6.400 Bildpunkten aufgenommen werden. Die Messrate würde bei 640 kHz liegen. Diese vergleichsweise enorme Messrate wird durch 20kHz*0,5Zeitanteil*16Laser*4APDs = 640 kHz erreicht. Im Vergleich zu herkömmlichen Sensoren mit nur einem Laser und einem Empfänger würde nur eine Messfrequenz von 5 kHz erreichbar sein, weil zwei Ablenkvorrichtungen erforderlich wären und damit die Zeit zum Aussenden von Pulsen auf 25% reduziert wird. Damit könnte bei 6.400 Entfernungsbildpunkten nicht einmal eine Entfernungsbildrate von einem Hz erreicht werden.

Für eine Entfernungsbildwiederholrate von 25 Hz mit einer Messrate von 640 kHz kann noch eine 4-fache Mittelung zur Genauigkeitserhöhung oder eine Verdoppelung der Bildbreite durch eine zweite Ablenkeinheit erfolgen, und man würde trotzdem eine,Entfernungsbildrate im Bereich von herkömmlichen abbildenden Kameras erreichen.

Zu bedenken ist bei diesem System, dass die Leistung einer Laserdiode auf mehre Photodioden aufgeteilt wird. Dies kann mit einer im Prinzip gleichen erfindungsgemäßen Einrichtung dadurch vermieden werden, dass lediglich die Abmessungen der Einzelsende- und Einzelsehraumwinkel und die optischen Systeme unterschiedlich gewählt werden.

Die Figur 14 und 15 stellen die aktiven Zonen (131) der Sendeelemente und die aktiven Zonen (126) der Empfangselemente einer Vorrichtung dar, bei der die Leistung der Laserdiode nicht auf mehrere APDs aufgeteilt ist, wodurch die Reichweite erheblich gesteigert wird. Dabei wird die aktive Zone (126) der APD-Array-Elemente linienförmig ausgeweitet, so dass bei geeigneter Wahl der Parameter der optischen Systeme mehrere Einzelsenderaumwinkel einen Einzelsehraumwinkel umfassen. Das Segment (139) kann in ein Array (142) erweitert werden. Es können auch Zwischenlösungen dieser beiden Systeme realisiert werden. Ein Spezialfall wäre genau ein Laser pro APD. Für alle Ausgestaltungen gelten die oben angegebenen Regeln zur Gruppenbildung von Entfernungsbildpunkten für das Zeitmess-IC. In einem noch weiter spezialisierter Fall wären nur ein Laser und ein Empfänger vorhanden und der Sehraumwinkel des Empfängers umfasst den Senderaumwinkel des Lasers. Diese Anordnung entspricht einem relativ einfachen erfindungsgemäßen Entfernungssensor.

Es ist eine Frage der Anforderungen und der Kosten, welche Kombination von Sender- und Empfänger-Arrays, Abmessungen der aktiven Zonen und optischen Systeme und Version des Zeitmess-ICs verwendet werden. Da die Sende- und Empfangselemente der Arrays bestimmte Abmessungen aufweisen (Verfügbarkeit auf dem Markt und physikalische Gründe), werden Konfigurationen entsprechend Figur 12/13 insbesondere dann verwendet, wenn eine Vorrichtung eine hohe laterale Auflösung, aber vergleichsweise geringe Reichweite aufweisen soll, und entsprechend Figur 14/15, wenn eine Vorrichtung einen großen Winkelbereich mit niedriger lateraler Auflösung, aber vergleichsweise großer Reichweite aufweisen soll. Die Art der Auswertung der Einzelmessungen bleibt dabei im Wesentlichen gleich.

Bei dem beschriebenen Empfänger-Array mit APD-Array als Empfangselement ist ein enormer Signalhub vorhanden, und zwar infolge unterschiedlicher Reflektivitäten der Ziele, die in einem praktisch vorkommenden Bereich von 3% bis 100% (Faktor 33) liegen. In unterschiedlichen Entfernungen von 2 bis 200 m (Faktor 10.000 wegen quadratischer Abhängigkeit) weist das Signal insgesamt einen Dynamikfaktor von 33 * 10.000 = 330.000 auf. Teile des Signallichtes fallen in die vorstehend erwähnten Gaps, wo bei großen Signalen kleine, aber ausreichende elektrische Störpulse entstehen, die sich mit den gewünschten Signalen überlagern, was eine prinzipielle Schwierigkeit der Array-Technik ist.

Durch eine Lochmaske (134) (vgl. Fig. 16) kann dieser Effekt drastisch reduziert werden. Die Lochmaske (134) ist so gestaltet, dass nur dasjenige Licht hindurch gelassen wird, das auch auf die aktiven Zonen der APDs fallen würde. Die Lochmaske (134) ist direkt auf dem APD-Array angebracht, wie Figur 16 zeigt. Das restliche Licht kann dadurch vermieden werden, dass die Lochmaske oberflächlich verspiegelt ist, womit erreicht wird, dass das unerwünschte Licht gar nicht erst in den Bereich der aktiven Zonen eintritt, oder die Lochmaske auf die Deckscheibe des APD-Arrays oder auf eine APD mit einem undurchlässigem Material aufgedruckt ist.

Allerdings könnte ein Teil des Lichts, das durch die Löcher der Lochmaske hindurch tritt, von der APD reflektiert und von der Unterseite der Lochmaske wieder zurückgespiegelt und unter Umständen auch noch gestreut werden. Nach ca. zweimaliger Hin- und Rückspiegelung würde dieses Licht die benachbarten aktiven Zonen erreichen können und dort als Störsignal wirken. Dieser Effekt kann dadurch vermindert werden, dass die Reflektivität auf der Rückseite des Trägerglases mit einer Schicht aus Signallicht absorbierendem Material versehen wird, wenn die Lochmaske als Spiegelschicht ausgebildet ist. Außerdem würde nur das Randlicht (ca. 10% des rückreflektierten Signallichtes) auf die Rückseite der Lochmaske treffen. Beträgt die Reflektivität der APD ca. 20% und die Reflektivität des absorbierenden Materials ca. 5%, so ergibt sich eine Reduktion von 10%*(20%*5%)² = 10⁻⁵. Dieses Störsignal kann also im Bereich schwacher Signale liegen, wie ein Vergleich mit dem vorstehend erwähnten Dynamikbereich zeigt.

Aus diesem Grund kann in einer weiteren Ausführungsform die Lochmaske (134) nicht dicht vor das APD-Array (9a) platziert, sondern unter einem Winkel von z.B. 45° in der Fokusebene der Sammeloptik (48) des Empfänger-Arrays platziert werden, wobei die Lochmaske mittels einer weiteren Linse (156) auf das dahinter positionierte APD-Array abgebildet wird, wie in Figur 17 dargestellt ist. Nun wird das rückreflektierte Licht (158), wenn die absorbierende Schicht weggelassen wird, von der Unterseite der Verspiegelungsschicht der Lochmaske (134) auf einen entfernter liegenden Absorber gespiegelt und dort vernichtet. Auf diese Weise ist es also möglich, die Sensorelemente optisch mit Hilfe einer derartigen Lochmaske (134) wirksam gegeneinander zu isolieren.

Figur 17 stellt einen weiteren wesentlichen Vorteil der Lochmaske dar. Wenn die Lochmaske (134) in der Fokusebene positioniert ist, werden Signale von Zielen, die sich im nahen Arbeitsbereich der Vorrichtung befinden und deshalb starke Signale reflektieren, hinter der Fokusebene abgebildet. Dadurch ist das Bild der Signale in der Fokusebene deutlich vergrößert, so dass von diesen Signalen nur ein Bruchteil durch die Löcher der Lochmaske fällt.

Wird die Dimensionierung der Löcher an die Abbildungsgröße für die maximale Arbeitsreichweite angepasst, kann die Signal-Dynamik durch die Reduktion von Signalen im Nahbereich um den Faktor 10 verkleinert werden. Dieser Effekt kann in beiden Fällen (Positionierung der Lochmaske direkt vor dem APD-Array oder unter 45° mit Abbildung auf das APD-Array) genutzt werden. Die unter 45° schräg gestellt Lochmaske mit Verspiegelungsschicht eignet sich ferner als geometrischer Teiler für die Verwendung von zwei APD-Arrays zur Herstellung eines dichten Sehraumwinkels, wie weiter oben beschrieben ist.

Analog würde sich diese Form der Verwendung der Lochmaske zur Zusammenführung von zwei Laserdioden-Arrays zur Herstellung eines dichten Senderaumwinkels eignen. Dadurch kann die Entfernungsbildpunktzahl im oben beschrieben Beispiel auf 12.800 erhöht werden. Diese Erhöhung muss dann nicht zu einer Reduzierung der Entfernungsbildrate führen, wenn die doppelte Anzahl von Zeitmesskanälen im Zeitmess-IC vorhanden ist und die Multiplexer entsprechend erweitert werden. In dieser Ausführungsform der Vorrichtung weist das Zeitmess-IC dann 8 Zeitmesskanäle auf, und die Multiplexer "beschicken" 2 mal 4 Zeitmesskanäle parallel.

Die für die Arrays der Sensor- und Sendeelemente geeignete Zeitmessschaltung ist vorzugsweise als integriertes IC z. B. in CMOS hergestellt. Damit können Entfernungsprofile ohne Ablenkeinheit und Entfernungsbilder in Kombination mit nur einer einzigen Ablenkeinheit aufgenommen werden. Eine besonders geeignete Zeitmessmethode ist in der genannten Patentanmeldung KEM beschrieben. Für die Entfernungsbildaufnahme ist die Realisierung einer Zeitmessmethode, wie sie insbesondere in der Patentanmeldung KEM beschriebenen ist, in einem Zeitmess-IC mit erfindungsgemäßen Schaltungen für die Messkanäle und Anordnungen von Komponenten, wie sie in der vorliegenden Anmeldung beschrieben sind, besonders effektiv.

Mittels Ablenkeinheiten kann erfindungsgemäß eine Vorrichtung zur Entfernungsprofilaufnahme (2D) zu einer Vorrichtung für eine breitere Entfernungsprofilaufhahme (2D mit größerem Winkelbereich) oder zu einer Vorrichtung für eine Entfernungsbildaufnahme (3D) erweitert werden. Sowohl das Entfernungsprofil als auch das Entfernungsbild sind im Prinzip unabhängig von der Art der zur Ablenkung der Sende- und Sehraumwinkel verwendeten Ablenkeinheit.

Figur 18 zeigt eine Ablenkeinheit, bei der ein Polygon-Spiegel (51) mit Hilfe eines Antriebsmotors (55) um eine Drehachse (52) rotiert und der Drehwinkel mittels Winkelmesseinrichtung wie z.B. einem Code-Wheel (53) mit Winkelreader (54) erfasst wird. Als Polygone können z.B. zwei, vier oder sechs Spiegelflächen (56) zu einem Polygon (51) kombiniert werden, wobei zwei Flächen einem zweiseitigen Spiegel entsprechen. Diese Ablenkeinheit wird im Folgenden mit Polygon-Ablenkeinheit (50) bezeichnet.

Zwei dieser Polygon-Ablenkeinheiten können quer zueinander montiert und so zu einer als 3D-Polygon-Ablenkeinheit bezeichneten Ablenkeinheit kombiniert werden.

Figur (20) zeigt die Montage der Vorrichtung zur Entfernungsprofilaufnahme an Stelle des Fernrohrs in einem automatischen Theodoliten. Automatisch heißt hier, dass Horizontal- und Vertikalachse des Theodoliten motorisch angetrieben werden und innerhalb eines voreinstellbaren Winkelbereiches ein Raumwinkel seriell abgefahren werden kann. Dabei wird die Bewegung derartig gesteuert, dass in diesem Raumwinkel ein gleichmäßig mit Entfernungsbildpunkten besetztes Entfernungsbild entsteht. Diese Art der Ablenkeinheit wird mit Theodolit-Ablenkeinheit bezeichnet.

Figur (21) zeigt die Kombination von Polygon-Ablenkeinheit zur vertikalen Ablenkung mit einer Drehung um die Vertikalachse mittels eines Drehtisches (59), wie er in Figur 19 gezeigt ist, zur horizontalen Ablenkung. Diese Ablenkeinheit wird mit Drehtisch/Polygon-Ablenkeinheit bezeichnet.

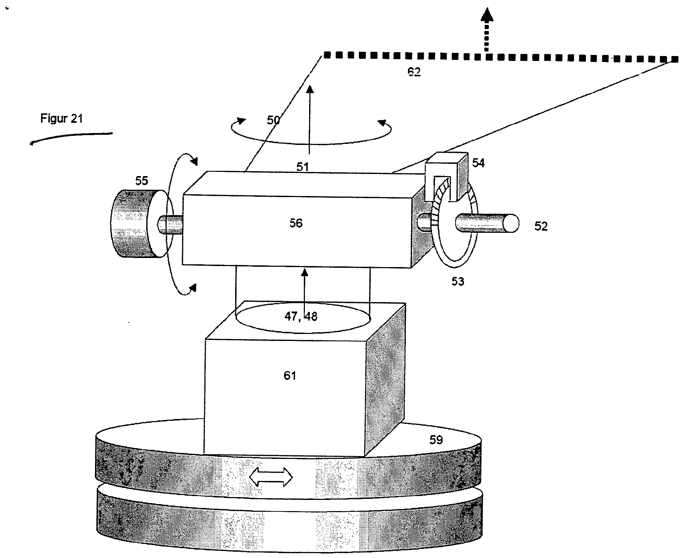

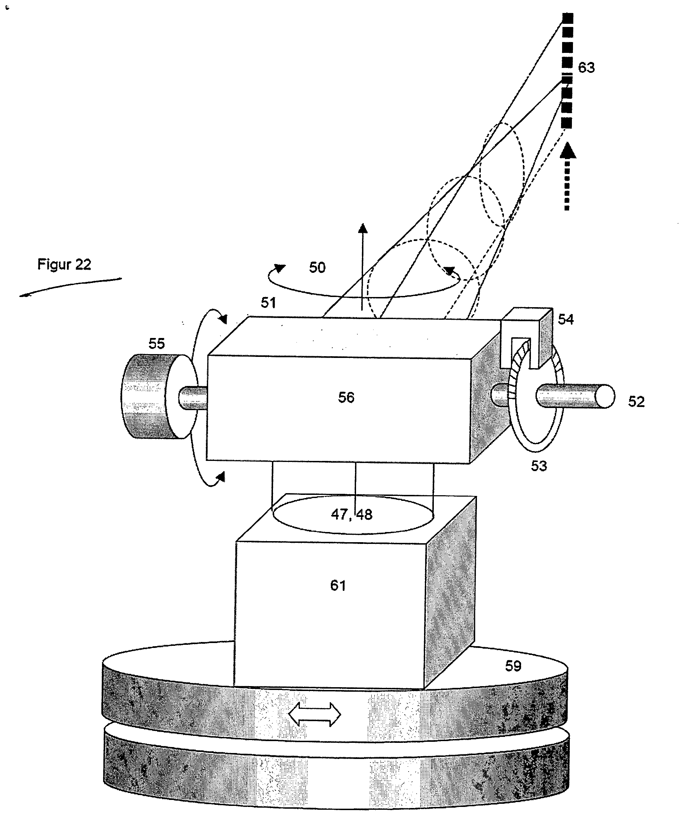

Ferner können die Ablenkrichtungen in Richtung der Sende- und Sehraumwinkel oder quer dazu erfolgen, wie in den Figuren (21 und 22) dargestellt. Eine Ablenkung in Richtung der Sende- und Sehraumwinkel (Längs-Ablenkung (63)) führt zu längeren Entfernungsprofilen (2D) (Figur 21), während eine Ablenkung quer zur Richtung der Sende- und Sehraumwinkel (Quer-Ablenkung (62)) zu Entfernungsbildern (3D) führt (Figur 22).

Von Vorrichtungen zur Aufnahme von Entfernungsprofilen zu Vorrichtungen zur Aufnahme von Entfernungsbildern kommt man durch Kombination der Vorrichtung zur Entfernungsprofilaufnahme mit an sich bekannten Ablenkeinheiten zum Schwenken der Sende- und Sehraumwinkel in Array-Richtung oder quer dazu sowie durch Montage der Vorrichtung an bewegten Trägern und Bewegen der Sende- und Sehraumwinkel in Array-Richtung oder quer dazu und Schwenken der Sende- und Sehraumwinkel in Array-Richtung und quer dazu. Es ergeben sich höchst unterschiedliche Vorrichtungen und Systeme zur Entfernungsbildaufnahme, die zwar für jeweils unterschiedliche Anwendungen geeignet sind, sich jedoch im prinzipiellen Aufbau und ihren Block-Darstellungen weitgehend gleichen. Die bewegten Träger sind beispielsweise Fahrzeuge, Kräne, mobile Arbeitsmaschinen, Helikopter oder Flugzeuge.

Im Folgenden werden rein beispielhaft spezielle Versionen dieser Vorrichtungen zur Bildaufnahme mit speziellen Anwendungen beschrieben.

Figur 21 zeigt eine Vorrichtung (61) in Kombination mit einer Polygon-Ablenkeinheit (50) und einem Drehtisch (59) zur Panorama-Entfernungsbildaufnahme. Vertikal ausgerichtete Entfernungsbildstreifen können zu einem Rundum-Entfernungsbild z.B. innerhalb eines Steinbruchs, eines offenen Minenbetriebes, einer Baustelle oder eines Tales verwendet werden.

Figur 22 zeigt eine prinzipiell gleiche Vorrichtung, bei der die Sende- und Sehraumwinkel vertikal in Ablenkrichtung ausgerichtet sind. Diese Vorrichtung eignet sich insbesondere für große vertikale Raumwinkel des Entfernungsbildes. In einer besonderen Ausgestaltung der Lochmaske mit Lochabmessungen, die n-fach kleiner sind als der Pitch (132) des APD-Arrays (vgl. z.B. Fig. 9), und mit n Lasern, die in den gleichen Einzelsenderaumwinkel senden, eignet sich diese Vorrichtung zur schnellen Aufnahme von vertikal orientierten Entfernungsprofilen mit n-fach höherer lateraler Auflösung.

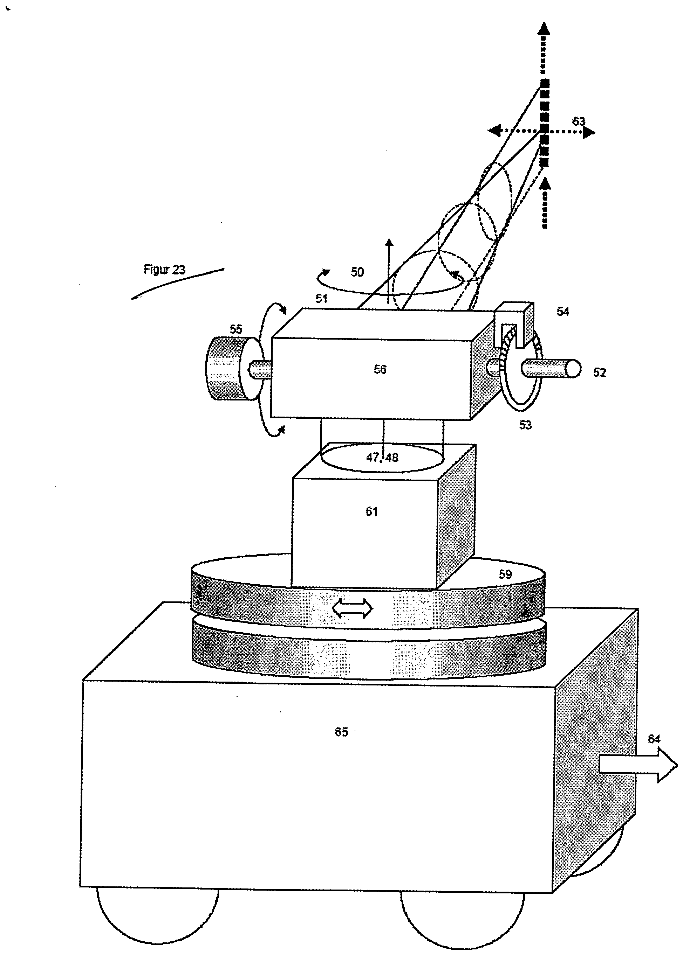

Figur 23 zeigt die Vorrichtung aus Figur 22, hier jedoch montiert auf ein Trägerfahrzeug (65) mit Fahrrichtung (64). Wenn das Trägerfahrzeug (65) in Bewegung ist und während der Fahrt vertikal und senkrecht zur Fahrtrichtung orientierte Entfernungsprofile aufgenommen werden, dann ergänzen sich alle Entfernungsprofile zu einem Umgebungs-Entfernungsbild in Zylinderkoordinaten. Mit einer weiteren, oberhalb der Ablenkeinrichtung (50) montierten Vorrichtung (61) kann die gegenüber liegende Seite der Umgebung aufgenommen werden. Mit dem Drehtisch (59) können auch entlang einer Fahrtroute an diskreten Punkten bei stillstehendem Trägerfahrzeug Panorama-Entfernungsbilder aufgenommen werden. Diese Art der Entfernungsbildaufnahme eignet sich insbesondere für eine Vermessung von Städten, weil Objekte links und rechts der Straßen mit unterschiedlichen Winkeln vermessen werden und so auch Seiten, die winklig zur Straße ausgerichtet sind, erfasst werden.

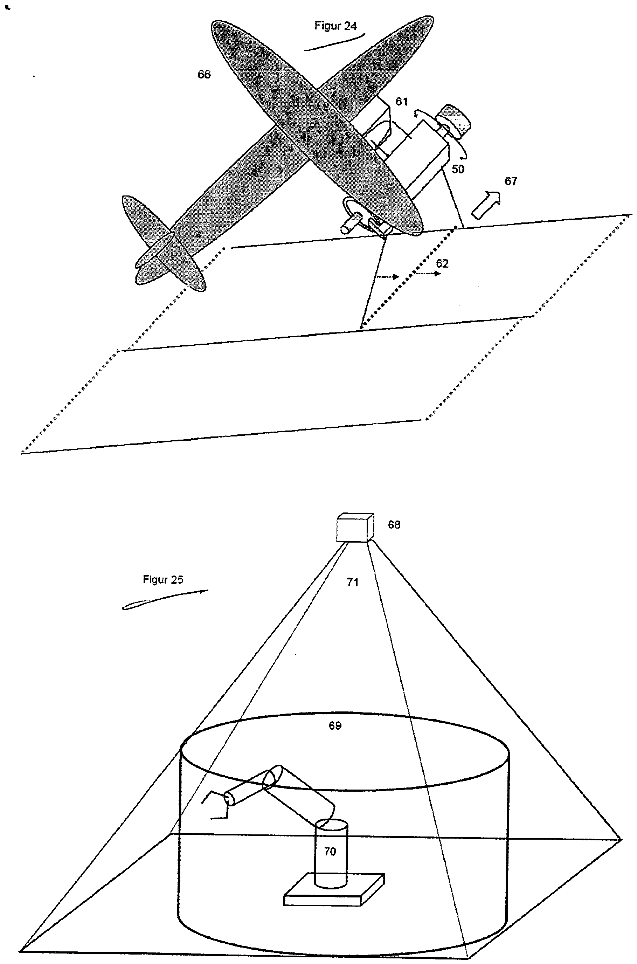

Figur 24 zeigt eine Vorrichtung entsprechend Figur 21, jedoch ohne Drehtisch, sondern unter einem Flugzeug (66) montiert, und zwar mit vertikaler oder Quer-Ablenkung (62) sowie mit Sende- und Sehraumwinkelausrichtung in Flugrichtung (67). Mit dieser Anordnung ist man in der Lage, ein Endlos-Entfernungsbild des überflogenen Terrains aufzunehmen. Die hohe Messgeschwindigkeit der erfindungsgemäßen Vorrichtung erlaubt eine Entfernungsbildaufnahme auch bei hohen Fluggeschwindigkeiten.

Figur 25 zeigt eine Vorrichtung (68) zur Entfernungsprofilaufnahme in Kombination mit einer 3D-Polygon-Ablenkeinheit bestehend aus zwei senkrecht zueinander angeordneten Polygon-Ablenkeinheiten (50). Mit dieser Vorrichtung kann ein Entfernungsbild in einem Raumwinkel (71) mit hoher Geschwindigkeit aufgenommen werden. Wenn der Raumwinkel kleiner sein kann, würde auch eine einzige Polygon-Ablenkeinheit (50) ausreichen. Innerhalb des Raumwinkels (71) ist ein Sicherheitsvolumen (69) definiert. Wird ein Objekt innerhalb dieses Sicherheitsvolumens (69) detektiert, wird ein Signal generiert, mit dem eine Arbeitsmaschine (70) still gesetzt wird.

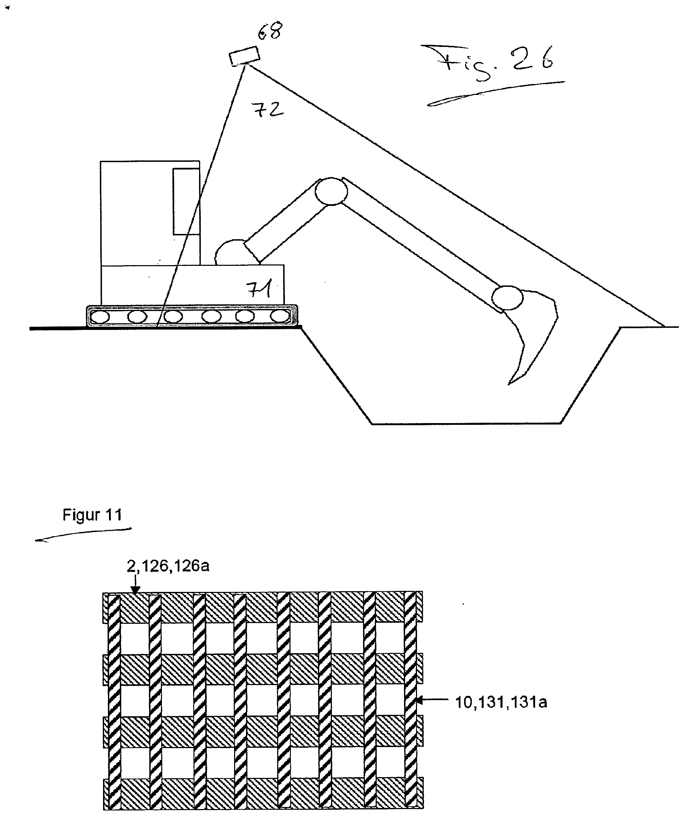

Figur 26 zeigt eine Vorrichtung (68) zur Entfernungsprofilaufnahme in Kombination mit einer 3D-Polygon-Ablenkeinheit bestehend aus zwei senkrecht zueinander angeordneten Polygon-Ablenkeinheiten (50). Mit dieser Vorrichtung kann ein Entfernungsbild in einem Raumwinkel (72) mit hoher Geschwindigkeit im Arbeitsbereich einer Material auf- oder abtragenden Arbeitsmaschine (70) aufgenommen werden. Die Entfernungsbilder werden entsprechend den Arbeitzielen der Arbeitsmaschine (70) ausgewertet und geeignet zum Steuern der Arbeitsmaschine (70) verwendet.

Figur 11 zeigt gemäß einer weiteren Ausführungsform der Erfindung eine weitere mögliche Anordnung der Empfänger (2) (z.B. APDs) und Sender (10) (z.B. Laserdioden) bzw. der aktiven Detektionsflächen 126 oder Einzel-Sehraumwinkel 126a der Empfänger (im Folgenden einfach "Empfänger") und der aktiven Zonen 131 oder Einzel-Senderaumwinkel 131a der Sender (im Folgender einfach "Sender"). Die Empfänger sind in einer ersten Richtung gestreckt ausgebildet und liegen in einer "gestapelten" Anordnung in einer zur ersten Richtung senkrecht verlaufenden zweiten Richtung übereinander. Über ihre Breite hinweg, also in Richtung ihrer Längserstreckung, sind mehrere parallel zueinander liegende, ebenfalls gestreckte und jeweils alle APD-Arrayelemente (Empfänger) überdeckende Sender angeordnet, wobei die Längserstreckung der Sender um 90° gegenüber der Längserstreckung der Empfänger gedreht ist. Die Sender werden seriell, und zwar jeweils nach Ablauf der maximalen TOF, getriggert. Diese Anordnung kann in Richtung der Längserstreckung der Empfänger und/oder der Sender durch Wiederholung fortgesetzt werden. Wird die Anordnung mittels einer oder mehrerer Ablenkeinheiten im Raum bewegt, so kann der Triggerzeitpunkt für die Sender derart gelegt werden, dass sich in jeder Winkelrichtung der Ablenkung eine dichte Anordnung von Entfernungsbildpunkten ergibt. Bei der in Figur 11 dargestellten Anordnung ergeben sich 4 x 8 = 32 Bildpunkte.

Allgemein kann also eine matrix- oder gitterartige Struktur aus zueinander parallelen lang gestreckten Empfängem/Detektionsflächen/Einzel-Sehraumwinkeln und quer dazu verlaufenden, zueinander parallelen langgestreckten Sendern/Sendeflächen/Einzel-Senderaumwinkeln vorgesehen sein, wobei vorzugsweise die Sender seriell betrieben werden. Diese Matrix- oder Gitterstruktur ist im Grunde kein "Linienscanner" mehr, wie er vorstehend einmal erwähnt wurde, sondern kann bereits als eine "3D-Kamera mit Tiefenauflösung" bezeichnet werden, da eine flächige Verteilung einer relevanten Anzahl von Bildpunkten realisiert wird. Durch Bewegen dieser "Mini-Entfernungsbild-Kamera" im Raum mittels einer oder mehrerer Ablenkeinheiten können - mit ausreichend hoher Bildwiederholrate - größere Bilder aufgenommen werden, d.h. Bilder, die eine ausreichend hohe Anzahl von Bildpunkten aufweisen.

Nachstehend werden weitere mögliche Ausführungsformen der Erfindung genannt:
Erfindungsgemäß kann vorgesehen sein, dass
   - einem Empfängerverstärker (3) zwei oder mehr Komparatoren (4) nachgeschaltet sind, deren Referenz (5) unterschiedlich hoch eingestellt ist, und
   - für jeden Komparatorausgang ein Zeitmesskanal bereit gestellt wird,
   - in dem die Zeitpunkte aller Events eines Komparatorausganges mit zugehörigem Startpuls-Event gemessen werden.
Ferner kann erfindungsgemäß vorgesehen sein, dass
   - die Ablenkeinheiten (50) jeweils einen mit einem Motor (55) angetriebenen und um eine Drehachse (52) rotierenden, mit allen Spiegel-Polygonflächen (56) parallel und zentrisch zur Drehachse montierten Polygonspiegel (51)
   - und eine Winkelmesser (53 und 54) zur Messung des Ablenkwinkels umfassen.
Ferner kann erfindungsgemäß vorgesehen sein, dass
   - mindestens eine der Ablenkeinheiten als elektronisch ansteuerbarer MEMS-Spiegel-Scanner mit einer steuerbaren Ablenkrichtung ausgeführt ist (MEMS = Micro-Electro-Mechanical-System).
Ferner kann erfindungsgemäß vorgesehen sein, dass
   - zwei Ablenkeinheiten als elektronisch ansteuerbare MEMS-Spiegel-Scanner ausgeführt sind.
Ferner kann erfindungsgemäß vorgesehen sein, dass
   - die Ablenkeinheiten als elektronisch ansteuerbare Theodolit-Ablenkeinheit mit motorisch angetriebener und steuerbarer Vertikal- und Horizontalachse ausgeführt ist.
Ferner kann erfindungsgemäß vorgesehen sein, dass
   - die erste Ablenkeinheit als steuerbare Polygon-Ablenkeinheit (50) ausgeführt ist,
   - die zweite Ablenkeinheit als elektronisch ansteuerbarer Drehtisch (59) ausgeführt ist.
Ferner kann erfindungsgemäß vorgesehen sein, dass
   - als Sendeelemente (10) Halbleiter-Laserdioden mit einer oder mehreren strichförmigen aktiven Zone verwendet werden.
Ferner kann erfindungsgemäß vorgesehen sein, dass
   - die Halbleiter-Laserdioden als Laser-Array in Form eines Laserdioden-Bars oder - Streifens ausgebildet sind, bei denen die aktiven Zonen eine durch Lücken unterbrochene Linie bilden.
Ferner kann erfindungsgemäß vorgesehen sein, dass
   - die Erzeugung eines linienförmigen gepulsten Laserstrahles mit einem mit Halbleiter-Laserdioden gepumpten Festkörperlaser erfolgt,
   - dessen fast parallele Strahlung mittels einer Zylinderlinse zu einem projizierten linienförmigen Raumwinkel aufgeweitet wird.
Ferner kann erfindungsgemäß vorgesehen sein, dass
   - die Erzeugung eines linienförmigen gepulsten Laserstrahles mittels eines Ramanlasers erfolgt,
   - dessen fast parallele Strahlung mittels einer Zylinderlinse zu einem projizierten linienförmigen Raumwinkel aufgeweitet wird.
Ferner kann erfindungsgemäß vorgesehen sein, dass
   - die Erzeugung eines linienförmigen gepulsten Laserstrahles mit einer gepulst betriebenen Halbleiter-CW-Laserdiode erfolgt.
Ferner kann erfindungsgemäß vorgesehen sein, dass
   - das Array der Sendeelemente linienförmig in Reihe angeordnete LEDs umfasst.
Ferner kann erfindungsgemäß vorgesehen sein, dass
   - als Projektionssystem (47) und/oder Strahlungssammelsystem (48) abbildende optische Linsensysteme verwendet werden.
Ferner kann erfindungsgemäß vorgesehen sein, dass
   - das Projektionssystem des Laser-Arrays (16a) ein Array von Projektionslinsen umfasst,
   - jeder Laser (15a) des Sender-Arrays (16a) eine eigene Projektionslinse aufweist,
   - deren Einzelsenderaumwinkel (131a) sich zu einem linienförmigen Senderaumwinkel (130a) ergänzen,
   - deren aktive Zonen relativ zur Array-Ausrichtung insbesondere schräg gestellt sind,
   - eine Linse jeweils einem Sender-Modul (15a) zugeordnet ist,
   - die Linsen insbesondere GRIN-Linsen sein können.
Ferner kann erfindungsgemäß vorgesehen sein, dass
   - jede APD des APD-Arrays (125) relativ zur Array-Ausrichtung schräg ausgerichtet ist,
   - damit quer zur Array-Richtung ein lückenloses APD-Array gebildet wird.
Ferner kann erfindungsgemäß vorgesehen sein, dass
   - dem APD-Array (125) eine Lochmaske (34) vorgeschaltet ist,
   - jedes APD-Element des APD-Arrays durch ein Loch eines der Löcher der Lochmaske vom reflektierten Licht aus dem zugehörigen Einzelsehraumwinkel (126a) erreicht werden kann,
   - die Lochmaske (134) in der Fokusebene des Strahlungssammelsystem (48) positioniert ist,
   - die Formen der Löcher rechteckig sind,
   - insbesondere die Abmessungen der Löcher jeweils kleiner als die Abmessungen der aktiven Fläche eines APD-Array Elementes sind,
   - insbesondere die Abmessungen n-fach kleiner als der Pitch der aktiven Flächen eines APD-Array sind, wobei n eine ganze Zahl sein kann.
Ferner kann erfindungsgemäß vorgesehen sein, dass die Lochmaske
   - im Bereich der Löcher transparent ist,
   - außerhalb der Löcher, in Empfangsrichtung gesehen, und für das verwendete Licht nicht transparent ist,
   - insbesondere, von der APD-Array Seite gesehen, mit einer stark reflexionsmindernden Schicht versehen ist.
Ferner kann erfindungsgemäß vorgesehen sein, dass
   - die Lochmaske (134) auf die Deckscheibe des APD-Arrays aufgedruckt ist,
   - das Druckmaterial die verwendete Laserstrahlung stark absorbiert.
Ferner kann erfindungsgemäß vorgesehen sein, dass
   - die Löcher der Lochmaske in APD-Array-Ausrichtung n-fach kleiner als der Pitch der APD-Elemente des APD-Arrays sind,
   - n Laser auf den gleichen Einzelsehraumwinkel ausgerichtet sind,
   - die Laser derartig seriell getriggert werden, dass sich während der Ablenkung die mit der Lochmaske verkleinerten Einzelsehwinkel zu einem geschlossenen Raster seriell ergänzen.
Ferner kann erfindungsgemäß vorgesehen sein, dass
   - zwei Empfänger-Arrays (9), jeweils mit einem APD-Array als Empfangselement-Array, verwendet werden,
   - die mittels schräg stehenden, verspiegelten Lochmasken in der Fokusebene des Strahlungssammelsystem als geometrischer Strahlteiler,
   - über jeweils eine der Lochmaske nachgeschaltete Linse mit dem reflektierten Licht beschickt werden,
   - und die beiden APD-Arrays derartig justiert sind, dass sich die Einzelsehraumwinkel beider APD-Arrays zu einem dichten linienförmigen Raumwinkel ergänzen.
Ferner kann erfindungsgemäß vorgesehen sein, dass
   - zwei Sender-Arrays mit Laser-Array-Bars als Sendeelemente verwendet werden,
   - mit denen mittels verspiegelter, schrägstehender, in der Fokusfläche der Projektionsoptik (47) liegender Lochmaske (134) als geometrischen Strahlteiler zwei Kanäle gebildet werden,
   - in denen jeweils der Lochmaske eine Linse (156) nachgeschaltet ist, mit der das Licht der Laser-Array-Bars auf der Lochmaske abgebildet wird,
   - die Laser-Array-Bars derartig justiert werden, dass sich die Einzelsenderaumwinkel beider Bars zu einem lückenlosen linienförmigen Senderaumwinkel ergänzen.
Ferner kann erfindungsgemäß vorgesehen sein, dass
   - eine oder mehrere der Vorrichtungen unter einem flugfähigen Träger montiert sind,
   - deren linienförmige Seh- und Senderaumwinkel sich quer zur Flugrichtung zu einem breiten und nach unten ausgerichteten Raumwinkel ergänzen,
   - kontinuierlich Entfernungsprofile vom Boden aufgenommen und gespeichert werden,
   - insbesondere mehrere der Entfernungsprofile zu einem Entfernungsprofil gemittelt werden,
   - die Entfernungsprofile zu einem Entfernungsbild der Bodenoberfläche zusammengesetzt werden.
Ferner kann erfindungsgemäß vorgesehen sein, dass
   - eine oder mehrere der Vorrichtungen unten an einem flugfähigen Träger montiert werden,
   - die linienförmigen Seh- und Senderaumwinkel in Flugrichtung sich zu einem breiten und nach unten ausgerichteten Raumwinkel ergänzen,
   - die Sende- und Sehraumwinkel mit einer Ablenkeinheit kontinuierlich quer zur Flugrichtung abgelenkt werden,
   - dabei quer zu Flugrichtung liegende Entfernungsbildstreifen aufgenommen und gespeichert werden,
   - insbesondere die Entfernungsbildstreifen sich in Flugrichtung überlappen,
   - die Entfernungsbildstreifen zu einem Entfernungsbild der Bodenoberfläche zusammengesetzt werden.
Ferner kann erfindungsgemäß vorgesehen sein, dass
   - eine oder mehrere der Vorrichtungen auf einem Fahrzeug (65) montiert werden,
   - die linienförmigen Seh- und Senderaumwinkel senkrecht zur Fahrtrichtung (64) ausgerichtet sind,
   - mittels Ablenkeinheit (50) in Seh- und Senderaumwinkel abgelenkt werden,
   - kontinuierlich während der Fahrt Entfernungsprofile der Umgebung des Fahrzeugs aufgenommen und gespeichert werden,
   - deren Ausrichtung horizontal ungleich 90° zur Fahrtrichtung festgesetzt ist,
   - die zu einem Entfernungsbild der Umgebung des Fahrzeuges zusammengesetzt werden.
Ferner kann erfindungsgemäß vorgesehen sein, dass
   - im Stand durch Drehen eines Drehtisches die Bildaufnahmevorrichtung um die vertikale Achse gedreht wird,
   - kontinuierlich Entfernungsprofile aufgenommen und gespeichert werden.
   - die Entfernungsprofile zu einem Entfernungsbild in sphärischen Koordinaten der Umgebung des Fahrzeuges zusammengesetzt werden.
Ferner kann erfindungsgemäß vorgesehen sein, dass
   - jeweils n Laser auf den gleichen Einzelsehraumwinkel ausgerichtet sind,
   - die n Laser derartig seriell getriggert werden, dass sich während der Ablenkung die mit einer Lochmaske verkleinerten Einzelsehwinkel zu einem geschlossenem Raster seriell ergänzen,
   - Entfernungsprofile mit n-fach höherer Auflösung gemessen werden,
   - die Entfernungsprofile zu Entfernungsbildern der Umgebung zusammengesetzt werden
Ferner kann erfindungsgemäß vorgesehen sein, dass
   - Begrenzungskoordinaten eines Raumwinkelbereiches eingegeben werden,
   - durch Überstreichen des voreingestellten Raumwinkelbereiches das zugehörige Entfernungsbild aufgenommen und gespeichert wird.
Ferner kann erfindungsgemäß vorgesehen sein, dass
   - Sende- und Sehraumwinkel horizontal ausgerichtet sind,
   - die Vorrichtung mit einem Drehtisch um eine vertikale Drehachse motorisch gedreht wird,
   - Begrenzungskoordinaten eines Raumwinkelbereiches eingegeben werden,
   - durch Überstreichen des voreingestellten Raumwinkelbereiches das zugehörige Entfernungsbild aufgenommen und gespeichert wird.
Ferner kann erfindungsgemäß vorgesehen sein, dass
   - die Vorrichtung mit einer Material ab- oder auftragenden Arbeitsmaschine (71) verbunden wird, der Arbeitsraumwinkel (72) der Vorrichtung auf den Arbeitsbereich der Arbeitsmaschine ausgerichtet wird,
   - kontinuierlich Entfernungsbilder des aktuellen Arbeitsbereiches aufgenommen werden,
   - Oberflächenkoordinaten einer Vergleichsfläche eingegeben werden,
   - die Entfernungsbilder entsprechend den Arbeitszielen der Maschine ausgewertet werden,
   - die Maschine entsprechend den Auswerteergebnissen gesteuert wird.
Ferner kann erfindungsgemäß vorgesehen sein, dass
   - die Vorrichtung oberhalb einer oder mehrerer Arbeitsmaschinen montiert wird,
   - der Raumwinkel der Vorrichtung, in der Entfernungsbilder aufgenommen werden können, auf einen zu überwachenden Bewegungsbereich der Arbeitsmaschine(n) ausgerichtet wird,
   - dabei der Raumwinkel größer als der zu überwachende Bewegungsbereich der Arbeitsmaschinen gewählt wird,
   - kontinuierlich Entfernungsbilder aufgenommen werden,
   - 3-dimensionale Sicherheitsvolumen vordefiniert und gespeichert sind,
   - die Entfernungsbilder daraufhin ausgewertet werden, ob ein Objekt in den von der Vorrichtung überwachten Raumwinkel soweit eindringt oder eingedrungen ist, dass es im definierten Sicherheitsvolumen detektiert wird,
   - bei Detektion eines Objektes im Sicherheitsvolumen ein Signal abgeleitet wird,
   - das Signal zur Abschaltung einer oder mehrerer Arbeitsmaschinen oder zur Beschränkung der Bewegungsbereiche der Arbeitsmaschinen verwendet wird.
Ferner kann erfindungsgemäß vorgesehen sein, dass
   - der Raumwinkel, in dem das Entfernungsprofil oder -bild aufgenommen wird, zusätzlich mit einer CCD Kamera aufgenommen wird,
   - die Information Farbe, Helligkeit, Entfernung, Leistung und/oder Pulsbreite zu einer Entfernungsbildinformation zusammengefasst wird.

### Bezugszeichenliste

- 1: optischer Puls
- 2: Empfangselement, Avalanche-Photodiode
- 3: Verstärker des Empfängers
- 4: Komparator des Empfängers
- 5: Referenz des Komparators
- 7: Ausgangssignal des Empfängers, Eingangssignal für Zeitmesskanäle
- 7a: Ausgänge des Multiplexers
- 8: Empfängermodul
- 9: Empfänger-Array
- 10: Sendelement, Halbleiter-Laserdiode
- 11: Strompulser
- 12: Triggersignal
- 13: Startpuls
- 13a: Ausgänge des Multiplexers
- 14: Laserstrahl, optischer Laserpuls
- 15: Laser-Modul
- 16: Laser-Array
- 17: Messablaufsteuerung
- 18: Multiplexer
- 19: Multiplexer
- 20: Input-Mischer
- 21: Pulsweiche
- 22: TP-Separator
- 23: Zähler
- 24: Delay-Array
- 25: Decoder
- 26: Speicher
- 27: Interface
- 28: Mikroprozessorsystem
- 29: Zeitmesssteuerung
- 30: Clock-Unit
- 31: Sub-Array-Element
- 32: Zeitmess-IC
- 33: Mess-Clock

- 47: Projektionsoptik
- 48: Strahlungssammelsystem, Sammeloptik

- 50: Ablenkeinheit
- 51: Polygonspiegel
- 52: Drehachse
- 53: Code-Wheel
- 54: Winkelreader
- 55: Antriebsmotor
- 56: Spiegelfläche
- 59: Drehtisch
- 61: Vorrichtung zur Entfernungsbildaufnahme
- 62: Quer-Ablenkung
- 63: Längs-Ablenkung
- 64: Fahrtrichtung
- 65: Trägerfahrzeug
- 66: Flugzeug
- 67: Flugrichtung
- 68: Vorrichtung mit zwei Polygon-Ablenkeinheiten
- 69: Sicherheitsvolumen
- 70: Arbeitsmaschine
- 71: Raumwinkel
- 72: Raumwinkel

- 73: Startpuls
- 74: Maskierungssignal
- 75: Analoges Echosignal
- 76: Rauschen des Empfängers
- 77: Analoges Empfängersignal
- 79: Resultierendes Signal
- 80: Pulskette
- 81: Positive Flanke, up-Event
- 82: Negative Flanke, down-Event
- 83: Mess-Clock-Signal
- 84: Up-TP-Signal
- 85: Teilperiode up-Event
- 86: Zählzahl up-Event
- 87: Down-TP-Signal
- 88: Teilperiode down-Event
- 89: Zählzahl down-Event
- 90: Überlappung
- 91: Überlappung

- 125: APD-Array
- 125a: Sehraumwinkel
- 126: Aktive Fläche
- 126a: Einzelsehraumwinkel
- 127: Pitch
- 128: Gap (Lücke)
- 129: Breite der aktiven Fläche
- 130: Laserdioden-Array
- 130a: Senderaumwinkel
- 131: Aktive Fläche
- 131a: Einzelsenderaumwinkel
- 132: Pitch
- 133: Gap (Lücke)
- 134: Lochmaske
- 139: Segment
- 142: Array aus mehreren Segmenten
- 149: Raumwinkelsegment
- 156: Linse
- 158: rückreflektiertes Licht

## Patentansprüche

1. Verfahren zur Aufnahme von eine große Anzahl von Entfernungsbildpunkten aufweisenden Entfernungsbildern,
bei dem für jedes aufzunehmende Entfernungsbild mit einer Mehrzahl von in einem Array (130) angeordneten Sendern (15) jeweils elektromagnetische Strahlung in Form von Sendepulsen (14) ausgesandt wird und reflektierte Echopulse (1) mit einer Mehrzahl von in einem Array (125) angeordneten Empfängern (2) nachgewiesen werden, wobei die jeweils einen Entfernungsbildpunkt bildenden Entfernungen von Objekten, an denen die Sendepulse (14) reflektiert werden, durch Bestimmen der Pulslaufzeit gemessen werden, wobei mit einer dem Empfänger-Array (125) nachgeordneten Zeitmesseinrichtung für jedes aufzunehmende Entfernungsbild eine Vielzahl von Einzelmessungen durchgeführt wird, bei denen jeweils eine Pulskette verarbeitet wird, die einen von dem jeweiligen Sendepuls (14) abgeleiteten logischen Startpuls (73) und zumindest einen aus einem Echopuls (1) oder einem Rauschpuls (76) gebildeten logischen Empfängerpuls (79) umfasst,
wobei die logischen Empfängerpulse (79) jeweils mittels wenigstens einer Referenz (5) des Empfängers (2) erzeugt werden, die von den zugrunde liegenden Echopulsen oder Rauschpulsen durchbrochen wird, wobei ein Überschreiten der Referenz (5) die ein up-Event (81) definierende positive Flanke des Empfängerpulses bildet und ein Unterschreiten der Referenz die ein down-Event (82) definierende negative Flanke des Empfängerpulses bildet,
wobei für jedes aufzunehmende Entfernungsbild
- die zugehörigen Pulsketten (80) gebildet werden, indem die Startpulse (73) und die zugehörigen Empfängerpulse (79) jeweils zeitrichtig zusammengeführt werden,
- die auf diese Weise gebildeten Pulsketten (80) auf ein von der Zeitmesseinrichtung gebildetes Array von Zeitmesskanälen verteilt werden, und
- für jeden Zeitmesskanal
- die Zeitspannen bestimmt werden, die jeweils bezogen auf einen Zeitpunkt vor dem Startpuls (73) bis zu einem Empfängerpuls (79) verstreichen, indem für jedes up-Event (81) und/oder jedes down-Event (82) jeweils zumindest die Taktpulse gezählt werden, die von einem zentralen Taktgeber (33) mit bekannter Frequenz bereitgestellt werden, und
- die Zählergebnisse in einer ihre jeweilige Zeitinformation berücksichtigenden Anordnung als Event-Liste gespeichert werden,
und wobei die gespeicherten Event-Listen aller Zeitmesskanäle ausgelesen und ausgewertet werden, um jeweils die in den Event-Listen enthaltenen Zeitinformationen in den Entfernungsbildpunkten entsprechende Entfernungswerte umzurechnen,
**dadurch gekennzeichnet,**
**dass** bei der Bestimmung der Zeitspannen jeweils sowohl die verstrichenen ganzen Perioden der Taktpulse gezählt als auch die zum Zeitpunkt des up-Events (81) zuviel gezählte und/oder zum Zeitpunkt des down-Events (82) zuviel gezählte Teilperiode (85, 88) bestimmt werden, so dass für jedes up-Event (81) und/oder für jedes down-Event (82) zwei Teilergebnisse erhalten werden.

2. Verfahren nach Anspruch 1,
**dadurch gekennzeichnet,**
**dass** die Referenzen (5) der Empfänger (2) jeweils im Rauschen liegen, so dass die logischen Empfängerpulse (79) auf Echopulse und Rauschpulse zurückgehen.

3. Verfahren nach Anspruch 1 oder 2,
**dadurch gekennzeichnet,**
**dass** jeweils bis zu einem vorgebbaren Zeitpunkt nach dem Startpuls (73) die Verarbeitung von Empfängerpulsen (79) unterdrückt und bei der Bildung der Pulskette (80) in die hierdurch entstehende Zeitlücke der Startpuls (73) zeitrichtig gelegt wird.

4. Verfahren nach einem der vorhergehenden Ansprüche,
**dadurch gekennzeichnet,**
**dass** jeder Zeitmesskanal in zwei Zweige aufgeteilt ist, wobei in dem einen Zweig die up-Events (81) und in dem anderen Zweig die down-Events (82) gemessen werden.

5. Verfahren nach einem der vorkergehenden Ansprüche,
**dadurch gekennzeichnet,**
**dass** die Teilperioden (85, 88) mittels TDCs (Time-to-Digital-Converter) gemessen werden, und/oder
**dass** die Teilperioden (85, 86) jeweils als Vielfache einer vorgegebenen Verzögerungszeit gemessen werden, so dass für jedes up-Event (81) und/oder für jedes down-Event (82) ein die Anzahl verstrichener ganzer Taktpuls-Perioden angebendes erstes Zählergebnis und ein die Anzahl verstrichener Verzögerungszeiten in einer Teilperiode (85, 88) angebendes zweites Zählergebnis erhalten werden.

6. Verfahren nach Anspruch 5,
**dadurch gekennzeichnet,**
**dass** zur Kompensation unerwünschter Veränderungen der vorgegebenen Verzögerungszeit die Verzögerungszeit bezüglich der Periode des zentralen Taktgebers (33) kalibriert wird.

7. Verfahren nach einem der vorhergehenden Ansprüche,
**dadurch gekennzeichnet,**
**dass** für jedes aufzunehmende Entfernungsbild eine Anzahl von Zeitmesskanälen vorgesehen ist, die kleiner ist als die Anzahl von zu verarbeitenden Pulsketten (80), und dass die zu verarbeitenden Pulsketten (80) gruppenweise nacheinander den Zeitmesskanälen zugeführt werden.

8. Verfahren nach einem der vorhergehenden Ansprüche,
**dadurch gekennzeichnet,**
**dass** die Pulse einer Pulskette (80) auf mehrere Zeitmesskanäle verteilt werden, so dass wenigstens zwei Pulse der Pulskette (80) in verschiedenen Zeitmesskanälen verarbeitet werden.

9. Verfahren nach einem der vorhergehenden Ansprüche,
**dadurch gekennzeichnet ,**
**dass** eine Pulskette (80) parallel in mehreren Zeitmesskanälen verarbeitet wird, wobei vorzugsweise den Zeitmesskanälen die Taktpulse des zentralen Taktgebers (33) phasenverschoben zugeführt werden.

10. Verfahren nach einem der vorhergehenden Ansprüche,
**dadurch gekennzeichnet,**
**dass** zur Durchführung so genannter "Burst"-Messungen jeweils mehrere von dem gleichen Sender-Empfänger-Paar stammende und somit den gleichen Entfernungsbildpunkt betreffende Einzelmessungen gemeinsam wie eine Einzelmessung verarbeitet, bei einer sich an die Verarbeitung anschließenden Auswertung jedoch wieder separat behandelt werden.

11. Verfahren nach einem der vorhergehenden Ansprüche,
**dadurch gekennzeichnet,**
**dass** insbesondere dann, wenn aufgrund entsprechend eingestellter Empfänger-Referenzen (5), insbesondere auf einen Wert oberhalb 4,5 NEP, zusätzlich zu Echopulsen (1) Rauschpulse (76) vorhanden sind, mehrere nacheinander von dem gleichen Sender-Empfänger-Paar stammende und somit den gleichen Entfernungsbildpunkt betreffende Einzelmessungen gemittelt werden.

12. Verfahren nach einem der vorhergehenden Ansprüche,
**dadurch gekennzeichnet,**
**dass** insbesondere im Fall so genannter "Burst"-Messungen zur Mittelung der Einzelmessungen
- wenigstens ein Zeitrasterspeicher bereitgestellt wird, der in eine Vielzahl von Speicherzellen unterteilt ist, denen jeweils ein Zeitfenster zugeordnet ist,
wobei ein Zeitfenster der Dauer eines ganzen Taktpulses des zentralen Taktgebers (33) oder der Dauer einer Verzögerungszeit entspricht, als deren Vielfache jeweils die Taktpulse und Teilperioden (85, 88) gemessen werden,
- die Event-Listen der Einzelmessungen nacheinander in den gleichen Zeitrasterspeicher übertragen werden, indem ein up-Event (81) positiv und ein down-Event (82) negativ gewertet wird, oder umgekehrt,
- bei der Mittelung für jedes Zeitfenster die Anzahl von Durchbrechungen der Empfänger-Referenz (5) akkumuliert wird.

13. Verfahren nach Anspruch 12,
**dadurch gekennzeichnet,**
**dass** im Anschluss an die Mittelung der Einzelmessungen der Inhalt des Zeitrasterspeichers zu einer Amplitudenfunktion integriert und auf die Amplitudenfunktion eine Nachweisschwelle angewendet wird, und dass in der Amplitudenfunktion für die Echopulse (1) die zugehörige Objektentfernung jeweils auf der Basis wenigstens eines Zeitpunktes bestimmt wird, an dem die Nachweisschwelle durchbrochen wird.

14. Verfahren nach Anspruch 12 oder 13,
**dadurch gekennzeichnet,**
**dass** in der Amplitudenfunktion die ein Maß für die Leistung des entsprechenden Echopulses (1) darstellende Pulsbreite zur Fehlerkompensation verwendet wird, insbesondere durch Korrektur des Zeitpunktes, an dem die Nachweisschwelle durchbrochen, insbesondere überschritten, wird.

15. Verfahren nach einem der Ansprüche 12 bis 14,
**dadurch gekennzeichnet,**
**dass** eine Grob-Amplitudenfunktion bestimmt wird, indem die Integration lediglich für Zählwerte des Zeitrasterspeichers durchgeführt wird, die jeweils eine Anzahl verstrichener ganzer Taktpulse repräsentieren, dass anhand der Grob-Amplitudenfunktion besondere, auf Echopulse zurückgehende Teilbereiche identifiziert werden, und dass die Integration des Inhalts des Zeitrasterspeichers zur Amplitudenfunktion lediglich für die identifizierten Teilbereiche durchgeführt wird.

16. Verfahren nach einem der Ansprüche 13 bis 15,
**dadurch gekennzeichnet,**
**dass** die Nachweisschwelle in Abhängigkeit von der Empfänger-Referenz (5) eingestellt wird, insbesondere in Abhängigkeit von dem Maß einer Reduzierung der Empfänger-Referenz (5) gegenüber einem Wert von 4,5 NEP.

17. Verfahren nach einem der vorhergehenden Ansprüche,
**dadurch gekennzeichnet,**
**dass** die Referenz (5) zumindest eines Empfängers (2) in Abhängigkeit von den mit dem Empfänger (2) gemessenen Entfernungen verändert, insbesondere mit zunehmender Entfernung reduziert, wird.

18. Verfahren nach einem der vorhergehenden Ansprüche,
**dadurch gekennzeichnet ,**
**dass** die Sender (15) des Sender-Arrays (130) jeweils die ausgesandte Strahlung in einem Einzel-Senderaumwinkel (131a) aussenden und sich die Einzel-Senderaumwinkel (131a) zu einem Gesamt-Senderaumwinkel (130a) ergänzen, und
**dass** die Empfänger (2) des Empfänger-Arrays (125) jeweils die reflektierte Strahlung aus einem Einzel-Empfangsraumwinkel (126a) empfangen und sich die Einzel-Empfangsraumwinkel (126a) zu einem Gesamt-Empfangsraumwinkel (125a) ergänzen, wobei der Gesamt-Empfangsraumwinkel (125a) den Gesamt-Senderaumwinkel (130a) umfasst und voneinander unterscheidbare Überdeckungen der Einzel-Empfangsraumwinkel (126a) und Einzel-Senderaumwinkel (131a) vorhanden sind, wobei jede Überdeckung einem Entfernungsbildpunkt entspricht, und
**dass** zur Bildung voneinander unterscheidbarer Entfernungsbildpunkte die Überdeckungen für die Messung in der Zeitmesseinrichtung gruppiert werden.

19. Verfahren nach Anspruch 18,
**dadurch gekennzeichnet,**
**dass** die Gruppierung in räumlicher und/oder in zeitlicher Hinsicht erfolgt,
wobei im Fall einer Überdeckung mehrerer Einzel-Empfangsraumwinkel (126a) mit einem Einzel-Senderaumwinkel (131a) eine räumliche Gruppierung erfolgt und die zugehörigen Empfänger (2) zeitlich parallel arbeiten, und
wobei im Fall einer Überdeckung eines Einzel-Empfangsraumwinkels (126a) mit mehreren Einzel-Senderaumwinkeln (131a) eine zeitliche Gruppierung erfolgt und die zugehörigen Sender zeitlich nacheinander aktiviert werden.

20. Verfahren nach Anspruch 18 oder 19,
**dadurch gekennzeichnet,**
**dass** diejenigen unterscheidbaren Entfernungsbildpunkte, welche die insgesamt detektierbare Strahlung eines Senders (15) repräsentieren, zu einer Untergruppe gruppiert werden, und
**dass** so viele Untergruppen zu einer Gruppe gruppiert werden, dass die Anzahl der in der Gruppe vorhandenen unterscheidbaren Entfernungsbildpunkte höchstens gleich der Anzahl von Zeitmesskanälen der Zeitmesseinrichtung ist.

21. Verfahren nach einem der Ansprüche 18 bis 20,
**dadurch gekennzeichnet,**
**dass** in Abhängigkeit von dem Verhältnis aus der Anzahl der insgesamt vorhandenen unterscheidbaren Entfernungsbildpunkte und der Anzahl der Zeitmesskanäle die Gruppen in den Zeitmesskanälen nacheinander, wenn die Anzahl der Zeitmesskanäle für die insgesamt vorhandenen unterscheidbaren Entfernungsbildpunkte nicht ausreicht, oder
parallel, wenn für die insgesamt vorhandenen unterscheidbaren Entfernungsbildpunkte ausreichend Zeitmesskanäle vorhanden sind,
verarbeitet werden.

22. Verfahren nach einem der vorhergehenden Ansprüche,
**dadurch gekennzeichnet,**
**dass** insbesondere zur Unterdrückung des Störstrahlungsanteils und/oder zur Reduzierung des Dynamikbereiches die Empfänger (2), insbesondere die aktiven Detektionsflächen (126) der Empfänger (2), maskiert werden, insbesondere mittels einer den Empfängern (2) vorgelagerten Lochmaske (134).

23. Verfahren nach einem der vorhergehenden Ansprüche,
**dadurch gekennzeichnet,**
**dass** eine den Empfängern (2) vorgelagerte Lochmaske (134) in der Fokusebene einer Projektionsoptik (47) der Empfänger (2) angeordnet wird.

24. Verfahren nach einem der vorhergehenden Ansprüche,
**dadurch gekennzeichnet,**
**dass** eine von den Entfernungsbildpunkten gebildete, insbesondere linien- oder streifenförmige Aufnahmefläche im Raum bewegt und jedem Empfänger (2) ein Loch einer vorgelagerten Lochmaske (134) zugeordnet ist, das in Bewegungsrichtung der Aufnahmefläche kleiner ist als der Empfänger (2), insbesondere als die aktive Detektionsfläche (126) des Empfängers (2), wobei zur Erhöhung der Auflösung dem Empfänger (2) eine Mehrzahl von Sendern (15) zugeordnet ist, die in Abstimmung auf die Bewegung der Aufnahmefläche nacheinander aktiviert werden.

25. Verfahren nach einem der Ansprüche 22 bis 24
**dadurch gekennzeichnet,**
**dass** in Bewegungsrichtung der Aufnahmefläche die Empfänger (2) jeweils um ein ganzzahliges Vielfaches größer sind als die Löcher der vorgelagerten Lochmaske (134) und die Anzahl der den Empfängern (2) jeweils zugeordneten Sender (15) gleich diesem ganzzahligen Vielfachen ist.

26. Verfahren nach einem der vorhergehenden Ansprüche,
**dadurch gekennzeichnet,**
**dass** mehrere Sender-Teilarrays und/oder mehrere Empfänger-Teilarrays mittels wenigstens einer Lochmaske (134) derart zusammengeführt werden, dass zwischen den Sendern (15), insbesondere den aktiven Sendeflächen (131) der Sender (15), und/oder zwischen den Empfängern (2), insbesondere den aktiven Detektionsflächen (126) der Empfänger (2), vorhandene Lücken (128, 133) zumindest teilweise geschlossen werden.

27. Verfahren nach einem der vorhergehenden Ansprüche,
**dadurch gekennzeichnet,**
**dass** die Strahlung der Sender (15) des Sender-Arrays (130) derart ausgesendet wird, dass in dem Gesamt-Senderaumwinkel (130a) die ausgesendete Strahlung auf wenigstens einer, vorzugsweise auf einer einzigen, Aufnahmelinie liegt.

28. Verfahren nach einem der vorhergehenden Ansprüche,
**dadurch gekennzeichnet,**
**dass** eine von den Entfernungsbildpunkten gebildete, insbesondere linien- oder streifenförmige Aufnahmefläche im Raum bewegt wird, insbesondere mit der Vorrichtung durch Bewegen der, insbesondere an einem bewegbaren Träger (65, 66, 70) z.B. in Form eines Fahrzeuges oder Flugzeuges angebrachten, Vorrichtung als Ganzes und/oder relativ zur Vorrichtung mittels wenigstens einer Strahlungsablenkeinheit (50), insbesondere wenigstens eines um zumindest eine Achse schwenk-, dreh- oder kippbaren Ablenkspiegels.

29. Verfahren nach Anspruch 28,
**dadurch gekennzeichnet,**
**dass** die Aufnahmefläche mittels zweier Strahlungsablenkeinheiten (50) im Raum bewegbar ist, deren Kipp-, Schwenk- oder Drehachsen senkrecht zueinander verlaufen.

30. Verfahren nach einem der Ansprüche 28 bis 29,
**dadurch gekennzeichnet,**
**dass** die Aufnahmefläche linien- oder streifenförmig ist und die Aufnahmefläche in Richtung ihrer Längserstreckung (63) und/oder senkrecht (62) dazu bewegt wird.

31. Verfahren nach einem der vorhergehenden Ansprüche,
**dadurch gekennzeichnet,**
**dass** in den aufgenommenen Entfernungsbildern mittels einer Auswertesoftware nach vorgegebenen Objekten gesucht wird (Objekterkennung) und die gefundenen Objekte anhand nacheinander aufgenommener Entfernungsbilder verfolgt werden (Objektverfolgung), und dass mittels einer Steuerungssoftware eine Maschine (70) in Abhängigkeit von den Ergebnissen der Objekterkennung und/oder Objektverfolgung gesteuert wird.

32. Verfahren nach einem der vorhergehenden Ansprüche,
**dadurch gekennzeichnet,**
**dass** eine Zeitmesseinrichtung oder eine Vorrichtung gemäß einem der nachstehenden Ansprüche verwendet wird.

33. Zeitmesseinrichtung für eine Vorrichtung zur Aufnahme von eine große Anzahl von Entfernungsbildpunkten aufweisenden Entfernungsbildern, die
- eine Mehrzahl von in einem Array (130) angeordneten Sendern (15) zur Aussendung elektromagnetischer Strahlung in Form von Sendepulsen (14), und
- eine Mehrzahl von in einem Array (125) angeordneten Empfängern (2) zum Nachweis von reflektierten Echopulsen (1) umfasst,
wobei jedem Empfänger (2) ein Verstärker (3) zur Erzeugung eines Echopulse (1) und Rauschpulse (76) enthaltenden analogen Empfängersignals (77) und eine Einrichtung mit wenigstens einer Referenz (5) zugeordnet sind, mit der aus dem analogen Empfängersignal (77) eine Folge von logischen Empfängerpulsen (79) erzeugbar ist, die jeweils auf einen die Referenz (5) überschreitenden Echopuls (1) oder Rauschpuls (76) zurückgehen, wobei ein Überschreiten der Referenz (5) die ein up-Event (81) definierende positive Flanke des Empfängerpulses bildet und ein Unterschreiten der Referenz die ein down-Event (82) definierende negative Flanke des Empfängerpulses bildet,
- wobei die Zeitmesseinrichtung zur Messung der jeweils einen Entfernungsbildpunkt bildenden Entfernungen von Objekten, an denen die Sendepulse (14) reflektiert werden, durch Bestimmen der Pulslaufzeit ausgebildet ist,
wobei die Zeitmesseinrichtung dazu ausgebildet ist, für jedes aufzunehmende Entfernungsbild eine Vielzahl von zugehörigen Einzelmessungen durchzuführen, bei denen jeweils eine Pulskette (80) verarbeitet wird, die einen von dem jeweiligen Sendepuls (14) abgeleiteten logischen Startpuls (73) und zumindest einen logischen Empfängerpuls (79) umfasst und,
wobei die Zeitmesseinrichtung umfasst
- eine Einrichtung (20) zur Bildung der Pulsketten (80), die dazu ausgebildet ist, die Startpulse (73) und die zugehörigen Empfängerpulse (79) jeweils zeitrichtig zusammenzuführen,
- ein Array von Zeitmesskanälen, die jeweils zur Verarbeitung von Startpulsen (73) und Empfängerpulsen (79) ausgebildet sind,
- eine Einrichtung (21), die zur Verteilung der Pulsketten (80) auf die Zeitmesskanäle ausgebildet ist,
- einen zentralen Taktgeber (33), der für die Zeitmesskanäle Taktpulse mit bekannter Frequenz bereitstellt,
- für jeden Messkanal eine Einrichtung, die zur Bestimmung von Zeitspannen, die jeweils bis zu einem Empfängerpuls (79) verstreichen, ausgebildet ist und wenigstens einen Zähler (23) umfasst, der für jedes up-Event (81) und/oder jedes down-Event (82) jeweils zumindest die Taktpulse des zentralen Taktgebers (33) zählt, die bezogen auf den Startpuls (73) bis zu dem betreffenden Empfängerpuls (79) verstreichen,
- einer Einrichtung, mit der die Zählergebnisse in einer ihre jeweilige Zeitinformation berücksichtigenden Anordnung als Event-Liste gespeichert werden, und
- einer Einrichtung zum Auslesen und Auswerten der gespeicherten Event-Listen aller Zeitmesskanäle, die dazu ausgebildet ist, die in den Event-Listen enthaltenen Zeitinformationen in den Entfernungsbildpunkten entsprechende Entfernungswerte umzurechnen,
**dadurch gekennzeichnet,**
**dass** die Einrichtungen zur Bestimmung der Zeitspannen jeweils dazu ausgebildet sind, sowohl die verstrichenen ganzen Perioden der Taktpulse zu zählen als auch die zum Zeitpunkt des up-Events (81) zuviel gezählte und/oder zum Zeitpunkt des down-Events (82) zuviel gezählte Teilperiode (85, 88) zu bestimmen.

34. Zeitmesseinrichtung nach Anspruch 33,
**dadurch gekennzeichnet,**
**dass** jeder Zeitmesskanal in zwei Zweige aufgeteilt ist, wobei der eine Zweig zur Verarbeitung der up-Events (81) und der andere Zweig zur Verarbeitung der down-Events (82) ausgebildet ist.

35. Zeitmesseinrichtung nach Anspruch 33 oder 34,
**dadurch gekennzeichnet,**
**dass** zur Bestimmung der Teilperioden (85, 88) die Einrichtungen jeweils Mittel zur Bildung von Teilperioden-Pulsen (84, 87), Mittel zur Verzögerung der Teilperioden-Pulse (84, 87)und Mittel zur Bestimmung der Breite der Teilperioden-Pulse (84, 87) umfassen.

36. Zeitmesseinrichtung nach Anspruch 35,
**dadurch gekennzeichnet,**
**dass** zur Bildung der Teilperioden-Pulse (84, 87) Separatoren (22) vorgesehen sind.

37. Zeitmesseinrichtung nach einem der Ansprüche 33 bis 36,
**dadurch gekennzeichnet,**
**dass** zur Messung der Teilperioden-Pulse (84, 87) TDCs (Time-to-Digital-Converter) vorgesehen sind, und/oder dass zur Messung der Teilperioden-Pulse (84, 87) Delay-Arrays (24), die Delay-Elemente insbesondere in Form mehrerer seriell geschalteter Inverter oder Doppelinverter mit einer vorgegebenen Verzögerungszeit umfassen, sowie Decoder (25) vorgesehen sind, die dazu ausgebildet sind, Zählergebnisse, die jeweils die Anzahl von in einer Teilperiode (85, 88) verstrichenen Verzögerungszeiten angeben, in insbesondere binär kodierte Informationen umzusetzen.

38. Zeitmesseinrichtung nach Anspruch 37,
**dadurch gekennzeichnet,**
**dass** Latch-Arrays vorgesehen sind, die dazu ausgebildet sind, die kodierten Informationen der Decoder (25) vorübergehend zu speichern.

39. Zeitmesseinrichtung nach einem der Ansprüche 33 bis 38,
**dadurch gekennzeichnet,**
**dass** die Einrichtung (21), die dazu ausgebildet ist, für jedes aufzunehmende Entfernungsbild die gebildeten Pulsketten (80) gemäß einem vorgebbaren Messablauf auf das Array von Zeitmesskanälen zu verteilen, in zumindest einem, vorzugsweise wahlweise in jedem, der folgenden Mess-Modi betreibbar ist:
(i) mittels einer Einrichtung, insbesondere einer Multiplexer-Einrichtung, sind die zu verarbeitenden Pulsketten (80) gruppenweise nacheinander den Zeitmesskanälen zuführbar;
(ii) die Pulse einer Pulskette (80) sind seriell verarbeitbar und auf mehrere Zeitmesskanäle verteilbar, so dass wenigstens zwei Pulse der Pulskette (80) in verschiedenen Zeitmesskanälen verarbeitet werden können;
(iii) eine Pulskette (80) ist parallel in mehreren Zeitmesskanälen verarbeitbar, wobei vorzugsweise eine Einrichtung vorgesehen ist, mit der den Zeitmesskanälen die Taktpulse des zentralen Taktgebers (33) phasenverschoben zuführbar sind;
(iv) mehrere von dem gleichen Sender-Empfänger-Paar stammende und somit den gleichen Entfernungsbildpunkt betreffende Einzelmessungen sind gemeinsam wie eine Einzelmessung verarbeitbar (so genannte "Burst"-Messung).

40. Zeitmesseinrichtung nach einem der Ansprüche 33 bis 39,
**dadurch gekennzeichnet,**
**dass** die Anzahl der Zeitmesskanäle kleiner ist als die Anzahl der Empfänger (2).

41. Zeitmesseinrichtung nach einem der Ansprüche 33 bis 40,
**dadurch gekennzeichnet,**
**dass** eine Einrichtung zur Messablaufsteuerung (17) vorgesehen ist, die dazu ausgebildet ist, den Rahmen der Zeitmessung zu steuern.

42. Zeitmesseinrichtung nach einem der Ansprüche 33 bis 41,
**dadurch gekennzeichnet,**
**dass** eine Einrichtung zur Zeitmesssteuerung (29) vorgesehen ist, die dazu ausgebildet ist, die Bestimmung der Zeitspannen in den Zeitmesskanälen in Abhängigkeit von einer Messablaufsteuerung (17) zu steuern.

43. Zeitmesseinrichtung nach einem der Ansprüche 33 bis 42,
**dadurch gekennzeichnet,**
**dass** die Zeitmesseinrichtung wenigstens einen IC-Baustein (32) umfasst, in den zumindest mehrere ein Array bildende Zeitmesskanäle, insbesondere
- Zähler (23) zum Zählen der bis zu dem betreffenden Empfängerpuls (79) verstrichenen ganzen Perioden der Taktpulse,
- Separatoren (22) zur Bildung von Teilperioden-Pulsen (84, 87),
- Delay-Arrays (24) zur Verzögerung der Teilperioden-Pulse (84, 87),
- Decoder (25) zur Umsetzung der Anzahl von in einer Teilperiode (85, 88) verstrichenen Verzögerungszeiten in insbesondere binär kodierte Informationen,
- Latch-Arrays zur vorübergehenden Speicherung der kodierten Informationen der Decoder (25),
- Speicherbereiche (26),
- eine den Speicherbereichen (26) zugeordnete Schnittstelle (27),
integriert sind.

44. Zeitmesseinrichtung nach Anspruch 43,
**dadurch gekennzeichnet,**
**dass** in den IC-Baustein (32) zusätzlich zu den Zeitmesskanälen jeweils zumindest teilweise die Einrichtung zur Bildung der Pulsketten (80), die Einrichtung zur Verteilung der Pulsketten (80) und die Einrichtung zur Zeitmesssteuerung integriert sind.

45. Zeitmesseinrichtung nach Anspruch 43 oder 44,
**dadurch gekennzeichnet,**
**dass** eine Einrichtung zur Messablaufsteuerung (17), eine Einrichtung, insbesondere eine Multiplexer-Einrichtung, zur gruppenweisen Zuführung der zu verarbeitenden Pulsketten (80), der zentrale Taktgeber (33) und/oder ein Mikroprozessorsystem (28) zum Auslesen und Auswerten der gespeicherten Event-Listen aller Zeitmesskanäle separat von dem IC-Baustein (32) vorgesehen sind.

46. Zeitmesseinrichtung nach einem der Ansprüche 33 bis 45,
**dadurch gekennzeichnet ,**
**dass** die Zeitmesseinrichtung dazu ausgebildet ist, mehrere von dem gleichen Sender-Empfänger-Paar stammende und somit den gleichen Entfernungsbildpunkt betreffende Einzelmessungen zu mitteln.

47. Zeitmesseinrichtung nach einem der Ansprüche 33 bis 46,
**dadurch gekennzeichnet ,**
**dass** die Zeitmesseinrichtung einen Mikroprozesser (28) umfasst, der dazu ausgebildet ist, die gespeicherten Event-Listen aller Zeitmesskanäle auszulesen und die in den Event-Listen enthaltenen Zeitinformationen in den Entfernungsbildpunkten entsprechende Entfernungswerte umzurechnen.

48. Zeitmesseinrichtung nach Anspruch 47,
**dadurch gekennzeichnet,**
**dass** der Mikroprozessor (28) dazu ausgebildet ist,
- mehrere nacheinander von dem gleichen Sender-Empfänger-Paar stammende und somit den gleichen Entfernungsbildpunkt betreffende Einzelmessungen unter Verwendung wenigstens eines Zeitrasterspeichers zu mitteln,
- im Anschluss an die Mittelung der Einzelmessungen den Inhalt des Zeitrasterspeichers zu einer Amplitudenfunktion zu integrieren,
- auf die Amplitudenfunktion eine Nachweisschwelle anzuwenden, und
- in der Amplitudenfunktion für die Echopulse (1) die zugehörige Objektentfernung jeweils auf der Basis wenigstens eines Zeitpunktes zu bestimmen, an dem die Nachweisschwelle durchbrochen ist.

49. Vorrichtung zur Aufnahme von eine große Anzahl von Entfernungsbildpunkten aufweisenden Entfernungsbildern,
- mit einer Mehrzahl von in einem Array (130) angeordneten Sendern (15) zur Aussendung elektromagnetischer Strahlung in Form von Sendepulsen (14), und
- mit einer Mehrzahl von in einem Array (125) angeordneten Empfängern (2) zum Nachweis von reflektierten Echopulsen (1),
wobei jedem Empfänger (2) ein Verstärker (3) zur Erzeugung eines Echopulse (1) und Rauschpulse (76) enthaltenden analogen Empfängersignals (77) und eine Einrichtung mit wenigstens einer Referenz (5) zugeordnet sind, mit der aus dem analogen Empfängersignal (77) eine Folge von logischen Empfängerpulsen (79) erzeugbar ist, die jeweils auf einen die Referenz (5) überschreitenden Echopuls (1) oder Rauschpuls (76) zurückgehen, wobei ein Überschreiten der Referenz (5) die ein up-Event (81) definierende positive Flanke des Empfängerpulses bildet und ein Unterschreiten der Referenz die ein down-Event (82) definierende negative Flanke des Empfängerpulses bildet, und
mit einer dem Empfänger-Array (125) nachgeordneten Zeitmesseinrichtung nach einem der Ansprüche 33 bis 48 zur Messung der jeweils einen Entfernungsbildpunkt bildenden Entfernungen von Objekten, an denen die Sendepulse (14) reflektiert werden, durch Bestimmen der Pulslaufzeit.

50. Vorrichtung nach Anspruch 49,
**dadurch gekennzeichnet,**
**dass** die Sender (15) des Sender-Arrays (130) jeweils derart ausgebildet und angeordnet sind, dass die ausgesandte Strahlung in einem Einzel-Senderaumwinkel (131a) projiziert wird und sich die Einzel-Senderaumwinkel (131a) zu einem Gesamt-Senderaumwinkel (130a) ergänzen, und
**dass** die Empfänger (2) des Empfänger-Arrays (125) jeweils derart ausgebildet und angeordnet sind, dass die reflektierte Strahlung aus einem Einzel-Empfangsraumwinkel (126a) empfangen wird und sich die Einzel-Empfangsraumwinkel (126a) zu einem Gesamt-Empfangsraumwinkel (125a) ergänzen, wobei der Gesamt-Empfangsraumwinkel (125a) den Gesamt-Senderaumwinkel (130a) umfasst und voneinander unterscheidbare Überdeckungen der Einzel-Empfangsraumwinkel (126a) und Einzel-Senderaumwinkel (131a) vorhanden sind, wobei jede Überdeckung einem Entfernungsbildpunkt entspricht.

51. Vorrichtung nach Anspruch 50,
**dadurch gekennzeichnet,**
**dass** in dem Gesamt-Senderaumwinkel (130a) die projizierte Strahlung der Sender (15) des Sender-Arrays (130) auf wenigstens einer, vorzugsweise auf einer einzigen, Linie liegt.

52. Vorrichtung nach einem der Ansprüche 49 bis 51,
**dadurch gekennzeichnet,**
**dass** die Sender (15) des Sender-Arrays (130), insbesondere die vorzugsweise von Laserdioden (10) gebildeten aktiven Sendeflächen (131) der Sender (15), auf wenigstens einer, vorzugsweise auf einer einzigen, Linie liegen.

53. Vorrichtung nach einem der Ansprüche 49 bis 52,
**dadurch gekennzeichnet,**
**dass** die Empfänger (2) des Empfänger-Arrays (125), insbesondere die vorzugsweise von Photodioden gebildeten aktiven Detektionsflächen (126) der Empfänger (2), auf wenigstens einer, vorzugsweise auf einer einzigen, Linie liegen.

54. Vorrichtung nach einem der Ansprüche 49 bis 53,
**dadurch gekennzeichnet,**
**dass** das Sender-Array (130) und/oder das Empfänger-Array (125) jeweils eine Projektionsoptik (47, 48) umfassen, welche die jeweiligen aktiven Flächen (131, 126) im Fernfeld abbildet.

55. Vorrichtung nach einem der Ansprüche 49 bis 54,
**dadurch gekennzeichnet,**
**dass** dem Empfänger-Array (125) eine Lochmaske (134) vorgelagert ist, mit der die Empfänger (2), insbesondere die aktiven Detektionsflächen (126) der Empfänger (2), gegeneinander isolierbar sind.

56. Vorrichtung nach Anspruch 55,
**dadurch gekennzeichnet,**
**dass** die Lochmaske (134) direkt auf dem Empfänger-Array (125), insbesondere einem Träger für die aktiven Detektionsflächen (126) der Empfänger (2), aufgebracht oder mit Abstand von dem Empfänger-Array (125) angeordnet ist.

57. Vorrichtung nach Anspruch 55 oder 56,
**dadurch gekennzeichnet,**
**dass** die Lochmaske (134) in der Fokusebene einer Projektionsoptik (48) der Empfänger (2) angeordnet ist.

58. Vorrichtung nach einem der Ansprüche 49 bis 57,
**dadurch gekennzeichnet,**
**dass** das Sender-Array (130) und/oder das Empfänger-Array (125) mehrere Teilarrays umfasst und zum Zusammenführen der Teilarrays wenigstens eine Lochmaske (134) vorgesehen ist, die derart ausgebildet und angeordnet ist, dass zwischen den Sendern (15), insbesondere den aktiven Sendeflächen (131) der Sender (15), und/oder zwischen den Empfängern (2), insbesondere den aktiven Detektionsflächen (126) der Empfänger (2), vorhandene Lücken (128, 133) zumindest teilweise geschlossen werden.

59. Vorrichtung nach einem der Ansprüche 49 bis 58,
**dadurch gekennzeichnet,**
**dass** zum Bewegen der Aufnahmelinie im Raum wenigstens eine um zumindest eine Achse kipp-, schwenk- oder drehbare Strahlungsablenkeinheit (50) vorgesehen ist, wobei insbesondere die Strahlungsablenkeinheit (50) wenigstens einen Ablenkspiegel (51) umfasst, vorzugsweise einen Polygonspiegel.

60. Vorrichtung nach Anspruch 59,
**dadurch gekennzeichnet,**
**dass** zwei kipp-, schwenk- oder drehbare Strahlungsablenkeinheiten (50) vorgesehen sind, deren Achsen senkrecht zueinander verlaufen.

61. Vorrichtung nach einem der Ansprüche 49 bis 60,
**dadurch gekennzeichnet,**
**dass** sie nach einem Verfahren gemäß einem der Ansprüche 1 bis 33 betreibbar ist.

62. Vorrichtung nach einem der Ansprüche 49 bis 61,
**dadurch gekennzeichnet,**
**dass** die Referenzen (5) der den Empfängern (2) zugeordneten Einrichtungen jeweils im Rauschen liegen, so dass die logischen Empfängerpulse (79) auf Echopulse (1) und Rauschpulse (76) zurückgehen, wobei die Einrichtungen jeweils wenigstens einen Komparator (4) oder wenigstens einen Begrenzungsverstärker (limiting amplifier) umfassen.

## Claims

1. A method for the taking of distance images having a large number of distance picture elements,
in which electromagnetic radiation is transmitted in each case in the form of transmission pulses (14) using a plurality of transmitters (15) arranged in an array (130) for each distance image to be taken and reflected echo pulses (1) are detected using a plurality of receivers (2) arranged in an array (125), wherein the distances of objects at which the transmission pulses (14) are reflected each form a distance picture element and are measured by determining the pulse time of flight;
wherein a plurality of individual measurements are carried out using a time measuring device arranged downstream of the receiver array (125) for each distance image to be taken, in which individual measurements a respective pulse chain is processed which comprises a logical start pulse (73) derived from the respective transmission pulse (14) and at least one logical receiver pulse (79) formed from an echo pulse (1) or from a noise pulse (76);
wherein the logical receiver pulses (79) are each generated by means of at least one reference (5) of the receiver (2), the reference being broken through by the underlying echo pulses or noise pulses, with an exceeding of the reference (5) forming the positive flank of the receiver pulse defining an up event (81) and a falling below of the reference forming the negative flank of the receiver pulse defining a down event (82);
wherein, for each distance image to be taken,
- the associated pulse chains (80) are formed in that the start pulses (73) and the associated receiver pulses (79) are combined at the right time in each case;
- the pulse chains (80) formed in this manner are distributed over an array of time measuring channels formed by the time measuring device; and,
- for each time measuring channel,
- the time durations are determined which, with reference to a point in time before the start pulse (73), each pass until a receiver pulse (79) in that, for each up event (81) and/or for each down event (82), at least the respective clock pulses are counted which are made available by a central clock (33) at a known frequency; and
- the counter results are stored as an event list in an arrangement taking account of their respective time information;
and wherein the stored event lists of all the time measuring channels are read out and evaluated in order to convert the respective time information included in the event lists into distance values corresponding to the distance picture elements, **characterized in that**,
for the determination of the time durations, in each case both the whole periods of the clock pulses which have passed are counted and the part period (85, 88) counted too much up to the point in time of the up event (81) and/or counted too much up to the point in time of the down event (82) are determined so that two partial results are obtained for each up event (81) and/or for each down event (82).

2. A method in accordance with claim 1,
**characterized in that**
the references (5) of the receivers (2) are each disposed in the noise so that the logical receiver pulses (79) go back to echo pulses and noise pulses.

3. A method in accordance with claim 1 or claim 2,
**characterized in that**
the processing of receiver pulses (79) is in each case suppressed until a pre-settable point in time after the start pulse (73) and the start pulse (73) is placed into the time gap arising thereby at the right time on the formation of the pulse chain (80).

4. A method in accordance with any one of the preceding claims,
**characterized in that**
each time measuring channel is split into two branches, with the up events (81) being measured in the one branch and the down events (82) being measured in the other branch.

5. A method in accordance with any one of the preceding claims,
**characterized in that**
the part periods (85, 88) are measured by means of TDCs (time to digital converters); and/or
**in that** the part periods (85, 86) are each measured as multiples of a pre-set delay time so that a first counter result indicating the number of passed whole clock pulse periods is obtained and a second counter result indicating the number of passed delay times in a part period (85, 88) is obtained for each up event (81) and/or for each down event (82).

6. A method in accordance with claim 5,
**characterized in that**
the delay time is calibrated with respect to the period of the central clock (33) for the compensation of unwanted changes in the pre-set delay time.

7. A method in accordance with any one of the preceding claims,
**characterized in that**
a number of time measuring channels is provided for each distance image to be taken, said number being smaller than the number of pulse chains (80) to be processed; and **in that** the pulse chains (80) to be processed are supplied to the time measuring channels sequentially in groups.

8. A method in accordance with any one of the preceding claims,
**characterized in that**
the pulses of a pulse chain (80) are distributed over a plurality of time measuring channels so that at least two pulses of the pulse chain (80) are processed in different time measuring channels.

9. A method in accordance with any one of the preceding claims,
**characterized in that**
a pulse chain (80) is processed in parallel in a plurality of time measuring channels, with the clock pulses of the central clock (33) preferably being supplied to the time measuring channels in a phase shifted manner.

10. A method in accordance with any one of the preceding claims,
**characterized in that**
in each case a plurality of individual measurements originating from the same transmitter/receiver pair and thus relating to the same distance picture element are processed together like an individual measurement for the carrying out of so-called "burst" measurements, but are treated separately again in an evaluation following the processing.

11. A method in accordance with any one of the preceding claims,
**characterized in that**
in particular when noise pulses (76) are present in addition to echo pulses (1) due to correspondingly set receiver references (5), in particular set to a value above 4.5 NEP, a plurality of individual measurements are averaged which originate sequentially from the same transmitter/receiver pair and thus relate to the same distance picture element.

12. A method in accordance with any one of the preceding claims,
**characterized in that**,
in particular in the case of so-called "burst" measurements for the averaging of the individual measurements,
- at least one time pattern memory is made available which is divided into a plurality of memory cells with which a respective time window is associated,
with a time window corresponding to the duration of a whole clock pulse of the central clock (33) or to the duration of a delay time and the clock pulses and part periods (85, 88) each being measured as multiples of said delay time;
- the event lists of the individual measurements are transmitted sequentially into the same time pattern memory **in that** an up event (81) is evaluated as positive and a down event (82) is evaluated as negative, or vice versa; and
- the number of break-throughs of the receiver reference (5) is accumulated for each time window on the averaging.

13. A method in accordance with claim 12,
**characterized in that**,
subsequently to the averaging of the individual measurements, the content of the time pattern memory is integrated to an amplitude function and a detection threshold is applied to the amplitude function; and **in that** the associated object distance is determined in the amplitude function for the echo pulses (1) in each case on the basis of at least one point in time at which the detection threshold is broken through.

14. A method in accordance with claim 12 or claim 13,
**characterized in that**
the pulse width representing a measure for the power of the corresponding echo pulse (1) is used for error compensation in the amplitude function, in particular by correction of the point in time at which the detection threshold is broken through, in particular exceeded.

15. A method in accordance with any one of the claims 12 to 14,
**characterized in that**
a rough amplitude function is determined **in that** the integration is only carried out for count values of the time pattern memory which each represent a number of passed whole clock pulses; **in that** special part ranges going back to echo pulses are identified with reference to the rough amplitude function; and **in that** the integration of the content of the time pattern memory to the amplitude function is only carried out for the identified part ranges.

16. A method in accordance with any one of the claims 13 to 15,
**characterized in that**
the detection threshold is set in dependence on the receiver reference (5), in particular in dependence on the measure of a reduction of the receiver reference (5) with respect to a value of 4.5 NEP.

17. A method in accordance with any one of the preceding claims,
**characterized in that**
the reference (5) of at least one receiver (2) changes, in particular reduces as the distance decreases, in dependence on the distances measured by the receiver (2).

18. A method in accordance with any one of the preceding claims,
**characterized in that**
the transmitters (15) of the transmitter array (130) each transmit the transmitted radiation at an individual transmission spatial angle (131a) and the individual transmission spatial angles (131a) combine to form a total transmission spatial angle (130a); and **in that** the receivers (2) of the receiver array (125) each receive the reflected radiation from an individual reception spatial angle (126a) and the individual reception spatial angles (126a) combine to form a total reception spatial angle (125a), with the total reception spatial angle (125a) comprising the total transmission spatial angle (130a) and mutually distinguishable overlaps of the individual reception spatial angles (126a) and individual transmission spatial angles (131a) being present, with each overlap corresponding to a distance picture element; and
**in that** the overlaps are grouped for the measurement in the time measuring device for the formation of distance picture elements which can be distinguished from one another.

19. A method in accordance with claim 18,
**characterized in that**
the grouping takes place in a spatial and/or temporal respect, with, in the case of an overlap of a plurality of individual reception spatial angles (126a) with an individual transmission spatial angle (131a), a spatial grouping taking place and the associated receivers (2) working in parallel in time, and
with, in the case of an overlap of an individual reception spatial angle (126a) with a plurality of individual transmission spatial angles (131a), a temporal grouping taking place and the associated transmitters being activated sequentially in time.

20. A method in accordance with claim 18 or claim 19,
**characterized in that**
those distinguishable distance picture elements which represent the radiation of a transmitter (15) which is detectable overall are grouped to form a sub-group; and
**in that** so many sub-groups are grouped to form a group that the number of the distinguishable distance picture elements present in the group is at most equal to the number of time measuring channels of the time measuring device.

21. A method in accordance with any one of the claims 18 to 20,
**characterized in that**,
in dependence on the relationship of the number of distinguishable distance picture elements present overall and the number of time measuring channels, the groups in the time measuring channels are processed sequentially when the number of the time measuring channels is insufficient for the distinguishable distance picture elements present overall or
are processed in parallel when sufficient time measuring channels are present for the distinguishable distance picture elements present overall.

22. A method in accordance with any one of the preceding claims,
**characterized in that**,
in particular for the suppression of the interference radiation portion and/or for the reduction of the dynamic range, the receivers (2), in particular the active detection surfaces (126) of the receivers (2), are masked, in particular by means of a shadow mask (134) positioned in front of the receivers (2).

23. A method in accordance with any one of the preceding claims,
**characterized in that**
a shadow mask (134) positioned in front of the receivers (2) is arranged in the focal plane of an optical projection system (47) of the receivers (2).

24. A method in accordance with any one of the preceding claims,
**characterized in that**
a taking surface formed by the distance picture elements and in particular of linear or strip shape is moved in space and a hole of a shadow mask (134) positioned in front is associated with each receiver (2), said hole being smaller in the direction of movement of the taking surface than the receiver (2), in particular than the active detection surface (126) of the receiver (2), with a plurality of transmitters (15) being associated with the receiver (2) to increase the resolution, said transmitters (15) being activated sequentially in coordination with the movement of the taking surface.

25. A method in accordance with any one of the claims 22 to 24,
**characterized in that**
the receivers (2) are each larger in the direction of movement of the taking surface by a whole number multiple than the holes of the shadow mask (134) positioned in front and the number of the transmitters (15) respectively associated with the receivers (2) is equal to this whole number multiple.

26. A method in accordance with any one of the preceding claims,
**characterized in that**
a plurality of transmitter partial arrays and/or a plurality of receiver partial arrays are assembled by means of at least one shadow mask (134) such that gaps (128, 133) present between the transmitters (15), in particular the active transmission surfaces (131) of the transmitters (15), and/or between the receivers (2), in particular the active detection surfaces (126) of the receivers (2), are at least partly closed.

27. A method in accordance with any one of the preceding claims,
**characterized in that**
the radiation of the transmitters (15) of the transmitter array (130) is transmitted such that, in the total transmission spatial angle (130a), the transmitted radiation is disposed on at least one taking line, preferably on one single taking line.

28. A method in accordance with any one of the preceding claims,
**characterized in that**
a taking surface formed by the distance picture elements and in particular of linear or strip shape is moved in space, in particular with the apparatus by movement of the apparatus as a whole which is in particular attached to a movable carrier (65, 66, 70), e.g. in the form of a vehicle or aircraft, and/or relative to the apparatus by means of at least one radiation deflection unit (50), in particular at least one deflection mirror pivotable, rotatable or tiltable around at least one axis.

29. A method in accordance with claim 28,
**characterized in that**
the taking surface is movable in space by means of two radiation deflection units (50) whose tilting axes, pivoting axes or axes of rotation extend perpendicular to one another.

30. A method in accordance with one of the claims 28 to 29,
**characterized in that**
the taking surface is of linear or strip shape and the taking surface is moved in the direction of its longitudinal extent (63) and/or perpendicular (62) thereto.

31. A method in accordance with any one of the preceding claims,
**characterized in that**
predetermined objects are searched for in the taken distance images by means of evaluation software (object recognition) and the objects found are tracked using sequentially taken distance images (object tracking); and **in that** a plant (70) is controlled by means of control software in dependence on the results of the object recognition and/or object tracking.

32. A method in accordance with any one of the preceding claims,
**characterized in that**
a time measuring device or an apparatus in accordance with any one of the following claims is used.

33. A time measuring device for an apparatus for the taking of distance images having a large number of distance picture elements, comprising
- a plurality of transmitters (15) arranged in an array (130) for the transmission of electromagnetic radiation in the form of transmission pulses (14); and
- a plurality of receivers (2) arranged in an array (125) for the detection of reflected echo pulses (1),
wherein an amplifier (3) for the generation of an analog receiver signal (77) including echo pulses (1) and noise pulses (76) and a device having at least one reference (5) are associated with each receiver (2), with which reference a sequence of logical receiver pulses (79) can be generated from the analog receiver signal (77) which each go back to an echo pulse (1) or noise pulse (76) exceeding the reference (5), with an exceeding of the reference (5) forming the positive flank of the receiver pulse defining an up event (81) and a falling below of the reference forming the negative flank of the receiver pulse defining a down event (82); and
- wherein the time measuring device is configured for the measurement by determination of the pulse time of flight of the distances of objects at which the transmission pulses (14) are reflected, said distances each forming a distance picture element;
wherein the time measuring device is configured to carry out a plurality of associated individual measurements for each distance image to be taken, in which individual measurements a respective pulse chain (80) is processed which comprises a logical start pulse (73) derived from the respective transmission pulse (14) and at least one logical receiver pulse (79); and
wherein the time measuring device comprises
- a device (20) for the formation of the pulse chains (80) which is configured to combine the start pulses (73) and the associated receiver pulses (79) at the right time in each case;
- an array of time measuring channels which are each configured to process start pulses (73) and receiver pulses (79);
- a device (21) which is configured to distribute the pulse chains (80) over the time measuring channels;
- a central clock (33) which provides clock pulses of a known frequency for the time measuring channels;
- a device for each measuring channel which is configured to determine time durations which each pass until a receiver pulse (79) and comprises at least one counter (23) which, for each up event (81) and/or for each down event (82), counts at least the respective clock pulses of the central clock (33) which pass, with respect to the start pulse (73), until the respective receiver pulse (79);
- a device by which the counter results are stored as an event list in an arrangement taking account of their respective time information; and
- a device for reading out and evaluating the stored event lists of all the time measuring channels which is configured to convert the time information included in the event lists into distance values corresponding to the distance picture elements,
**characterized in that**
the devices for the determination of the time durations are each configured both to count the passed whole periods of the clock pulses and to determine the part period (85, 88) counted too much at the point in time of the up event (81) and/or counted too much at the point in time of the down event (82).

34. A time measuring device in accordance with claim 33,
**characterized in that**
each time measuring channel is split into two branches, with the one branch being configured to process the up events (81) and the other branch being configured to process the down events (82).

35. A time measuring device in accordance with claim 33 or 34,
**characterized in that**,
for the determination of the part periods (85, 88), the devices each comprise means for the formation of part period pulses (84, 87), means for the delay of the part period pulses (84, 87) and means for the determination of the width of the part period pulses (84, 87).

36. A time measuring device in accordance with claim 35,
**characterized in that**
separators (22) are provided for the formation of the part period pulses (84, 87).

37. A time measuring device in accordance with any one of the claims 33 to 36,
**characterized in that**
TDCs (time to digital converters) are provided for the measurement of the part period pulses (84, 87); and/or
**in that** delay arrays (24) which comprise delay elements, in particular in the form of a plurality of inverters or double inverters connected in series and having a pre-set delay time, as well as decoders (25) are provided for the measurement of the part period pulses (84, 87), said decoders (25) being configured to convert counter results which each indicate the number of delay times passed in a part period (85, 88) into information which is in particular binary encoded.

38. A time measuring device in accordance with claim 37,
**characterized in that**
latch arrays are provided which are configured to temporarily store the encoded information of the decoders (25).

39. A time measuring device in accordance with any one of the claims 33 to 38,
**characterized in that**
the device (21), which is configured to distribute the formed pulse chains (80) over the array of time measuring channels in accordance with a predeterminable measurement procedure for each distance image to be taken, is operable in at least one of the following measurement modes, preferably selectively in each of them:
(i) the pulse chains (80) to be processed can be supplied sequentially in groups to the time measuring channels by means of a device, in particular a multiplexer device;
(ii) the pulses of a pulse chain (80) can be processed serially and can be distributed over a plurality of time measuring channels such that at least two pulses of the pulse chain (80) can be processed in different time measuring channels;
(iii) a pulse chain (80) can be processed in parallel in a plurality of time measuring channels, with preferably a device being provided by which the clock pulses of the central clock (33) can be supplied to the time measuring channels in a phase shifted manner;
(iv) a plurality of individual measurements originating from the same transmitter/receiver pair and thus relating to the same distance picture element can be processed together like an individual measurement (so-called "burst" measurement).

40. A time measuring device in accordance with any one of the claims 33 to 39,
**characterized in that**
the number of time measuring channels is smaller than the number of receivers (2).

41. A time measuring device in accordance with any one of the claims 33 to 40,
**characterized in that**
a device for the measurement procedure control (17) is provided which is configured to control the framework of the time measurement.

42. A time measuring device in accordance with any one of the claims 33 to 41,
**characterized in that**
a device for the time measuring control (29) is provided which is configured to control the determination of the time durations in the time measuring channels in dependence on a measurement procedure control (17).

43. A time measuring device in accordance with any one of the claims 33 to 42,
**characterized in that**
the time measuring device comprises at least one IC module (32) into which at least a plurality of time measuring channels forming an array are integrated, in particular
- counters (23) for the counting of the whole periods of the clock pulses passed until the respective receiver pulse (79);
- separators (22) for the formation of part period pulses (84, 87);
- delay arrays (24) for the delay of the part period pulses (84, 87);
- decoders (25) for the implementation of the number of delay times passed in a part period (85, 88) into information which is in particular binary encoded;
- latch arrays for the temporary storage of the encoded information of the decoders (25);
- memory regions (26); and
- an interface (27) associated with the memory regions (26).

44. A time measuring device in accordance with claim 43,
**characterized in that**,
in addition to the time measuring channels, the device for the formation of the pulse chains (80), the device for the distribution of the pulse chains (80) and the device for the time measuring control are each at least partly integrated into the IC module (32).

45. A time measuring device in accordance with claim 43 or claim 44,
**characterized in that**
a device for the measurement procedure control (17), a device, in particular a multiplexer device, for the group-wise supply of the pulse chains (80) to be processed, the central clock (33) and/or a microprocessor system (28) for the reading out and evaluation of the stored event lists of all the time measuring channels are provided separately from the IC module (32).

46. A time measuring device in accordance with any one of the claims 33 to 45,
**characterized in that**
the time measuring device is configured to average a plurality of individual measurements originating from the same transmitter/receiver pair and thus relating to the same distance picture element.

47. A time measuring device in accordance with any one of the claims 33 to 46,
**characterized in that**
the time measuring device comprises a microprocessor (28) which is configured to read out the stored event lists of all the time measuring channels and to convert the time information included in the event lists into distance values corresponding to the distance picture elements.

48. A time measuring device in accordance with claim 47,
**characterized in that**
the microprocessor (28) is configured to
- average a plurality of individual measurements originating sequentially from the same transmitter/receiver pair and thus relating to the same distance picture element while using at least one time pattern memory;
- integrate the content of the time pattern memory to an amplitude function subsequent to the averaging of the individual measurements;
- apply a detection threshold to the amplitude function; and
- determine the associated object distance in the amplitude function for the echo pulses (1) in each case on the basis of at least one point in time at which the detection threshold is broken through.

49. An apparatus for the taking of distance images having a large number of distance picture elements,
- having a plurality of transmitters (15) arranged in an array (130) for the transmission of electromagnetic radiation in the form of transmission pulses (14),
- having a plurality of receivers (2) arranged in an array (125) for the detection of reflected echo pulses (1),
wherein an amplifier (3) for the generation of an analog receiver signal (77) including echo pulses (1) and noise pulses (76) and a device having at least one reference (5) are associated with each receiver (2), with which reference a sequence of logical receiver pulses (79) can be generated from the analog receiver signal (77) which each go back to an echo pulse (1) or noise pulse (76) exceeding the reference (5), with an exceeding of the reference (5) forming the positive flank of the receiver pulse defining an up event (81) and a falling below of the reference forming the negative flank of the receiver pulse defining a down event (82), and
- having a time measuring device in accordance with any one of the claims 33 to 48 arranged downstream of the receiver array (125) for the measurement by determination of the pulse time of flight of the distances of objects at which the transmission pulses (14) are reflected, said distances each forming a distance picture element.

50. An apparatus in accordance with claim 49,
**characterized in that**
the transmitters (15) of the transmitter array (130) are each configured and arranged such that the transmitted radiation is projected at an individual transmission spatial angle (131a) and the individual transmission spatial angles (131a) combine to form a total transmission spatial angle (130a); and
**in that** the receivers (2) of the receiver array (125) are each configured and arranged such that the reflected radiation from an individual reception spatial angle (126a) is received and the individual reception spatial angles (126a) combine to form a total reception spatial angle (125a), with the total reception spatial angle (125a) comprising the total transmission spatial angle (130a) and mutually distinguishable overlaps of the individual reception spatial angles (126a) and individual transmission spatial angles (131a) being present, with each overlap corresponding to a distance picture element.

51. An apparatus in accordance with claim 50,
**characterized in that**
the projected radiation of the transmitters (15) of the transmitter array (130) lies on at least one line, preferably on one single line, in the total transmission spatial angle (130a).

52. An apparatus in accordance with any one of the claims 49 to 51,
**characterized in that**
the transmitters (15) of the transmitter array (130), in particular the active transmission surfaces (131) of the transmitters (15) preferably formed by laser diodes (10), lie on at least one line, preferably on one single line.

53. An apparatus in accordance with any one of the claims 49 to 52,
**characterized in that**
the receivers (2) of the receiver array (125), in particular the active detection surfaces (126) of the receivers (2) preferably formed by photodiodes, lie on at least one line, preferably on one single line.

54. An apparatus in accordance with any one of the claims 49 to 53,
**characterized in that**
the transmitter array (130) and/or the receiver array (125) comprises/comprise a respective optical projection system (47, 48) which images the respective active surfaces (131, 126) in the distance field.

55. An apparatus in accordance with any one of the claims 49 to 54,
**characterized in that**
a shadow mask (134) is positioned in front of the receiver array (125), with the receivers (2), in particular the active detection surfaces (126) of the receivers (2), being able to be insulated from one another by said shadow mask (134).

56. An apparatus in accordance with claim 55,
**characterized in that**
the shadow mask (134) is applied directly to the receiver array (125), in particular to a carrier for the active detection surfaces (126) of the receivers (2), or is arranged at a spacing from the receiver array (125).

57. An apparatus in accordance with claim 55 or claim 56,
**characterized in that**
the shadow mask (134) is arranged in the focal plane of an optical projection system (48) of the receivers (2).

58. An apparatus in accordance with any one of the claims 49 to 57,
**characterized in that**
the transmitter array (130) and/or the receiver array (125) comprises/comprise a plurality of partial arrays and at least one shadow mask (134) is provided for the assembling of the partial arrays, said shadow mask (134) being configured and arranged such that gaps (128, 133) present between the transmitters (15), in particular the active transmission surfaces (131) of the transmitters (15), and/or between the receivers (2), in particular the active detection surfaces (126) of the receivers (2), are at least partly closed.

59. An apparatus in accordance with any one of the claims 49 to 58,
**characterized in that**
at least one radiation deflection unit (50) which can be tilted, pivoted or rotated around at least one axis is provided to move the taking line in space, with in particular the radiation deflection unit (50) comprising at least one deflection mirror (51), preferably a polygon mirror.

60. An apparatus in accordance with claim 59,
**characterized in that**
two radiation deflection units (50) which can be tilted, pivoted or rotated are provided whose axes extend perpendicular to one another.

61. An apparatus in accordance with any one of the claims 49 to 60,
**characterized in that**
it can be operated in accordance with a method in accordance with any one of the claims 1 to 33.

62. An apparatus in accordance with any one of the claims 49 to 61,
**characterized in that**
the references (5) of the devices associated with the receivers (2) are each disposed in the noise so that the logical receiver pulses (79) go back to echo pulses (1) and noise pulses (76), with the devices each comprising at least one comparator (4) or at least one limiting amplifier.

## Revendications

1. Procédé pour enregistrer des images de distance ayant un grand nombre de pixels de distance,
dans lequel
un rayonnement électromagnétique respectif sous la forme d'impulsions d'émission (14) est émis pour chaque image de distance à enregistrer avec une pluralité d'émetteurs (15) agencés dans un réseau (130), et des impulsions d'écho réfléchies (1) sont mises en évidence par une pluralité de récepteurs (2) agencés dans un réseau (125),
les distances, formant un pixel de distance respectif, des objets auxquels les impulsions d'émission (14) sont réfléchies sont mesurées en déterminant le temps de parcours des impulsions,
une multitude de mesures individuelles sont effectuées avec un moyen de mesure du temps agencé en aval du réseau de récepteurs (125) pour chaque image de distance à enregistrer, dans lesquelles une chaîne d'impulsions respective est traitée qui comprend une impulsion de démarrage (73) logique dérivée de l'impulsion d'émission respective (14) et au moins une impulsion de réception (79) logique formée à partir d'une impulsion d'écho (1) ou d'une impulsion de bruit (76),
les impulsions de réception (79) logiques sont générées chacune au moyen d'au moins une référence (5) du récepteur (2), qui est traversée par les impulsions d'écho ou les impulsions de bruit sous-jacentes, un dépassement de la référence (5) formant le flanc positif de l'impulsion de réception, qui définit un événement dit ascendant (81), et un passage au-dessous de la référence formant le flanc négatif de l'impulsion de réception, qui définit un élément dit descendant (82),
et pour chaque image de distance à enregistrer
- les chaînes d'impulsions (80) associées sont formées en combinant les impulsions de démarrage (73) et les impulsions de réception (79) associées respectivement à l'instant correct,
- les chaînes d'impulsions (80) formées de cette manière sont réparties sur un réseau de canaux de mesure de temps formé par le moyen de mesure de temps, et
- pour chaque canal de mesure de temps
- les laps de temps qui s'écoulent depuis un instant avant l'impulsion de démarrage (73) jusqu'à une impulsion de réception (79) sont déterminés en comptant pour chaque événement ascendant (81) et/ou chaque événement descendant (82) respectivement au moins les impulsions d'horloge fournies par une horloge centrale (83) à fréquence connue, et
- les résultats de comptage sont mémorisés sous la forme d'une liste d'événements dans une disposition qui prend en compte leurs informations temporelles respectives,
et dans lequel
les listes d'événements mémorisées de tous les canaux de mesure de temps sont lues et évaluées afin de convertir par calcul respectivement les informations temporelles, contenues dans les listes d'événements, en valeurs de distance correspondant aux de pixels de distance,
**caractérisé en ce que**
lors de la détermination des laps de temps, les périodes entières écoulées des impulsions d'horloge sont comptées et également la période partielle (85, 88) comptée en trop à l'instant de l'événement ascendant (81) et/ou comptée en trop à l'instant de l'événement descendant (82) est déterminée, de manière à obtenir deux résultats partiels pour chaque événement ascendant (81) et/ou pour chaque événement descendant (82).

2. Procédé selon la revendication 1,
**caractérisé en ce que**
les références (5) des récepteurs (2) se situent chacune dans le bruit, de sorte que les impulsions de réception (79) logiques sont dues à des impulsions d'écho et à des impulsions de bruit.

3. Procédé selon la revendication 1 ou 2,
**caractérisé en ce que**
le traitement d'impulsions de réception (79) est supprimé jusqu'à un instant prédéterminé respectif après l'impulsion de démarrage (73), et lors de la formation de la chaîne d'impulsions (80) l'impulsion de démarrage (73) est mis à l'instant correct dans l'intervalle de temps ainsi obtenu.

4. Procédé selon l'une des revendications précédentes,
**caractérisé en ce que**
chaque canal de mesure de temps est subdivisé en deux branches, les événements ascendants (81) étant mesurés dans l'une des branches et les événements descendants (82) étant mesurés dans l'autre branche.

5. Procédé selon l'une des revendications précédentes,
**caractérisé en ce que**
les périodes partielles (85, 88) sont mesurées au moyen de TDCs (Time-to-Digital-Converter), et/ou **en ce que**
les périodes partielles (85, 86) sont mesurées chacune comme étant le multiple d'un temps de retard prédéterminé, de sorte que pour chaque événement ascendant (81) et/ou pour chaque événement descendant (82), un premier résultat de comptage est obtenu, qui indique le nombre de périodes entières écoulées d'impulsions d'horloge, et un second résultat de comptage est obtenu, qui indique le nombre de temps de retard écoulés dans une période partielle (85, 88).

6. Procédé selon la revendication 5,
**caractérisé en ce que**
pour compenser des modifications non désirées du temps de retard prédéterminé, le temps de retard est échelonné par rapport à la période de l'horloge centrale (33).

7. Procédé selon l'une des revendications précédentes,
**caractérisé en ce que**
un certain nombre de canaux de mesure de temps est prévu pour chaque image de distance à enregistrer, qui est inférieur au nombre de chaînes d'impulsions (80) à traiter, et **en ce que**
les chaînes d'impulsions (80) à traiter sont amenées successivement par groupes aux canaux de mesure de temps.

8. Procédé selon l'une des revendications précédentes,
**caractérisé en ce que**
les impulsions d'une chaîne d'impulsions (80) sont réparties sur plusieurs canaux de mesure de temps, de sorte qu'au moins deux impulsions de la chaîne d'impulsions (80) sont traitées dans différents canaux de mesure de temps.

9. Procédé selon l'une des revendications précédentes,
**caractérisé en ce que**
une chaîne d'impulsions (80) est traitée parallèlement dans plusieurs canaux de mesure de temps, et de préférence les impulsions d'horloge de l'horloge centrale (33) sont amenées en déphasage aux canaux de mesure de temps.

10. Procédé selon l'une des revendications précédentes,
**caractérisé en ce que**
pour effectuer des mesures dites en rafale ("burst"), plusieurs mesures individuelles issues du même appariement émetteur-récepteur et donc concernant le même pixel de distance sont traitées conjointement comme une mesure individuelle, mais lors d'une évaluation qui suit le traitement, elles sont de nouveau traitées séparément.

11. Procédé selon l'une des revendications précédentes,
**caractérisé en ce que**
en particulier lorsque des impulsions de bruit (76) existent en supplément aux impulsions d'écho (1), en raison de références de réception (5) réglées en correspondance, en particulier à une valeur supérieure à 4,5 NEP, plusieurs mesures individuelles sont moyennées, qui sont issues successivement du même appariement émetteur-récepteur et qui concernent donc le même pixel de distance.

12. Procédé selon l'une des revendications précédentes,
**caractérisé en ce que**
en particulier dans le cas de mesures dites en rafale ("burst") pour moyenner les mesures individuelles, il est prévu
- de fournir au moins une mémoire à trame temporelle qui est subdivisée en une multitude de cellules de mémoire auxquelles est associée respectivement une fenêtre temporelle,
une fenêtre temporelle correspondant à la durée d'une impulsion d'horloge entière de l'horloge centrale (33) ou à la durée d'un temps de retard, les impulsions d'horloge et les périodes partielles (85, 88) étant mesurées comme étant son multiple,
- de transmettre les listes d'événements des mesures individuelles successivement dans la même mémoire à trame temporelle en évaluant positif un événement ascendant (81) et en évaluant négatif un événement descendant (82), ou inversement,
- d'accumuler le nombre de traversées de la référence de réception (5) pour chaque fenêtre temporelle, lors du calcul de la moyenne.

13. Procédé selon la revendication 12,
**caractérisé en ce que**
suite au calcul de la moyenne des mesures individuelles, le contenu de la mémoire à trame temporelle est intégré pour donner une fonction d'amplitude, et un seuil de mise en évidence est appliqué à la fonction d'amplitude, et **en ce que**
dans la fonction d'amplitude pour les impulsions d'écho (1), la distance associée d'un objet est déterminée sur la base d'au moins un instant auquel le seuil de mise en évidence est traversé.

14. Procédé selon la revendication 12 ou 13,
**caractérisé en ce que**
dans la fonction d'amplitude, la largeur d'impulsion représentant une valeur pour la puissance de l'impulsion d'écho correspondante (1) est utilisée pour la compensation d'erreur, en particulier par correction de l'instant auquel le seuil de mise en évidence est traversé, en particulier dépassé.

15. Procédé selon l'une des revendications 12 à 14,
**caractérisé en ce que**
une fonction d'amplitude grossière est déterminée en effectuant l'intégration uniquement pour des valeurs de comptage de la mémoire à trame temporelle qui représentent chacune un nombre d'impulsions d'horloge entières écoulées, **en ce que**
en se basant sur la fonction d'amplitude grossière, des zones partielles particulières dues à des impulsions d'écho sont identifiées, et **en ce que** l'intégration du contenu de la mémoire à trame temporelle pour donner la fonction d'amplitude n'est effectuée que pour les zones partielles identifiées.

16. Procédé selon l'une des revendications 13 à 15,
**caractérisé en ce que**
le seuil de mise en évidence est réglé en fonction de la référence de récepteur (5), en particulier en fonction de la valeur d'une réduction de la référence de réception (5) par rapport à une valeur de 4,5 NEP.

17. Procédé selon l'une des revendications précédentes,
**caractérisé en ce que**
la référence (5) d'au moins un récepteur (2) est modifiée en fonction des distances mesurées au moyen du récepteur (2), en particulier elle est réduite au fur et à mesure de l'augmentation de la distance.

18. Procédé selon l'une des revendications précédentes,
**caractérisé en ce que**
les émetteurs (15) du réseau d'émetteurs (130) émettent le rayonnement émis respectif sous un angle solide d'émission individuel (131a) et les angles solides d'émission individuels (131a) se complètent pour donner un angle solide d'émission total (130a), et **en ce que** les récepteurs (2) du réseau de récepteurs (125) reçoivent le rayonnement réfléchi depuis un angle solide de réception individuel (126a) et les angles solides de réception individuels (126a) se complètent pour donner un angle solide de réception total (125a), l'angle solide de réception total (125a) incluant l'angle solide d'émission total (130a), en présence de chevauchements discernables des angles solides de réception individuels (126a) et des angles solides d'émission individuels (131a), chaque chevauchement correspondant à un pixel de distance, et **en ce que** pour former des pixels de distance discernables, les chevauchements sont regroupés pour la mesure dans le moyen de mesure de temps.

19. Procédé selon la revendication 18,
**caractérisé en ce que**
le regroupement s'effectue sur le plan spatial et/ou sur le plan temporel, et dans le cas d'un chevauchement de plusieurs angles solides de réception individuels (126a) avec un angle solide d'émission individuel (131a), le regroupement s'effectue sur le plan spatial et les récepteurs (2) associés fonctionnent parallèlement dans le temps, et
dans le cas d'un chevauchement d'un angle solide de réception individuel (126a) avec plusieurs angles solides d'émission individuels (131a), le regroupement s'effectue sur le plan temporel et les émetteurs associés sont activés successivement dans le temps.

20. Procédé selon la revendication 18 ou 19,
**caractérisé en ce que**
ceux des pixels de distance discernables qui représentent le rayonnement détectable dans l'ensemble d'un émetteur (15) sont regroupés en un sous-groupe, et **en ce que**
tant de sous-groupes sont regroupés en un groupe que le nombre des pixels de distance discernables présents dans le groupe est au plus égal au nombre de canaux de mesure de temps du moyen de mesure de temps.

21. Procédé selon l'une des revendications 18 à 20,
**caractérisé en ce que**
en fonction du rapport du nombre des pixels de distance discernables présents au total sur le nombre des canaux de mesure de temps, les groupes dans les canaux de mesure de temps sont traités successivement, si le nombre de canaux de mesure de temps ne suffit pas pour les pixels de distance discernables présents au total, ou parallèlement, s'il y a suffisamment de canaux de mesure de temps pour les pixels de distance discernables présents au total.

22. Procédé selon l'une des revendications précédentes,
**caractérisé en ce que**
en particulier pour supprimer la part de rayonnement parasite et/ou pour réduire la plage dynamique, les récepteurs (2), en particulier les surfaces de détection actives (126) des récepteurs (2), sont masqué(e)s, en particulier au moyen d'un masque perforé (134) agencé en amont des récepteurs (2).

23. Procédé selon l'une des revendications précédentes,
**caractérisé en ce que**
un masque perforé (134) agencé en amont des récepteurs (2) est agencé dans le plan de focalisation d'une optique de projection (47) des récepteurs (2).

24. Procédé selon l'une des revendications précédentes,
**caractérisé en ce que**
une surface de réception formée par les pixels de distance et en particulier en forme de ligne ou de ruban est déplacée dans l'espace, et
un trou d'un masque perforé (134) agencé en amont est associé à chaque récepteur (2), trou qui, en direction de mouvement de la surface de réception, est plus petit que le récepteur (2), en particulier plus petit que la surface de détection active (126) du récepteur (2), et
pour augmenter la résolution, une pluralité d'émetteurs (15) sont associés au récepteur (2), qui sont activés successivement en accord avec le mouvement de la surface de réception.

25. Procédé selon l'une des revendications 22 à 24,
**caractérisé en ce que**
en direction de mouvement de la surface de réception, les récepteurs (2) sont chacun plus grand d'un multiple entier que les trous du masque perforé (134) agencé en amont, et le nombre des émetteurs (15) associés respectivement aux récepteurs (2) est égal à ce multiple entier.

26. Procédé selon l'une des revendications précédentes,
**caractérisé en ce que**
plusieurs réseaux partiels d'émetteurs et/ou plusieurs réseaux partiels de récepteurs sont combinés au moyen d'au moins un masque perforé (134) de telle sorte que des lacunes (128, 133) existantes entre les émetteurs (15), en particulier entre les surfaces d'émission actives (131) des émetteurs (15), et/ou entre les récepteurs (2), en particulier entre les surfaces de détection actives (126) des récepteurs (2), sont comblées au moins partiellement.

27. Procédé selon l'une des revendications précédentes,
**caractérisé en ce que**
le rayonnement des émetteurs (15) du réseau d'émetteurs (130) est émis de telle sorte que dans l'angle solide d'émission total (130a) le rayonnement émis se situe sur au moins une, de préférence une seule ligne de réception.

28. Procédé selon l'une des revendications précédentes,
**caractérisé en ce que**
une surface de réception formée par les pixels de distance et en particulier en forme de ligne ou de ruban est déplacée dans l'espace, en particulier avec le dispositif par déplacement du dispositif dans son ensemble, monté en particulier sur un support mobile (65, 66, 70) par exemple sous la forme d'un véhicule ou d'un avion, et/ou par rapport au dispositif au moyen d'au moins une unité de déviation de rayonnement (50), en particulier au moyen d'un miroir de déviation mobile en basculement, en rotation ou en pivotement autour d'au moins un axe.

29. Procédé selon la revendication 28,
**caractérisé en ce que**
la surface de réception est mobile dans l'espace au moyen de deux unités de déviation de rayonnement (50) dont les axes de pivotement, de basculement ou de rotation s'étendent perpendiculairement les uns aux autres.

30. Procédé selon l'une des revendications 28 à 29,
**caractérisé en ce que**
la surface de réception est en forme de ligne ou de ruban et la surface de réception est déplacée en direction de son extension longitudinale (63) et/ou perpendiculairement (62) à celle-ci.

31. Procédé selon l'une des revendications précédentes,
**caractérisé en ce que**
des objets donnés sont recherchés dans les images de distance enregistrées au moyen d'un logiciel d'évaluation (reconnaissance d'objets) et les objets trouvés sont poursuivis en se basant sur des images de distance enregistrées successivement (suivi d'objets), et **en ce que** au moyen d'un logiciel de commande, une machine (70) est commandée en fonction des résultats de la reconnaissance d'objets et/ou du suivi d'objets.

32. Procédé selon l'une des revendications précédentes,
**caractérisé en ce que**
on utilise un moyen de mesure de temps ou un dispositif selon l'une des revendications suivantes.

33. Moyen de mesure de temps pour un dispositif destiné à enregistrer des images de distance ayant un grand nombre de pixels de distance,
qui comprend
- une pluralité d'émetteurs (15) agencés dans un réseau (130) pour émettre un rayonnement électromagnétique sous forme d'impulsions d'émission (14), et
- une pluralité de récepteurs (2) agencés dans un réseau (125) pour mettre en évidence des impulsions d'écho (1) réfléchies,
dans lequel
un amplificateur (3) pour générer un signal de réception (77) analogique contenant des impulsions d'écho (1) et des impulsions de bruit (76) et un moyen ayant au moins une référence (5) sont associés à chaque récepteur (2), moyen qui permet de générer une succession d'impulsions de réception (79) logiques à partir du signal de réception (77) analogique, qui sont dues chacune à une impulsion d'écho (1) ou à une impulsion de bruit (76) dépassant la référence (5), un dépassement de la référence (5) formant le flanc positif de l'impulsion de réception, qui définit un événement dit ascendant (81), et un passage au-dessous de la référence formant le flanc négatif de l'impulsion de réception, qui définit un élément dit descendant (82), et
- le moyen de mesure de temps est réalisé pour mesurer les distances d'objets formant chacune un pixel de distance, objets auxquels les impulsions d'émission (14) sont réfléchies, en déterminant le temps de parcours des impulsions, et
le moyen de mesure de temps est réalisé pour effectuer, pour chaque image de distance à enregistrer, une multitude de mesures individuelles associées dans lesquelles une chaîne d'impulsions (80) respective est traitée qui comprend une impulsion de démarrage (73) logique dérivée de l'impulsion d'émission respective (14) et au moins une impulsion de réception (79) logique,
le moyen de mesure de temps comprenant
- un moyen (20) pour former les chaînes d'impulsions (80), réalisé pour combiner à l'instant correct respectivement les impulsions de démarrage (73) et les impulsions de réception (79) associées,
- un réseau de canaux de mesure de temps réalisés chacun pour traiter des impulsions de démarrage (73) et des impulsions de réception (79),
- un moyen (21) réalisé pour répartir les chaînes d'impulsions (80) sur les canaux de mesure de temps,
- une horloge centrale (33) qui fournit des impulsions d'horloge à fréquence connue pour les canaux de mesure de temps,
- pour chaque canal de mesure un moyen qui est réalisé pour déterminer des laps de temps qui s'écoulent jusqu'à une impulsion de réception (79), et qui comprend au moins un compteur (23) qui compte pour chaque événement ascendant (81) et/ou pour chaque événement descendant (82) au moins les impulsions d'horloge respectives de l'horloge centrale (33), qui s'écoulent jusqu'à l'impulsion de réception correspondant (79) par rapport à l'impulsion de démarrage (73),
- un moyen permettant de mémoriser sous forme de liste d'événements les résultats de comptage dans une disposition qui prend en compte leur information temporelle respective, et
- un moyen pour lire et évaluer les listes d'événements mémorisées de tous les canaux de mesure de temps, qui est réalisé pour convertir par calcul les informations temporelles contenues dans les listes d'événements en valeurs de distance correspondants aux pixels de distance,
**caractérisé en ce que**
les moyens pour déterminer les laps de temps sont réalisés chacun pour compter les périodes entières écoulées des impulsions d'horloge et également pour déterminer la période partielle (85, 88) comptée en trop à l'instant de l'événement ascendant (81) et/ou comptée en trop à l'instant de l'événement descendant (82).

34. Moyen de mesure de temps selon la revendication 33,
**caractérisé en ce que**
chaque canal de mesure de temps est subdivisé en deux branches, l'une des branches étant réalisée pour traiter les événements ascendants (81) et l'autre branche étant réalisée pour traiter les événements descendants (82).

35. Moyen de mesure de temps selon la revendication 33 ou 34,
**caractérisé en ce que**
pour déterminer les périodes partielles (85, 88), les moyens comprennent chacun des organes pour former des impulsions de période partielle (84, 87), des organes pour retarder les impulsions de période partielle (84, 87) et des organes pour déterminer la largeur des impulsions de période partielle (84, 87).

36. Moyen de mesure de temps selon la revendication 35,
**caractérisé en ce que**
des séparateurs (22) sont prévus pour former les impulsions de période partielle (84, 87).

37. Moyen de mesure de temps selon l'une des revendications 33 à 36,
**caractérisé en ce que**
pour mesurer les impulsions de période partielle (84, 87), il est prévu des TDCs (Time-to-Digital-Converter), et/ou **en ce que** pour mesurer les impulsions de période partielle (84, 87), il est prévu des réseaux de retard (24) qui comprennent des éléments retardateurs en particulier sous la forme de plusieurs inverseurs ou inverseurs doubles connectés en série ayant un temps de retard donné, ainsi que des décodeurs (25) réalisés pour convertir en informations, en particulier codées binaires, des résultats de comptage qui indiquent le nombre respectif de temps de retard écoulés dans une période temporelle (85, 88).

38. Moyen de mesure de temps selon la revendication 37,
**caractérisé en ce que**
il est prévu des réseaux de verrouillage réalisés pour mémoriser temporairement les informations codées des décodeurs (25).

39. Moyen de mesure de temps selon l'une des revendications 33 à 38,
**caractérisé en ce que**
le moyen (21) réalisé pour répartir les chaînes d'impulsions (80), formées pour que image de distance à enregistrer, selon un déroulement de mesure prédéterminé, sur le réseau de canaux de mesure de temps, peut fonctionner dans au moins un, de préférence au choix dans chacun des modes de mesure suivants :
(i) les chaînes d'impulsions (80) à traiter peuvent être amenées successivement par groupes aux canaux de mesure de temps à l'aide d'un moyen, en particulier à l'aide un moyen multiplexeur ;
(ii) les impulsions d'une chaîne d'impulsions (80) peuvent être traitées en série et être réparties sur plusieurs canaux de mesure de temps, de sorte qu'au moins deux impulsions de la chaîne d'impulsions (80) peuvent être traitées dans différents canaux de mesure de temps ;
(iii) une chaîne d'impulsions (80) peut être traitée parallèlement dans plusieurs canaux de mesure de temps, et de préférence il est prévu un moyen permettant d'amener les impulsions d'horloge de l'horloge centrale (33) en déphasage aux canaux de mesure de temps ;
(iv) plusieurs mesures individuelles issues du même appariement émetteur-récepteur et donc concernant le même pixel de distance peuvent être traitées conjointement comme une mesure individuelle (mesure dite en rafale "burst").

40. Moyen de mesure de temps selon l'une des revendications 33 à 39,
**caractérisé en ce que**
le nombre de canaux de mesure de temps est inférieur au nombre de récepteurs (2).

41. Moyen de mesure de temps selon l'une des revendications 33 à 40,
**caractérisé en ce que**
il est prévu un moyen de commande de déroulement de mesure (17) qui est réalisé pour commander le cadre de la mesure de temps.

42. Moyen de mesure de temps selon l'une des revendications 33 à 41,
**caractérisé en ce que**
il est prévu un moyen de commande de mesure de temps (29) qui est réalisé pour commander la détermination des laps de temps dans les canaux de mesure de temps en fonction d'une commande de déroulement de mesure (17).

43. Moyen de mesure de temps selon l'une des revendications 33 à 42,
**caractérisé en ce que**
le moyen de mesure de temps comprend au moins un composant IC (32) dans lequel sont intégrés au moins plusieurs canaux de mesure de temps formant un réseau, en particulier
- des compteurs (23) pour compter les périodes entières des impulsions d'horloge, qui s'écoulent jusqu'à l'impulsion de réception (79) concernée,
- des séparateurs (22) pour former des impulsions de période partielle (84, 87),
- des réseaux de retardateurs (24) pour retarder les impulsions de période partielle (84, 87),
- des décodeurs (25) pour convertir en informations, en particulier codées binaires, le nombre de temps de retard écoulés dans une période partielle (85, 88),
- des réseaux de verrouillage pour mémoriser temporairement les informations codées des décodeurs (25),
- des zones de mémoire (26),
- une interface (27) associée aux zones de mémoire (26).

44. Moyen de mesure de temps selon la revendication 43,
**caractérisé en ce que**
en supplément aux canaux de mesure de temps, le moyen de formation des chaînes d'impulsions (80), le moyen de répartition des chaînes d'impulsions (80) et le moyen de commande de mesure de temps sont chacun intégrés au moins partiellement dans le composant IC (32).

45. Moyen de mesure de temps selon la revendication 43 ou 44,
**caractérisé en ce que**
un moyen de commande de déroulement de mesure (17), un moyen, en particulier un moyen multiplexeur, pour amener par groupes les chaînes d'impulsions (80) à traiter, l'horloge centrale (33) et/ou un système microprocesseur (28) pour lire et évaluer les listes d'événements mémorisées de tous les canaux de mesure de temps sont prévus séparément du composant IC (32).

46. Moyen de mesure de temps selon l'une des revendications 33 à 45,
**caractérisé en ce que**
le moyen de mesure de temps est réalisé pour moyenner plusieurs mesures individuelles issues du même appariement émetteur-récepteur et donc concernant le même pixel de distance.

47. Moyen de mesure de temps selon l'une des revendications 33 à 46,
**caractérisé en ce que**
le moyen de mesure de temps comprend un microprocesseur (28) qui est réalisé pour lire les listes d'événements mémorisées de tous les canaux de mesure de temps et pour convertir par calcul les informations temporelles, contenues dans les listes d'événement, en valeurs de distance correspondantes aux pixels de distance.

48. Moyen de mesure de temps selon la revendication 47,
**caractérisé en ce que**
le microprocesseur (28) est réalisé pour
- moyenner plusieurs mesures individuelles issues successivement du même appariement émetteur-récepteur et donc concernant le même pixel de distance, en utilisant au moins une mémoire à trame temporelle,
- intégrer, suite au calcul de la moyenne des mesures individuelles, le contenu de la mémoire à trame temporelle pour donner une fonction d'amplitude,
- appliquer un seuil de mise en évidence à la fonction d'amplitude, et
- déterminer dans la fonction d'amplitude, pour les impulsions d'écho (1), la distance d'objets associée en se basant sur au moins un instant auquel le seuil de mise en évidence est traversé.

49. Dispositif pour enregistrer des images de distance ayant un grand nombre de pixels de distance, comportant
une pluralité d'émetteurs (15) agencés dans un réseau (130) pour émettre un rayonnement électromagnétique sous la forme d'impulsions d'émission (14), et
une pluralité de récepteurs (2) agencés dans un réseau (125) pour mettre en évidence des impulsions d'écho (1) réfléchies,
dans lequel
un amplificateur (3) pour générer un signal de réception (77) analogique contenant des impulsions d'écho (1) et des impulsions de bruit (76) et un moyen ayant au moins une référence (5) sont associés à chaque récepteur (2), moyen qui permet de générer une succession d'impulsions de réception (79) logiques à partir du signal de réception (77) analogique, qui sont dues chacune à une impulsion d'écho (1) ou à une impulsion de bruit (76) dépassant la référence (5), un dépassement de la référence (5) formant le flanc positif de l'impulsion de réception, qui définit un événement dit ascendant (81), et un passage au-dessous de la référence formant le flanc négatif de l'impulsion de réception, qui définit un élément dit descendant (82), et un moyen de mesure de temps selon l'une des revendications 33 à 48, agencé en aval du réseau de récepteurs (125), pour mesurer les distances d'objets formant chacune un pixel de distance, objets auxquels les impulsions d'émission (14) sont réfléchies, en déterminant le temps de parcours des impulsions.

50. Dispositif selon la revendication 49,
**caractérisé en ce que**
les émetteurs (15) du réseau d'émetteurs (130) sont chacun réalisés et agencés de telle sorte que le rayonnement émis est projeté dans un angle solide d'émission individuel (131a), et les angles solides d'émission individuels (131a) se complètent pour donner un angle solide d'émission total (130a), et **en ce que**
les récepteurs (2) du réseau de récepteurs (125) sont chacun réalisés et agencés de telle sorte que le rayonnement réfléchi depuis un angle solide de réception individuel (126a) est reçu et que les angles solides de réception individuels (126a) se complètent pour donner un angle solide de réception total (125a), l'angle solide de réception total (125a) incluant l'angle solide d'émission total (130a), en présence de chevauchements discernables des angles solides de réception individuels (126a) et des angles solides d'émission individuels (131a), chaque chevauchement correspondant à un pixel de distance.

51. Dispositif selon la revendication 50,
**caractérisé en ce que**
dans l'angle solide d'émission total (130a), le rayonnement projeté des émetteurs (15) du réseau d'émetteurs (130) se situe sur au moins une, de préférence sur une seule ligne.

52. Dispositif selon l'une des revendications 49 à 51,
**caractérisé en ce que**
les émetteurs (15) du réseau d'émetteurs (130), en particulier les surfaces d'émissions actives (131) des émetteurs (15) formées de préférence par des diodes lasers (10) se situent sur au moins une, de préférence sur une seule ligne.

53. Dispositif selon l'une des revendications 49 à 52,
**caractérisé en ce que**
les récepteurs (2) du réseau de récepteurs (125), en particulier les surfaces de détection actives (126) des récepteurs (2) formées de préférence par des photodiodes se situent sur au moins une, de préférence sur une seule ligne.

54. Dispositif selon l'une des revendications 49 à 53,
**caractérisé en ce que**
le réseau d'émetteurs (130) et/ou le réseau de récepteurs (125) comprennent chacun une optique de projection (47, 48) qui représente les surfaces actives respectives (131, 126) dans le champ lointain.

55. Dispositif selon l'une des revendications 49 à 54,
**caractérisé en ce que**
un masque perforé (134) est agencé en amont du réseau de récepteurs (125), permettant d'isoler mutuellement les récepteurs (2), en particulier les surfaces de détection actives (126) des récepteurs (2).

56. Dispositif selon la revendication 55,
**caractérisé en ce que**
le masque perforé (134) est monté directement sur le réseau de récepteurs (125), en particulier sur un support pour les surfaces de détection actives (126) des récepteurs (2), ou bien il est agencé à distance du réseau de récepteurs (125).

57. Dispositif selon la revendication 55 ou 56,
**caractérisé en ce que**
le masque perforé (134) est agencé dans le plan de focalisation d'une optique de projection (47) des récepteurs (2).

58. Dispositif selon l'une des revendications 49 à 57,
**caractérisé en ce que**
le réseau d'émetteurs (130) et/ou le réseau de récepteurs (125) comprend plusieurs réseaux partiels, et pour combiner les réseaux partiels, il est prévu au moins un masque perforé (134) qui est réalisé et agencé de telle sorte que des lacunes (128, 133) existantes entre les émetteurs (15), en particulier entre les surfaces d'émission actives (131) des émetteurs (15), et/ou entre les récepteurs (2), en particulier entre les surfaces de détection actives (126) des récepteurs (2), sont comblées au moins partiellement.

59. Dispositif selon l'une des revendications 49 à 58,
**caractérisé en ce que**
pour déplacer la ligne d'enregistrement dans l'espace, il est prévu au moins une unité de déviation de rayonnement (50) mobile en pivotement, en basculement ou en rotation autour d'au moins un axe, et en particulier l'unité de déviation de rayonnement (50) comprend au moins un miroir de déviation (51), de préférence un miroir polygonal.

60. Dispositif selon la revendication 59,
**caractérisé en ce que**
il est prévu deux unités de déviation de rayonnement (50) mobiles en pivotement, en basculement ou en rotation dont les axes s'étendent perpendiculairement l'un à l'autre.

61. Dispositif selon l'une des revendications 49 à 60,
**caractérisé en ce que**
il peut fonctionner avec un procédé selon l'une des revendications 1 à 33.

62. Dispositif selon l'une des revendications 49 à 61,
**caractérisé en ce que**
les références (5) des moyens associés aux récepteurs (2) se situent dans le bruit, de sorte que les impulsions de réception (79) logiques sont dues à des impulsions d'écho (1) et à des impulsions de bruit (76), les moyens comprenant chacun au moins un comparateur (4) ou au moins un amplificateur limiteur (limiting amplifier).
